# EUROPÄISCHE PATENTSCHRIFT

(11) **EP 1 269 033 B1**
(45) Veröffentlichungstag und Bekanntmachung des Hinweises auf die Patenterteilung: **28.04.2004**
(21) Anmeldenummer: 01927700.3
(22) Anmeldetag: 23.02.2001
(51) Int. Cl.: F16B 37/06, B23P 19/06

(54) **FUNKTIONSELEMENTANORDNUNG, FUNKTIONSELEMENT, HILFSFÜGETEIL, ZUSAMMENBAUTEIL UND VERFAHREN ZUR HERSTELLUNG EINES ZUSAMMENBAUTEILS**
FUNCTIONAL ELEMENT ARRANGEMENT, FUNCTIONAL ELEMENT, AUXILIARY ASSEMBLY ELEMENT, ASSEMBLED COMPONENT AND METHOD FOR PRODUCING AN ASSEMBLED COMPONENT
ENSEMBLE ELEMENT FONCTIONNEL, ELEMENT FONCTIONNEL, ELEMENT D'ASSEMBLAGE AUXILIAIRE, PIECE ASSEMBLEE ET PROCEDES POUR OBTENIR UNE PIECE ASSEMBLEE

(30) Priorität: 27.03.2000 DE 10015239
(43) Veröffentlichungstag der Anmeldung: 02.01.2003
(73) Patentinhaber: Profil Verbindungstechnik GmbH & Co. KG, 61381 Friedrichsdorf (DE)
(72) Erfinder: MUELLER, Rudolf, 60437 Frankfurt/Main (DE); HUMPERT, Richard, 61191 Rosbach (DE)
(74) Vertreter: Manitz, Finsterwald & Partner GbR
(86) Internationale Anmeldenummer: PCT/EP2001/002093
(87) Internationale Veröffentlichungsnummer: WO 2001/073305

(56) Entgegenhaltungen:
- WO-A-94/01688
- DE-A- 10 033 149
- GB-A- 1 228 935
- US-A- 4 459 073
- US-A- 4 555 838

## Beschreibung

Die vorliegende Erfindung betrifft eine Funktionselementanordnung zur Anbringung an ein aus einem Materialverbund bestehendes Bauteil. Die Erfindung betrifft weiterhin ein Zusammenbauteil bestehend aus einer Kombination einer solchen Funktionselementanordnung und ein Bauteil sowie Elemente zur Anwendung in einer Funktionselementanordnung und ein Verfahren zur Anbringung eines Funktionselements an einem Bauteil. Unter der Bezeichnung "aus einem Materialverbund bestehendes Bauteil" wird im Sinne der vorliegenden Beschreibung ein sprödes oder nachgiebiges Bauteil, das aus einem Hohlräume oder Poren enthaltendem Werkstoff wie z.B. Kunststoffen, Holz, Metallschäumen, mit Hohlkörpern gefüllten Metallen oder Kunststoffen verstanden oder ein Bauteil, das aus einem anderen verhältnismäßig weichem Material besteht und wahlweise in einer Sandwichkonstruktion oder als Verbundmaterial bspw. in Form einer ein- oder mehrlagigen Struktur mit bspw. zwei Blech- oder Kunststofflagen und einem Kern aus einem der vorgenannten Werkstoffen bzw. Materialien vorliegt.

Funktionselemente, insbesondere in Form von Befestigungselementen wie Mutterelementen und Bolzenelementen, sind in den verschiedensten Ausführungsformen bekannt und werden von einer Reihe von Firmen, wie Profil Verbindungstechnik GmbH & CO. KG in Friedrichsdorf, Deutschland, oder Fabristeel Products, Inc. in Michigan, USA, hergestellt.

Die bekannten Funktionselemente sind im wesentlichen für die Anbringung an Blechteilen bei der industriellen Fertigung einer breiten Palette von Produkten, beispielsweise Kraftfahrzeugteilen oder Waschmaschinen, ausgelegt und werden entweder selbststanzend oder in vorgelochten Blechteilen mittels Pressen, Roboter oder tragbaren Werkzeugen, einge setzt und mit diesen vernietet. Hierdurch entsteht ein Zusammenbauteil bestehend aus einem oder mehreren an einem Blechteil angebrachten Funktionselement(en).

Beispielsweise kann es sich bei dem Funktionselement um ein Bolzenelement handeln, mit einem Kopfabschnitt und einem Schaftabschnitt, wobei das Bolzenelement im Bereich des Kopfabschnittes oder im Bereich des Überganges zwischen Kopf- und Schaftabschnitt mit dem Blechteil vernietet wird und der Schaftteil ein Gewinde trägt, das der Anbringung eines weiteren Bauteils an das aus dem Blechteil und dem Bolzenelement bestehenden Zusammenbauteil dient, wobei das weitere Bauteil am Zusammenbauteil mittels einer auf dem Gewinde des Bolzenelements aufgeschraubten Mutter festgehalten wird.

Alternativ hierzu kann es sich bei dem Funktionselement um ein Mutterlement handeln, das beispielsweise im Bereich einer seiner Stirnflächen oder im Bereich eines Flanschabschnittes mit dem Blechteil vernietet wird. Das entsprechende Element trägt dann ein Innengewinde, das der Aufnahme einer Schraube oder eines Bolzeris dient, mit der bzw. mit dem ein Bauteil an das Blechteil angeschraubt werden kann.

Die Bezeichnung "Funktionselement" (im Englischen "functional element") befaßt sich nicht nur mit Elementen, die ein Gewinde aufweisen, sondern auch mit Elementen, die anderen Funktionen dienen. Beispielsweise sind Funktionselemente bekannt, mit einem Kopf- und einem Schaftabschnitt, wobei der Schaftabschnitt als Führungszapfen dient oder eine kugelförmige Ausbildung an seinem freien Ende aufweist, die beispielsweise Teil eines Kugelgelenks sein kann. Auch sind ähnliche Funktionselemente bekannt, die eine Clip-Aufnahme tragen. Auch sind Funktionselemente bekannt, die in Form von Hohlelementen vorliegen und beispielsweise als Hohlführung oder zur Aufnahme von Einsteckteilen dienen. Die Bezeichnung "Funktionselement" (im Englischen "functional element") hat sich als Bezeichnung für Elemente eingebürgert, die einerseits an ein Blechteil befestigt sind und andererseits irgendetwas tragen, sei es ein Außengewinde, ein Innengewinde, ein Führungszapfen, ein Kugelkopf, eine Clip-Aufnahme oder Aufnahme für ein Einsteckteil, wobei diese Auflistung lediglich zur Erläuterung angegeben wird und nicht als beschränkende Definition zu verstehen ist.

Wie oben zum Ausdruck gebracht, sind die an sich bekannten Funktionselement hauptsächlich zur Anbringung an Blechteilen gedacht.

Es sind jedoch eine Reihe von Bauteilen bekannt, die nicht als reine Blechteile vorliegen, sondern auch mit Funktionselementen bestückt werden müssen, um eine Anbindung an andere Bauteile zu ermöglichen oder eine tragende oder führende Funktion auszuüben.

Es handelt sich bei solchen Bauteilen häufig um spröde oder nachgiebige Bauteile, die aus einem Hohlräume oder Poren enthaltendem Werkstoff bestehen und häufig als Materialverbundwerkstoff vorliegen. Als Beispiel können folgende Werkstoffe genannt werden, die zur Herstellung von Bauteilen, insbesondere spröden oder nachgiebigen Bauteilen, verwendet werden, die erfindungsgemäß mit Funktionselementen bestückt werden können:

### Metallschäume

Es handelt sich hier um hochporöse Metallwerkstoffe, deren Porengröße und -verteilung im Herstellungsprozeß definiert einstellbar sind und für eine breite Palette von möglichen Anwendungen interessant sind. Solche Metallschäume bieten unter anderem für eine Vielzahl von Bauteilen Material- und Gewichtseinsparungen und somit auch Kosteneinsparungen. Sie können Aufprallenergie durch progressive Verformung aufnehmen und sind daher beispielsweise für Energie absorbierende Teile verwendbar, beispielsweise für Konstruktionsteile von Fahrzeugen, die bei Unfällen Aufprallenergie zum Schutz der Insassen aufnehmen sollen. Darüber hinaus haben sie ausgezeichnete Dämpfungseigenschaften, so daß sie Schallwellen und mechanische Schwingungen gut absorbieren bzw. abschwächen können.

Bekannt sind u.a. Metallschäume aus Aluminium und Magnesium sowie Metallschäume aus Stahl. Verschiedene Herstellungsverfahren sind bekannt, die zur Erzeugung solcher Metallschäume verwendet werden können. Beispielsweise kann Metallpulver mit einer chemischen Verbindung vermischt werden, die später bei einer thermischen Behandlung das Aufschäumen des Metalls bewirkt. Am Schmelzpunkt des Metalls wird Gas freigesetzt, das zum Schäumen führt. Es ist auf diese Weise bereits gelungen, Aluminiumschäume zu erzeugen, die einen Gasanteil von bis zu 97 % aufweisen. Auch lassen sich Stahlschäume mit diesem Verfahren herstellen. Das Verfahren ist für ein breites Spektrum von Elementen und Legierungen anwendbar. Es besteht auch die Möglichkeit, Metallstrukturen aus Hohlkugeln, beispielsweise Stahlhohlkugeln, herzustellen.

Für die Herstellung von Magnesiumschäumen mit bis zu 60 % Gasanteil ist bekannt, dünnwandige keramische Hohlkugeln in einem gießtechnischen Prozeß in eine Magnesiummatrix einzubetten, wobei auch Magensium-Legierungen zur Anwendung kommen und frei wählbar sind.

Je nach Matrixlegierung können solche Wirkstoffe fester und spröder oder aber weicher und duktiler sein als die Ausgangslegierung.

Nach Herstellung der Schäume sind diese häufig mit einer Gußhaut versehen, die entweder entfernt oder mit einem Füllmaterial geglättet werden. Schäume mit einer Gußhaut, die ggf. mit einem Füllmaterial gefüllt ist, bilden eine Art von Sandwich-Struktur.

### Sandwich-Strukturen mit Metallschäumen

Zur Erzeugung von Materialverbundstoffen in Form einer Sandwich-Struktur mit einem Kern aus einem Metallschaum können die oben beschriebenen Metallschäume mit oder ohne Gußhaut erzeugt und mit oberen und/oder unteren Decklagen bzw. aus Blech oder Kunststoff versehen werden.

Durch die Aufbringung von Schichten oder -lagen auf dem Kern können Eigenschaften wie Kratzfestigkeit, niedrige oder hohe Reibung, Korrosionsbeständigkeit sowie günstige Verschleißeigenschaften erreicht werden. Die entsprechenden Bauteile bzw. etwaige vorhandene Decklagen können mit allen bekannten Beschichtungsverfahren beschichtet werden, d.h. mit galvanischen Beschichtungen, Lackbeschichtungen oder mittels PVD-Verfahren durchgeführte Beschichtungen u.a., versehen werden. Bei der Vorsehung von Blechlagen auf einem aus Schaumstoff bestehenden Kern können die Blechlagen auf dem Metallschaumkern aufgeklebt oder gebondet werden, wozu auch Löt- und Hartlötverfahren in Frage kommen. Für Decklagen aus Kunststoff werden üblicherweise Klebstoffe verwendet, um die Anbindung an den Kern zu erreichen.

Ein anderes Verfahren zur Erzeugung von Sandwich-Strukturen besteht darin, Hohlprofile aus Metall oder Kunststoff, beispielsweise in Form von mittels Strangpressen extrudierten Profilen vollständig oder bereichsweise mit einem Metallschaumkern zu versehen. Dies kann durch das Einführen von länglichen Streifen aus Metallschaum, ggf. mit einer Oberflächenverklebung des Metallschaums an das Profil oder durch das Aufschäumen von Metall-/SchaumstoSmischungen im Hohlprofil erfolgen. Auch können offene Profile oder geformte Blechteile mit einer Einlage aus Metallschaum (Einlage aus einer Lage Metallschaum oder aus mehreren Lagen Metallschaum) versehen werden und dann mit einem Abdeckstreifen oder -profil abgedeckt werden, der bzw. das im Randbereich mit dem offenen Profil durch Schweißen, Nieten, Kleben oder anderweitig befestigt wird. Anstelle von Metallschäumen können auch Kunststoffschäume oder andere Materialien in solchen Verbundstrukturen verwendet werden. Eine konkrete Verwendung solcher, mit Metallschaum oder mehreren Füllstoffen gefüllter Profile stellt die Anwendung als B-Säule eine Kraftfahrzeugs dar, die durch die Füllung eines vorgefertigten Profils, ggf. mit anschließender Formgebung durch Biegen oder Pressen hergestellt werden kann.

Durch die abschnittsweise Füllung solcher Profile können die gewünschten mechanischen Eigenschaften eingestellt werden. Beispielsweise kann in einem Bereich die gewünschte Steifigkeit bzw. Knickfestigkeit, und in einem anderen Bereich die gewünschte Verformung, beispielsweise im Falle eines Unfalls, erreicht werden.

### Andere Sandwich-Strukturen

Es kommen auch Materialverbundstoffe, die aus einem Kern mit einer Wabenstruktur und aus oberen und/oder unteren Decklagen bestehen, in Frage, wobei die Decklagen aus Blech oder aus Kunststoffplatten bestehen können. Die Wabenstruktur kann aus Metall, aus Metallfolien oder aus Karton oder Papier oder aus Kunststoff oder aus Zellulose oder Lignozellulose bestehen.

### Werkstoffe mit Sprödbruchcharakteristik

Solche Werkstoffe umfassen u.a. Gußteile aus z.B. Magnesium, Magnesiumlegierungen und Duroplaste mit und ohne Füllstoffe. Solche Werkstoffe können ebenfalls für Bauteile verwendet werden, die erfindungsgemäß mit Funktionselementanordnungen bestückt werden.

### Weitere Bauteilmaterialien bzw. -Konstruktionen

Auch Kunststoffbauteile, Bauteile aus Holze oder Spanplatten oder dergleichen kommen für die erfindungsgemäßen Zusammenbauteile in Frage, wobei solche Werkstoffe üblicherweise als nachgiebig anzusehen sind, da sie bei den Kräften, die bei der Herstellung einer Nietverbindung herrschen, üblicherweise deutlich nachgeben.

Auch sind besondere Materialverbundwerkstoffe denkbar, die aus einer Kombination von einem oder mehreren der oben genannten Werkstoffe bestehen, beispielsweise mehrlagigen Anordnungen, die aus mehreren, aneinander gebondeten Lagen bestehen, wodurch beispielsweise dickere Bauteile oder Bauteile mit komplexeren Formen aufgebaut werden können.

Obwohl die Erfindung vornehmlich zur Anwendung bei solchen, oben erwähnten, üblicherweise als nachgiebig verstandenen Bauteilen gedacht ist, kann sie auch ohne Einschränkung mit massiven Bauteilen verwendet werden, die als im wesentlichen nicht nachgiebig verstanden werden, beispielsweise dickere Metallplatten oder Bauteile aus spröden Materialien, bei denen man mit großen Auflageflächen arbeiten muß, um Rißbildung im Material zu vermeiden.

Aufgabe der vorliegenden Erfindung ist, eine Funktionselementanordnung zur Anbringung an ein Bauteil, insbesondere - jedoch nicht ausschließlich - zur Anbringung an ein nachgiebiges Bauteil vorzusehen, die einerseits unter Berücksichtigung der besonderen Eigenschaften des jeweiligen Bauteils wie Nachgiebigkeit, Sprödheit, Zähigkeit, Biegsamkeit, Festigkeit, Verformbarkeit es dennoch ermöglicht, ein Zusammenbauteil zu erzeugen, die eine Anbindung an andere Bauteile ermöglichen, ohne daß die aufgrund dieser Anbindung entstehenden Kräfte zu einer unerwünschten Verformung oder Beschädigung des erstgenannten Bauteils führen.

Weiterhin liegt der vorliegenden Erfindung die Aufgabe zugrunde, ein Verfahren zur Herstellung eines solchen Zusammenbauteils vorzusehen, das es ermöglicht, ein Funktionselement unter kontrollierbaren Bedingungen an ein Bauteil so anzubringen, daß das Zusammenbauteil eine Anbindung an ein weiteres Bauteil unter Anwendung des Funktionselements ermöglicht, ohne daß die aufgrund der Anbindung entstehenden Kräfte zu einer Verformung oder Beschädigung des erstgenannten Bauteils bzw. des Zusammenbauteils führt.

Eine weitere Aufgabe der vorliegenden Erfindung ist es, ein Element zur Anbringung an ein Bauteil, insbesondere - jedoch nicht ausschließlich - zur Anbringung an ein nachgiebiges Bauteil vorzusehen, bei dem die Ausbildung des Elements sowie die Art der Anbringung des Elements am Bauteil eine korrosionsgeschützte Verbindung zwischen dem Element und dem Bauteil sicherstellt.

Zur Lösung dieser Aufgaben wird erfindungsgemäß ein Funktionselement der eingangs genannten Art vorgesehen, der sich dadurch auszeichnet, daß ein Hilfsfügeteil vorgesehen ist, daß das Funktionselement beim Anbringen an das Bauteil mittels eines Nietverfahrens oder eines Stanz- und Nietverfahrens mit dem Hilfsfügeteil umformtechnisch verriegelbar ist und daß vorzugsweise mindestens eine Einrichtung vorgesehen ist, um eine Verdrehsicherung zwischen dem Funktionselement und dem Bauteil und/ oder zwischen dem Hilfsfügeteil und dem Bauteil zu erzeugen.

Das Bauteil wird üblicherweise vorgelocht, beispielsweise durch einen Bohrvorgang oder durch einen Stanzvorgang. Selbst wenn das mit der vorliegenden Erfindung zur Anwendung gelangende Funktionselement selbststanzend ausgebildet ist, wird das Funktionselement normalerweise nicht dazu benutzt, das Bauteil zu lochen, sondern das Hilfsfügeteil, wobei es nicht ausgeschlossen ist, daß ein selbststanzendes Funktionselement auch zur Lochung des Bauteils verwendet werden könnte. Auch können die erfindungsgemäß zu bestückenden Bauteile durch Urformen vorgelocht werden, d.h. das Loch wird bei der Urherstellung des Bauteils ausgebildet, beispielsweise beim Gießen des Bauteils oder während eines Druckgußverfahrens oder Einspritzverfahrens in das Bauteil eingebracht.

Der Begriff Bauteil umfaßt auch ein zusammegesetztes Bauteil bestehend aus zumindest zwei aneinandergelegten Bauteilen. Es ist nämlich ein Vorteil der Funktionselementanordnung der vorliegenden Erfindung, daß es im Prinzip keine Beschränkung auf die Dicke des jeweiligen Bauteils gibt, so daß zwei, drei oder mehr einzelne Bauteile mit der Funktionselementanordnung gemäß der Erfindung zu einem zusammengesetzten Bauteil verbunden werden können, an dem dann ein weiteres Bauteil (oder weitere Bauteile) unter Anwendung des Funktionselements angebracht werden können. Wird das Funktionselement beispielsweise als ein Bolzenelement ausgebildet, so kann das weitere Bauteil (oder die weiteren Bauteile) an das Zusammenhauteil durch eine Mutter befestigt werden, die auf das Bolzenelement aufgeschraubt werden soll. Bei Ausbildung des Funktionelements als Mutter kann eine Schraube verwendet werden, um ein weiteres Bauteil (oder weitere Bauteile) am erstgenannten Bauteil zu befestigen. Das Funktionselement könnte schließlich auch als ein Hohlniet ausgebildet werden, so daß ein weiteres Bauteil (weitere Bauteile) über eine Nietverbindung am erstgenannten Bauteil befestigt werden können.

Besonders bevorzugt ist es, wenn sowohl das Funktionselement als auch das Hilfsfügeteil bei der Durchführung des Nietverfahrens zur Bildung der Verriegelung verformbar sind. Erfahrungsgemäß führt eine solche Anordnung zu einer besonders festen und auch verdrehsicheren Verbindung zwischen dem Funktionselement und dem Hilfsfügeteil.

Besonders günstig ist, wenn das Funktionselement und das Hilfsfügeteil von entgegengesetzten Seiten des Bauteils kommend miteinander und mit dem Bauteil verfügbar sind. Dies erleichtert einerseits die automatische Zuführung des Funktionselements und des Hilfsfügeteils in das für die Anbringung vorgesehene Werkzeug und stellt zudem eine günstige Ausrichtung der beiden Teile miteinander sicher.

Besonders günstig ist, wenn das Funktionselement und das Hilfsfügeteil je einen, eine Auflagefläche bildenden Flansch aufweisen, an dem das Bauteil zur Anlage kommt, d.h., zwischen dem das Bauteil eingefangen bzw. geklemmt ist. Eine solche Anordnung stellt eine besonders prozeßsichere Möglichkeit dar, die Funktionselementanordnung und das Hilfsfügeteil miteinander und mit dem Bauteil zu verbinden. Da das Bauteil zwischen den zwei Flanschen angeordnet wird und der Abstand zwischen den zwei Flanschen durch die Ausbildung des Funktionselements und des Hilfsfügeteils genau vorgegeben werden kann, erfolgt eine etwaige Kompression oder Verformung des Bauteils in genau kontrollierter Weise, so daß bei der Serienherstellung das gewünschte Ergebnis, vornehmlich die Eigenschaften des Zusammenbauteils, Stück für Stück sicher erreicht werden kann.

Es ist allerdings nicht zwingend erforderlich, daß beide Teile, d.h. Funktionselement und Hilfsfügeteil, einen Flansch haben. Es genügt bei manchen Funktionselementen vielmehr, wenn nur das Hilfsfügeteil einen eine Auflagefläche bildenden Flansch aufweist, an der das Bauteil zur Anlage kommt. Bei einer solchen Ausbildung wird das weitere Bauteil dann auf der dem Flansch des Hilfsfügeteils abgewandten Seite des erstgenannten Bauteils angebracht.

Die verwendbaren Funktionselemente können in verschiedene Kategorien unterteilt werden. Beispielsweise gibt es Funktionselemente, die in an sich bekannter Weise mit einem Kopfabschnitt und einem Schaftabschnitt versehen sind, wobei das Funktionselement im Bereich des Kopfabschnitts oder im Bereich des Übergangs vom Kopfabschnitt zum Schaftabschnitt ein Nietabschnitt für die Nietverbindung mit dem Hilfsfügeteil aufweist. Der Schaftabschnitt kann dann als Gewindeträger, als Führungsteil oder als Clip-Aufnahme ausgebildet werden.

Alternativ hierzu kann das Funktionselement als Hohlkörperelement, beispielsweise als Mutterelement, als Führungsbuchse oder als Aufnahme für ein Einsteckteil ausgebildet werden.

Wenn das Funktionselement mit einem Kopfabschnitt und einem Schaftabschnitt versehen ist, kann es in einer Ausführungsform ähnlich wie bei einem SBF-Bolzen der Firma Profil Verbindungstechnik GmbH & Co. KG so ausgebildet werden, daß der Kopfabschnitt im Bereich des Übergangs zum Schaftabschnitt einen Flansch aufweist, dessen dem Schaftabschnitt abgewandte Fläche eine Auflagefläche bildet, an der das Bauteil zur Anlage kommt, wobei der Kopfabschnitt auf dem dem Schaftabschnitt abgewandten Ende einen Nietabschnitt zur Vernietung mit dem Hilfsfügeteil aufweist.

Besonders günstig ist, wenn der Kopfabschnitt zwischen dem Flansch und dem Nietabschnitt einen Zwischenabsatz aufweist. Der Zwischenabsatz dient dann der Zentrierung des Funktionselements innerhalb des Bauteils und bildet zudem eine Art Abstandsstück zwischen dem Flansch und dem Hilfsfügeteil, das den mechanischen Eigenschaften des Zusammenbauteils zugute kommt.

Bei einer derartigen Ausbildung können Verdrehsicherungsmerkmale im Bereich der Auflagefläche des Flansches und/oder im Bereich des Übergangs zum Zwischenabsatz und/oder am Zwischenabsatz vorgesehen werden. Hierdurch wird die erforderliche Verdrehsicherung gegenüber dem Bauteil erzeugt. Die Nietverbindung zwischen dem Nietabschnitt und dem Hilfsfügeteil dient dann primär der Aufgabe der axialen, festen Anbringung des Funktionselements am Bauteil.

Wenn der Zwischenabsatz an einer Ringschulter in den Nietabschnitt übergeht, können Verdrehsicherungsmerkmale auch im Bereich zwischen dem Zwischenabsatz und dem Nietabschnitt vorgesehen werden, beispielsweise an der Ringschulter und/oder im Bereich des Übergangs der Ringschulter in den Nietabschnitt und/oder am Nietabschnitt selbst.

Bei einer anderen Ausbildung des Funktionselements, beispielsweise ähnlich einem EBF-Bolzen der Firma Profil Verbindungstechnik GmbH & Co. KG, weist der Kopfabschnitt im Bereich seines freien, dem Schaftabschnitt abgewandten Endes einen eine Auflagefläche bildenden Flansch auf, an dem das Bauteil zur Anlage kommt und ist im Bereich des Übergangs vom Kopfabschnitt in den Schaftabschnitt zur Vernietung mit dem Hilfsfügeteil ausgebildet, d.h. dort mit einem Anformabschnitt versehen.

Eine derartige Ausbildung bedeutet, daß in einem EBF-Bolzen ein Zwischenabsatz zwischen dem Flansch (der bisherige Kopfabschnitt des EBF-Bolzens) und dem sich im Bereich des Übergangs in den Schaftabschnitt befindlichen Nietabschnitt bzw. Anformabschnitt eingefügt wurde. Dieser Zwischenabsatz, der zur Gewichstersparnis hohl ausgebildet werden kann, bietet einerseits die gleichen Vorteile wie der oben beschriebene Zwischenabsatz, und führt auch zur Möglichkeit, die Verdrehsicherung der Funktionselementanordnung zu verbessern. Es können nämlich Verdrehsicherungsmerkmale im Bereich der Auflagefläche des Flansches und/oder im Bereich des Übergangs vom Flansch in den Zwischenabsatz und/oder am Zwischenabsatz vorgesehen werden, so daß hier eine verdrehsichere Befestigung am Bauteil erfolgt. Da der Zwischenabsatz über eine Ringschulter in das Schaftteil übergeht, können alternativ oder zusätzlich zu den bereits angesprochenen Verdrehsicherungsmerkmalen Verdrehsicherungsmerkmale im Bereich dieser Ringschulter vorgesehen werden, beispielsweise an der Ringschulter und/oder im Bereich des Übergangs der Ringschulter in den Nietabschnitt bzw. Anformabschnitt und/oder am Nietabschnitt bzw. Anformabschnitt selbst

Hierdurch wird das Hilfsfügeteil verdrehsicher am Funktionselement befestigt, so daß bei einer Verdrehsicherungsanordnung des Hilfsfügeteils am Bauteil, beispielsweise durch die Verwendung eines entsprechenden Klebstoffes, eine weiter Erhöhung der Verdrehsicherheit erreichbar ist.

Wenn das Funktionselement als Hohlkörperelement ausgebildet ist, kann dieses einen Kopfabschnitt und einen Nietabschnitt bzw. Einformabschnitt aufweisen, wobei der Kopfabschnitt vorzugsweise in einen Flansch und einen Zwischenabsatz unterteilt ist, wobei der Flansch eine Auflagefläche bildet, an der das Bauteil zur Anlage kommt und im Bereich des dem Nietabschnitt abgewandten Endes des Zwischenabsatzes angeordnet ist. Auch bei dieser Anordnung bietet der Zwischenabsatz die oben erwähnten Vorteile.

Weiterhin können Verdrehsicherungsmerkmale im Bereich der Auflagefläche und/oder am Übergang von der Auflagefläche in den Zwischenabsatz und/oder am Zwischenabsatz vorgesehen werden. Auch bei dieser Ausbildung werden somit Verdrehsicherungsmerkmale am oder im Bereich der Auflagefläche des Flansches vorgesehen und können somit auf besonders sichere Weise mit einer oberen Decklage des Bauteils zur Sicherstellung der erforderlichen Verdrehsicherung zusammenarbeiten. Da die obere Decklage üblicherweise eine höhere Festigkeit als der Hohlräume enthaltende Kern aufweist, wird hierdurch, wie bei den bisher erörterten, ähnlichen Beispielen, eine qualitativ hochwertige Verdrehsicherheit erreicht.

Auch bei dieser Anordnung kann der Zwischenabsatz über eine Ringschulter in den Nietabschnitt übergehen, wobei Verdrehsicherungsmerkmale dabei mit Vorteil an der Ringschulter oder am Übergang zum Nietabschnitt und/oder am Nietabschnitt vorgesehen werden können.

Obwohl das Vorsehen eines Flansches am Funktionselement bei manchen Anwendungen vorteilhaft ist, ist es nicht zwingend erforderlich. Beispielsweise kann das Hohlkörperelement einen Kopfabschnitt und einen Nietabschnitt bzw. Einformabschnitt aufweisen, wobei der Kopfabschnitt eine Mantelfläche ohne Flansch aufweist und über eine Auflagefläche in den Nietabschnitt bzw. Einformabschnitt übergeht, an der sich im eingebauten Zustand das Hilfsfügeteil in Anlage befindet, wobei das Hilfsfügeteil eine Auflagefläche aufweisen soll, an der das Bauteil zur Anlage kommt.

Eine Funktionselementanordnung dieser Art ermöglicht es, verschiedene bekannte Hohlkörperelemente in der jetzt vorliegenden Form, d.h. ohne weitere Modifikationen, zur Lösung der erfindungsgemäßen Aufgabe zu verwenden. Beispielsweise können die sogenannten RSU-Elemente der Firma Profil Verbindungstechnik GmbH & Co. KG hier zur Anwendung gelangen. Bei einer solchen Anordnung werden Verdrehsicherungsmerkmale im Bereich des Nietabschnittes bzw. Einformabschnittes d.h. zwischen dem Funktionselement und dem Hilfsfügeteil, vorgesehen. Es müssen dann weitere Maßnahmen ergriffen werden, um eine Verdrehsicherung gegenüber dem Bauteil sicherzustellen. Dies kann beispielsweise dadurch erreicht werden, daß ein Klebstoff zur Anwendung gelangt. Eine andere Möglichkeit besteht darin, Verdrehsicherungsmerkmale an der Mantelfläche des Kopfabschnittes des Funktionselements vorzusehen, beispielsweise in Form von sich in axialer Richtung des Elementes erstrekkenden Rippen oder dadurch, daß die Mantelfläche polygonartig ausgebildet ist oder eine genutete bzw. gerippte Form aufweist.

Das Hilfsfügeteil wird in vielen Fällen als Blechteil realisiert. Dies stellt eine preisgünstige Möglichkeit dar, das Hilfsfügeteil herzustellen und eine hochfeste Verbindung zum Funktionselement bzw. eine hochfeste Verbindung der Funktionselementanordnung am Bauteil zu realisieren.

Das Blechteil kann mit einer metallischen Beschichtung und/oder mit einer Kunststoffbeschichtung versehen werden, wobei die Beschichtung vorzugsweise aus einem gegenüber dem Werkstoff oder den Werkstoffen des Bauteils und gegenüber dem Werkstoff des Funktionselements bzw. seiner Beschichtung korrosionsbeständigem Material bestehen soll. Weiterhin soll der Werkstoff des Funktionselements oder einer etwaigen Oberflächenbeschichtung des Funktionselements gegenüber dem Werkstoff oder den Werkstoffen des Bauteils korrosionsbeständig sein.

Alternativ zur Anwendung eines Blechteils für das Hilfsfügeteil kann dieses auch ein Kunststoffteil sein, vorzugsweise in Form eines faserverstärkten Kunststoffteils. Dieses Teil kann auch ggf. mit einer metallischen Beschichtung versehen werden (beispielsweise für dekorative Zwecke oder zur Sicherstellung der elektrischen Leitung), wobei diese Beschichtung dann aus einem Material bestehen soll, das zu keinen Korrosionserscheinungen gegenüber dem Werkstoff oder den Werkstoffen des Bauteils und/oder des Funktionselements führt.

Das heißt, daß hier, wie auch oben, weder das Hilfsfügeteil noch das Bauteil noch das Funktionselement korrodieren sollen.

Das Hilfsfügeteil ist vorzugsweise als tellerartiges Teil ausgebildet, dessen Randbereich einen Flansch mit einer Auflagefläche bildet, an der das Bauteil zur Anlage kommt und dessen Vertiefung in eine Ringvertiefung oder abgesetzte Bohrung des Bauteils anzuordnen ist, wobei das Funktionselement mit dem Boden der Vertiefung vernietbar sein soll.

Besonders günstig bei dieser Ausführungsform des Hilfsfügeteils ist, daß man hierdurch eine Anpassung an verschiedene Bauteildicken erreichen kann, ohne das Funktionselement ändern zu müssen. Statt dessen wird lediglich die Bauhöhe des Hilfsfügeteils je nach verwendetem Bauteil diesem angepaßt. Da solche Hilfsfügeteile preisgünstig und kurzfristig herzustellen sind, beispielsweise als Massenprodukt in einem Preßwerk, ist es wesentlich leichter, das Hilfsfügeteil zu ändern, als das Funktionselement, der üblicherweise besondere Kaltschlagwerkzeuge zu seiner Herstellung erfordert.

Anstatt ein tellerartiges Hilfsfügeteil zu verwenden, kann dieses als flache Scheibe ausgebildet werden, dessen Randbereich eine Auflagefläche bildet, an der das Bauteil zur Anlage kommt, wobei das Funktionselement mit dem mittleren Bereich der Scheibe vernietbar ist. Solche Scheiben ermöglichen auch eine Anpassung an Bauteile verschiedener Dicke, und zwar dadurch, daß sie in eine abgesetzte Bohrung des Bauteils eingesetzt werden können und an einer durch die abgesetzte Bohrung gebildete Ringschulter zur Anlage kommen. Durch die Änderung der Position der Ringschulter innerhalb des jeweiligen Bauteils kann die jeweilige Anpassung an verschiedene Bauteile vorgenommen werden, ohne daß die Ausbildung des Funktionselements geändert werden muß.

Egal, ob das Hilfsfügeteil als tellerartiges Teil oder als Scheibe realisiert wird, kann der Boden der Vertiefung oder der mittlere Bereich der Scheibe zur Aufnahme eines Nietabschnittes des Funktionselements vorgelocht sein. Eine solche Vorlochung vereinfacht unter Umständen die Anbringung des Funktionselements und erleichtert auch die gegenseitige Zentrierung des Funktionselements und des Hilfsfügeteils. Alternativ hierzu sind der Boden der Vertiefung oder der mittlere Bereich der Scheibe nicht vorgelocht, sondern werden erst bei Anbringung des Funktionselements durch einen Stanz- und Nietabschnitt des Funktionselements oder durch einen vorlaufenden Lochstempel gelocht.

Diese Ausführungsform ermöglicht die erfindungsgemäße Verwendung an sich bekannter oder hiervon abgeleiteter Funktionselemente, die mit einem Stanz- und Nietabschnitt versehen sind oder mit einem vorlaufenden Lochstempel verwendet werden.

Wie bereits erwähnt kann/können das Funktionselement und/oder das Hilfsfügeteil an mindestens einem Oberflächenbereich, der bei Anbringung an das Bauteil mit diesem und/oder mit dem jeweils anderen Teil (Hilfsfügeteil bzw. Funktionselement) in Berührung gelangt, mit einem Klebstoff versehen werden. Dieser Klebstoff, der vorzugsweise ein Trokkenklebstoff ist, der bei Druckausübung für eine Klebverbindung zwischen dem Bauteil und dem Funktionselement und/oder zwischen dem Bauteil und dem Hilfsfügeteil und/oder zwischen dem Funktionselement und dem Hilfsfügeteil sorgt, kann einerseits für eine Abdichtung der Funktionselementanordnung gegenüber dem Bauteil sorgen, kann aber andererseits auch die Einrichtung oder eine der Einrichtungen zur Erzeugung einer Verdrehsicherung bilden.

Weitere Ausbildungen der Einrichtung zur Erzeugung der Verdrehsicherung können den Ansprüchen 39 und 40 entnommen werden.

Selbst wenn viele der an sich bekannten Funktionselemente ggf. mit einer entsprechenden Abwandlung sich für die Anwendung mit einem Hilfsfügeteil für die Anbringung an einem Bauteil eignen, wobei ggf. verschiedene Modifikationen durchzuführen sind, wie beispielsweise das Einführen eines Zwischenabsatzes und die Aufteilung der Verdrehsicherungsfunktion und der Nietfunktion zwischen unterschiedlichen Bereichen des Funktionselements, so können auch neuartige Funktionselemente und/oder Hilfsfügeteile zur Lösung der vorliegenden Aufgaben konzipiert werden. Beispielsweise kann als Hilfsfügeteil ein tellerartiges Teil verwendet werden, dessen Rand eine Auflagefläche bildet, an der das Bauteil zur Anlage kommt, wobei dieser Rand zunächst konusförmig ausgebildet ist und in Richtung der Vertiefung des tellerartigen Teils divergiert, wobei die Vertiefung des tellerartigen Teils zur Aufnahme eines Nietabschnittes des Funktionselements ausgebildet ist, der von der Seite des Randes in die Vertiefung aufnehmbar ist und die Nietverbindung unter Flachpressung des Randes des tellerartigen Teils zustandebringbar ist. Hierzu weist der Nietabschnitt des Funktionselements vorzugsweise eine leicht divergierende Form im Bereich seines freien Endes auf. Besonders günstig ist bei dieser Ausführungsform, wenn der Rand des tellerartigen Teils an mehreren Stellen unterbrochen ist, da dies die Flachpressung bzw. Umlegung des Randbereiches erleichtert.

In einer weiteren, alternativen Ausführungsform kann das Hilfsfügeteil die Form eines Rohrabschnittes mit Flansch aufweisen, wobei das verwendete Funktionselement durch ein neues Element in Form eines Hohlkörperelements ausgebildet ist, in den Rohrabschnitt paßt und in einem Endbereich schräge Nasen aufweist, die sich ausgehend vom zugeordneten Ende des Hohlkörperelements entlang einer Teillänge des Hohkörpers in Richtung dessen anderes Ende erstrecken und dabei in ihrer radialen Erstrekkung abnehmen, wobei diese Nasen bei Einführung in den Rohrabschnitt diesen in einem Endbereich und auch dem Bauteil entsprechend verformen und das Hohlkörperelement an seinem anderen Ende zur Verriegelung mit dem Hilfsfügeteil aufweitbar ist.

Weiterhin befaßt sich die vorliegende Erfindung mit jeweiligen Funktionelementen zur Anwendung in den hier angegebenen Funktionselementanordnungen und mit jeweiligen Hilfsfügeteilen, die sich ebenfalls zur Anwendung in den hier beschriebenen Funktionselementanordnungen eignen.

Darüber hinaus befaßt sich die vorliegende Erfindung mit Zusammenbauteilen nach Anspruch 46.

Schließlich befaßt sich die vorliegende Erfindung mit einem Verfahren zur Anbringung eines Funktionselements auf ein Bauteil nach einem der weiteren Ansprüche 47 bis 56.

Die Erfindung wird nachfolgend näher erläutert anhand einer Reihe von Ausführungsbeispielen unter Bezugnahme auf die Zeichnungen, die zeigen:
- Fig. 1: eine erfindungsgemäße Funktionselementanordnung bestehend aus einem Funktionselement in Form eines leicht abgewandelten Bolzenelementes vom Typ SBF der Firma Profil Verbindungstechnik GmbH & Co. KG zusammen mit einem erfindungsgemäßen Hilfsfügeteil bei der Anbringung an ein Sandwich-artiges Bauteil, wobei die einzelnen Figuren 1A-1E verschiedene Stadien des Anbringungsverfahrens zeigen,
- Fig. 2: eine Darstellung einer weiter abgewandelten Ausführung eines Bolzenelementes nach Art des oben erwähnten SBF-Bolzens zur Anbringung an ein sandwichartiges Bauteil, wobei die Fig. 2A bis 2G folgendes zeigen:
- Fig. 2A: das Bolzenelement teilweise in Längsrichtung geschnitten,
- Fig. 2B: einen axialen Schnitt durch das erfindungsgemäße Hilfsfügeteil zur Anwendung mit dem Bolzenelement gemäß Fig. 2A,
- Fig. 2C: eine Draufsicht auf das Hilfsfügeteil der Fig. 2B,
- Fig. 2D: das Anfangsstadium der Anbringung des Funktionselements und Hilfsfügeteils an dem Bauteil,
- Fig. 2E: das Endstadium der Anbringung des Bolzenelementes des Hilfsfügeteils am Bauteil,
- Fig. 2F: das fertiggestellte Zusammenbauteil, und
- Fig. 2G: das Zusammenbauteil gemäß Fig. 2F mit einem weiteren, daran geschraubten Bauteil,
- Fig. 3: eine Darstellung eines Funktionselements in Form einer abgewandelten Ausführung eines Mutterelementes nach Art des RSF-Elements der Firma Profil Verbindungstechnik GmbH & Co. KG zur Anbringung an ein sandwichartiges Bauteil, wobei die Fig. 3A bis 3G folgendes zeigen:
- Fig. 3A: das Mutterelement teilweise in Längsrichtung geschnitten,
- Fig. 3B: einen axialen Schnitt durch das erfindungsgemäße Hilfsfügeteil zur Anwendung mit dem Mutterelement gemäß Fig. 3A,
- Fig. 3C: eine Draufsicht auf das Hilfsfügeteil der Fig. 3B,
- Fig. 3D: das Anfangsstadium der Anbringung des Funktionselements und Hilfsfügeteils an dem Bauteil,
- Fig. 3E: das Endstadium der Anbringung des Mutterelementes des Hilfsfügeteils am Bauteil,
- Fig. 3F: das fertiggestellte Zusammenbauteil, und
- Fig. 3G: das Zusammenbauteil gemäß Fig. 3F mit einem weiteren, daran geschraubten Bauteil,
- Fig. 4A: eine Skizze zur Darstellung der Anbringung eines erfindungsgemäßen Funktionselements in Form eines abgewandelten EBF-Bolzenelementes der Firma Profil Verbindungstechnik GmbH & Co. KG mit einem erfindungsgemäß ausgebildeten Hilfsfügeteil mit der Funktionselementanordnung teilweise in Längsrichtung geschnitten,
- Fig. 4B: das zur Anwendung mit dem Bolzenelement der Fig. 4A erfindungsgemäß vorgesehene Hilfsfügeteil teilweise in Längsrichtung geschnitten und in Alleinstellung,
- Fig. 4C: eine Skizze ähnlich der Fig. 4A nach der Schließung der zur Anbringung des Funktionselementes verwendeten Presse, und
- Fig. 4D: das fertige Zusammenbauteil gemäß Fig. 4C nach der Entfernung aus der Presse,
- Fig. 5: eine erfindungsgemäße Funktionselementanordnung bestehend aus einem Mutterelement ausgebildet entsprechend dem RSU-Element der Firma Profil Verbindungstechnik GmbH & Co. KG und einem erfindungsgemäßen Hilfsfügeteil bei der Anbringung an ein sandwichartiges Bauteil, wobei die Fig. 5A bis 5E verschiedene Phasen der Anbringung am plattenförmigen Bauteil darstellen,
- Fig. 6: eine Reihenfolge von Zeichnungen entsprechend den Fig. 5A bis 5E, jedoch mit einer abgewandelten Ausführungsform eines erfindungsgemäßen Mutterelementes,
- Fig. 7: eine Reihe von Zeichnungen ähnlich der Fig. 5A bis 5E zur Darstellung der Anbringung eines weiteren, erfindungsgemäßen Funktionselements in Form eines abgewandelten RSU-Mutterelementes, wobei die Fig. 7A, 7C bis 7F die gleichen Stadien des Anbringungsverfahrens zeigen wie die Fig. 5A bis 5E, und die Fig. 7B eine Stirnansicht des Mutterelements der Fig. 7A zeigt,
- Fig. 8: eine Reihenfolge von Zeichnungen entsprechend den Fig. 5A bis 5E, jedoch zur Darstellung der Anwendung eines erfindungsgemäßen Funktionselements in Form eines Mutterelements ähnlich dem RND-Element der Firma Profil Verbindungstechnik GmbH & Co. KG,
- Fig. 9: eine Reihenfolge von Zeichnungen ähnlich der Zeichnungsreihe der Fig. 7A bis 7F, jedoch zur Darstellung der Anwendung eines Funktionselements in Form einer Abwandlung des RND-Elements,
- Fig. 10: eine Reihe von Zeichnungen einer erfindungsgemäßen Funktionselementanordnung mit einem Mutterelement entsprechend dem RSU-Element der Firma Profil Verbindungstechnik GmbH & Co. KG, jedoch mit einem erfindungsgemäßen Hilfsfügeteil mit der Besonderheit, daß das Mutterelement und das Hilfsfügeteil gemeinsam von einer Seite des Bauteils in dieses eingebracht wird, wobei die Fig. 10A bis 10E verschiedene Stadien des Anbringungsverfahrens zeigen,
- Fig. 11: eine weitere, erfindungsgemäße Funktionselementanordnung mit einem neuen Mutterelement und einem gegenüber den bisherigen Beispielen deutlich anders ausgelegten erfindungsgemäßen Hilfsfügeteil, wobei gemäß Fig. 11A das Mutterelement und das Hilfsfügeteil auch hier von der gleichen Seite des Bauteils in dieses hineingebracht werden und die einzelnen Zeichnungen der Fig. 11C bis 11F verschiedene Stadien des Anbringungsverfahrens zeigen, während Fig. 11B eine Stirnansicht auf das erfindungsgemäße Mutterelement zeigt,
- Fig. 12A: eine weitere, erfindungsgemäße Funktionselementanordnung bestehend aus einem SBF-ähnlichen Element als Funktionselement und einer flachen Scheibe als Hilfsfügeteil, wobei die für die Anbringung der Funktionselementanordnung an das Bauteil verwendete Matrizenanordnung in einer teilweise in axialer Richtung geschnittenen Darstellung gezeigt wird und
- Fig. 12B: das Zusammenbauteil nach Durchführung des Nietverfahrens darstellt,
- Fig. 13A: eine Darstellung ähnlich der Fig. 12A, bei der jedoch die flache Scheibe in einer abgesetzten Bohrung des Bauteils angeordnet ist und das verwendete Funktionselement eine starke Ähnlichkeit zu einem SBF-Bolzen aufweist, wobei auch hier die verwendete Matrize bei der Anbringung der Funktionselementanordnung in einer in Längsrichtung geschnittenen Ansicht gezeigt wird und
- Fig. 13B: das fertiggestellte Zusammenbauteil darstellt, und
- Fig. 14A: eine Zeichnung ähnlich der Fig. 13A, jedoch unter Anwendung eines Funktionselements in Form eines RSF-Elements der Firma Profil Verbindungstechnik GmbH & Co. KG, wobei auch hier die verwendete Matrize bei der Anbringung der Funktionselementanordnung in einer in Längsrichtung geschnittenen Ansicht gezeigt wird und
- Fig. 14B: das fertiggestellte Zusammenbauteil darstellt.

Für die verschiedenen, im folgenden erläuterten Varianten der Erfindung werden für gleiche Teile oder Teile, die die gleiche Funktion erfüllen, die gleichen Bezugszeichen verwendet. Es wird ausdrücklich darauf hingewiesen, daß die für einzelne Teile oder für Merkmale von Teilen verwendete Beschreibung auch für andere Teile oder Merkmale mit den gleichen Bezugszeichen gilt, es sei denn, es wird ausdrücklich etwas gegenteiliges gesagt.

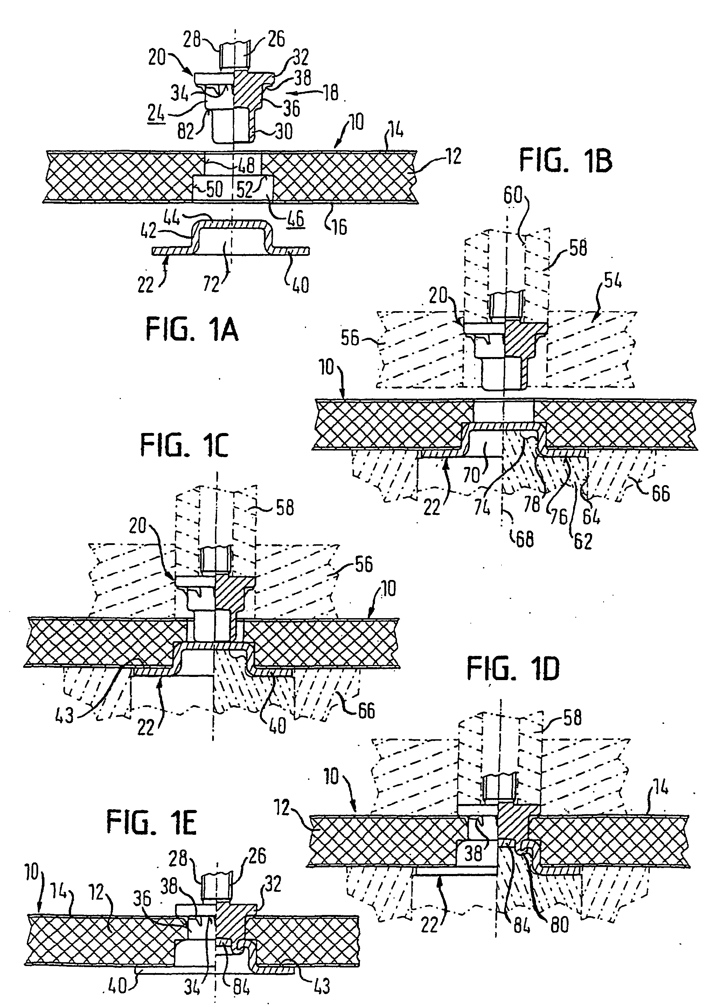

Bezugnehmend auf Fig. 1 wird mit 10 ein Bauteil identifiziert, das hier in Sandwich-Bauform vorliegt und dementsprechend aus einem Kern 12 mit oberen und unteren Decklagen 14 und 16 ausgebildet ist. Es kann sich beispielsweise beim Kern 12 um einen Metallschaum, beispielsweise aus Aluminium oder einer Aluminiumlegierung, handeln, während die Decklagen 14 und 16 aus an der Metallschaumplatte 12 angebondeten, dünnen Blechen aus Aluminium oder einer Aluminiumlegierung oder aus unterschiedlichen Aluminiumlegierungen oder aus Stahl oder aus unterschiedlichen Materialien bestehen können, die beispielsweise jeweils eine Dicke im Bereich von 0,5 bis 3 mm aufweisen können. Insgesamt kann das Bauteil 10 eine Dicke aufweisen, die ohne weiteres im Bereich von 2,5 bis 50 mm oder höher liegt.

Obwohl das gleiche Bauteil 10 in allen nachfolgenden Figuren gezeigt wird, kann das Bauteil 10 eine beliebige Ausbildung aufweisen, entsprechend den in der Beschreibungseinleitung getroffenen Angaben zu den verschiedenen Bauteilen, die erfindungsgemäß mit Funktionselementanordnungen bestückt werden können.

Im allgemeinen werden solche Bauteile deutlich dicker sein als die normalerweise in beispielsweise im Karosseriebau verwendeten Bleche, d.h. dicker als 2,5 mm. Sie werden üblicherweise auch eine Kompressionsfestigkeit haben, die deutlich niedriger liegt als Bleche aus den gleichen oder vergleichbaren Materialien, so daß mindestens bei einigen der nachfolgend beschriebenen Ausführungsbeispielen eine ausgeprägte Verformung des Bauteils mit der Anbringung der Funktionselementanordnung einhergeht.

Es kann sich jedoch bei dem plattenförmigen Bauteil 10 auch durchaus um dicke Bauteile aus Metall, Kunststoff, Hölzern oder anderen Werkstoffen handeln, die entweder kaum verformt werden oder eine erhebliche Verformung bei der Anbringung der Funktionselementanordnung erfahren.

Auch wenn das Bauteil 10 als plattenförmiges Bauteil dargestellt ist, kann es sich durchaus auch um Wandbereiche von dreidimensionalen Gegenständen handeln, die nicht unbedingt aus Platten bestehen müssen, sondern beispielsweise als gefüllte Hohlprofile, Gußteile, Spritzgußteile oder anders hergestellten Teilen vorliegen können.

Fig. 1 befaßt sich mit der Anbringung einer Funktionselementanordnung 18, bestehend aus einem bolzenförmigen Element 20 und einem Hilfsfügeteil 22. Das bolzenförmige Element 20 stellt sich als modifiertes SBF-Element der Firma Profil Verbindungstechnik GmbH & Co. KG dar und weist ein Kopfteil 24 und ein Schaftteil 26, hier mit Gewinde 28, auf, wobei nur eine Teillänge des Schaftteils 26 dargestellt ist.

Das SBF-Element ist beispielsweise im US Patent 4,555,838 und im US-Patent 4,459,073 beschrieben. Das SBF-Element und das Verfahren zur Anbringung des Elements ist außerdem im US-Patent 4,543,701 und im US-Patent 4,727,646 genau angegeben. Das SBF-Element wird hier in modifizierter Form verwendet. Das Kopfteil 24 des Funktionselements 20 weist an seinem dem Schaftteil 26 abgewandten Ende einen Stanz- und Nietabschnitt 30 auf, der genau nach den oben erwähnten US-Patenten, insbesondere nach der US-PS 4,555,838, ausgebildet ist. An seinem dem Schaftteil 26 zugewandten Ende weist das Kopfteil 24 einen Flansch 32 mit einer Auflagefläche 34 auf, die im eingebrachten Zustand zur Anlage an der Decklage 14 des Bauteils 10 kommt.

Abweichend von einem herkömmlichen SBF-Bolzen weist das Element 20 der Fig. 1 einen Zwischenabsatz 36 auf, dessen axiale Länge gewählt wird, um die Anbringung in dem verhältnismäßig dicken Bauteil 10 und am Hilfsfügeteil 22 in der nachfolgend zu erläuternden Weise zu ermöglichen.

Bei einem herkömmlichen SBF-Bolzen befinden sich in der dem Schaftteil 26 abgewandten Seite des Flansches 32 Formmerkmale, die bei der Anbringung des Elementes für eine Verdrehsicherung gegenüber dem Blechteil sorgen. Auch bei dieser Ausführungsform sind ähnliche Formmerkmale vorhanden, sie sind jedoch hier etwas ausgeprägter ausgebildet, um eine ausreichende Verdrehsicherung im im allgemeinen nachgiebigeren Bauteil sicherzustellen. Diese Formmerkmale haben in dieser Ausführungsform die Gestalt von Nasen, die sich im Übergang zwischen der Auflagefläche 34, und dem Zwischenabsatz 36 befinden und sich erhaben in radialer Richtung entlang der Auflagefläche 34 und erhaben in axialer Richtung entlang des Zwischenabsatzes 36 erstrecken.

Das Hilfsfügeteil 22 besteht aus einem tellerartigen Blechteil, hier in einer umgedrehten Orientierung gezeigt mit einem ebenen Randbereich 40 und einer Vertiefung 42, die in einen durchgehenden Bodenbereich 44 übergeht, der parallel zum in Draufsicht kreisrunden, ringförmigen Randbereich 40 verläuft und hier nicht vorgelocht ist.

Zur Aufnahme der Funktionselementanordnung 18 bestehend aus dem Funktionselement 20 und dem Hilfsfügeteil 22 ist das Bauteil 10 vorgelocht, und zwar in diesem Beispiel vorgebohrt, und mit einer abgesetzten Bohrung 46 mit einem ersten Abschnitt 48 kleineren Durchmessers und einem zweiten Abschnitt 50 größeren Durchmessers versehen, wobei der Abschnitt 48 über eine Ringschulter 52 in den Abschnitt 50 übergeht. Der Durchmesser des Abschnittes 48 entspricht zumindest im wesentlichen dem Außendurchmesser des Zwischenabsatzes 36 und hat in etwa die gleiche Länge wie dieser, während der Durchmesser des Abschnittes 50 zumindest im wesentlichen dem Außendurchmesser des Bodenbereiches 44 entspricht. Die axiale Länge des Abschnittes 50 entspricht zumindest im wesentlichen der Höhe des Hilfsfügeteils 22 abzüglich der Blechdicke.

Für die Anbringung der Funktionselementanordnung 18 wird der Funktionselement 20 in einen Setzkopf 54 eingeführt, der beispielsweise in Fig. 1 B dargestellt ist und einen Niederhalter 56 sowie einen Stempel 58 umfaßt, wobei der Stempel zur Aufnahme des Schaftteils 26 des Elementes 20 eine mittig angeordnete Bohrung 60 aufweist. Unterhalb des Bauteils 10 befindet sich eine Matrize 62 mit einer zylindrischen Form, die in einer entsprechenden Bohrung 64 eines Werkzeugs 66 eingelassen ist.

Es handelt sich hier, wie üblich bei der Anbringung von Befestigungselementen, um einen Setzkopf 54, der am oberen Werkzeug einer Presse oder an einer Zwischenplatte der Presse angeordnet ist, während es sich beim Werkzeug 66 um die Zwischenplatte der Presse bzw. um das untere Werkzeug der Presse handelt. Auch wäre eine umgekehrte Anordnung möglich, bei der der Setzkopf 54 am unteren Werkzeug der Presse oder an einer Zwischenplatte der Presse angebracht ist, während sich die Matrize 62 dann an der Zwischenplatte bzw. am oberen Werkzeug der Presse befindet.

Auch ist es keinesfalls zwingend erforderlich, eine Presse für die Anbringung der Funktionselementanordnung zu verwenden. Es könnte beispielsweise in an sich bekannter Weise ein Roboter, beispielsweise nach dem europäischen Patent 0 691 900 zur Anwendung gelangen, wobei die Matrize und der Setzkopf dann vom Roboter getragen werden. Es könnte aber auch ein Schlagwerkzeug oder andere Werkzeuge für die Anbringung der Funktionselementanordnung am Bauteil verwendet werden, beispielsweise ein Werkzeug nach einem der nachfolgenden Schutzrechte DE-PS 197 47 267, EP 0 890 397 oder DE-PS 197 01 088.

An dieser Stelle soll zum Ausdruck gebracht werden, daß es auch denkbar wäre, das Hilfsfügeteil 22 nicht als Blechteil zu realisieren, sondern als Kunststoffteil, beispielsweise mit Faserverstärkung. Auch kann sowohl das Funktionselement 20 als auch das Hilfsfügeteil 22 mit einer oder mehreren Schutzbeschichtungen versehen werden, die sicherstellen, daß zwischen dem Funktionselement und dem Bauteil bzw. zwischen dem Hilfsfügeteil und dem Bauteil und zwischen dem Funktionselement und dem Hilfsfügeteil keine unzulässige Korrosion auftritt. Auch können alle Flächen des Funktionselements 20, die in Berührung mit dem Bauteil 10 und/oder mit dem Hilfsfügeteil 22 kommen, sowie alle Flächen vom Hilfsfügeteil 22, die mit dem Bauteil 10 und mit dem Funktionselement 20 in Berührung kommen, mit Klebstoff versehen werden, vorzugsweise mit einem Trockenklebstoff, der unter Druck beim Anbringen der Funktionselementanordnung aktiviert wird und vorzugsweise alle miteinander in Berührung kommenden Flächen des Funktionselements 20, des Bauteils 10 und des Hilfsfügeteils 22 miteinander wasserdicht verklebt. Diese Klebstoffverbindung sorgt außerdem für eine hohe Sicherheit gegen gegenseitige Verdrehung. Die Klebstoffschicht bildet somit eine Verdrehsicherungseinrichtung.

Wie aus Fig. 1B ersichtlich, werden bei der Anbringung der Funktionselementanordnung der Setzkopf und die Matrize axial miteinander und mit der abgesetzten Bohrung 46 des Bauteils so ausgerichtet, daß das Funktionselement 20, das Hilfsfügeteil 22 und die abgesetzte Bohrung 46 alle an einer gemeinsamen Längsachse 68 liegen und somit miteinander ausgerichtet sind.

Aus Fig. 1B ist beispielsweise auch ersichtlich, daß die Matrize 62 gegenüber dem Werkzeug 66 in axialer Richtung, d.h. in Richtung der Achse 68 soweit zurückgesetzt ist, daß die Oberseite des Randbereiches 40 des Hilfsfügeteils 22 zumindest im wesentlichen bündig mit der Oberseite des Werkzeuges 66 liegt.

Auch ist aus Fig. 1B ersichtlich, daß die Matrize 62 einen koaxialen, zylindrischen Formvorsprung 70 aufweist, der in der Vertiefung 42 des Hilfsfügeteils, genauer gesagt im Aufnahmeraum 72 der Vertiefung 42, aufgenommen wird. Die Stirnfläche des Formvorsprungs 70 der Matrize ist mit einer ringförmigen, gerundeten Formfläche 74 versehen, die zumindest im wesentlichen die Form aufweist, die im oben genannten US-Patent 4,727,646 beschrieben ist.

Weiterhin merkt man aus Fig. 1B, daß der Übergang zwischen dem Formvorsprung 70 der Matrize und der sich in Fig. 1B horizontal erstreckenden Anlagefläche der Matrize 62 für die Unterseite des Hilfsfügeteils 22 mit einer abgerundeten kleinen Hinterschneidung 78 realisiert ist, die sicherstellt, daß das Hilfsfügeteil beim Anbringen derselben nicht verletzt wird und daß das Hilfsfügeteil und die Matrize nach der Durchführung des Stanz- und Nietvorganges nicht stark aneinander haften bleiben.

Fig. 1C zeigt nun eine weitere Phase der Anbringung der Funktionselementanordnung am Bauteil 10. Wie dort ersichtlich, wird das Bauteil 10 nunmehr vom Niederhalter 56 gegen die Oberseite des unteren Werkzeuges 66 und gegen die in Fig. 1C gezeigten Oberseite des Randbereiches 40 des Hilfsfügeteils 22 gedrückt, so daß das Bauteil unter dem Druck des Niederhalters festgehalten wird. Der Stempel 58 hat sich durch die Schließbewegung der Presse jetzt so weit nach unten bewegt, daß das Stirnende des Stanz- und Nietabschnittes 30 des Funktionselements 20 in Anlage an der Oberseite des Bodenbereiches 44 des Hilfsfügeteils 22 gelangt ist.

Durch eine weitere Schließbewegung der Presse wird nunmehr dieser Bodenbereich vom Stanz- und Nietabschnitt 30 durchgestanzt, wie in Fig. 1D gezeigt. Der Stanz- und Nietabschnitt wird zu einem umlaufenden Nietbördel 80 umgeformt, wobei der Rand des durchstanzten Bodenbereiches 44 des Hilfsfügeteils 22 zwischen dem Nietbördel 80 und der Ringschulter 82 beim Übergang des Stanz- und Nietabschnittes 30 in den Zwischenabsatz 36 gefangengehalten ist und auch entsprechend verformt wird. Es entsteht an dieser Stelle eine Nietverbindung entsprechend der üblichen Nietverbindung bei einem SBF-Element, jedoch mit dem Unterschied, daß die Nietverbindung zwischen dem Nietbördel 80 und der Ringschulter 82 des Zwischenabsatzes 36 anstelle zwischen dem Nietbördel 80 und der Unterseite des Flanschteils 32 gebildet wird.

Man sieht aus Fig. 1D und auch aus Fig. 1E, die das Zusammenbauteil zeigt, daß die Verdrehsicherungsnasen 38 in die obere Decklage 14 des Bauteils 10 hineingepreßt wurden und auch den Kernbereich 12 entsprechend verformt haben, so daß diese Nasen eine zusätzliche Verdrehsicherungseinrichtung bilden (zusätzlich zu der Klebstoffverbindung - falls vorhanden) und eine zusätzliche Verdrehsicherheit gewährleisten.

Der Stanzbutzen 82, der beim Durchstanzen des Bodenbereiches 44 des Hilfsfügeteils 22 durch den Niet- und Stanzabschnitt 30 entsteht, wird, wie üblich bei einem SBF-Bolzenelement, innerhalb des Stanz- und Nietabschnittes gefangengehalten und dient auch der Abstützung des Nietbördels, wodurch eine hochfeste Verbindung entsteht.

Im Gebrauch des fertigen Zusammenbauteils gemäß Fig. 1E wird ein anderes Bauteil an der oberen Decklage 14 des Bauteils 10 befestigt, und zwar durch eine Mutter, die auf dem Gewinde 28 des Schaftteils 26 angeschraubt wird. Dies ist in Fig. 1 nicht gezeigt, wird jedoch im Zusammenhang mit Fig. 2G beschrieben, die ein ähnliches Zusammenbauteil zeigt.

Aus Fig. 1 ist ersichtlich, daß das Hilfsfügeteil 22 beim Anbringen verliersicher durch die Matrizenanordnung gehalten wird, zum einen durch die versenkte Anordnung der Matrize innerhalb des unteren Werkzeuges 66, und zum anderen durch den Formvorsprung 70, der sich im Aufnahmeraum 72 des Hilfsfügeteils 22 befindet. Diese Anordnung sorgt auch für ein sattes Anliegen des randförmigen Bereiches 40 an der unteren Decklage 16 des Bauteils 10. Es geht auch aus Fig. 1D klar hervor, daß der Grad der Quetschung des Bauteils 10 bei der Anbringung der Funktionselementanordnung genau bestimmt wird durch die vorgegebene Höhe des Zwischenabsatzes 36 und der Vertiefung 42, d.h. durch den Abstand zwischen dem Flansch 32 und dem ebenfalls einen Flansch bildenden Randbereich 40 des Hilfsfügeteils. Die Anordnung wird so getroffen, daß die herrschenden Kräfte beim Anbringen in der Presse ausreichen, um die Verbindung gemäß Fig. 1E zustande zu bringen, nicht jedoch so groß sind, daß die Funktionselementanordnung oder das Hilfsfügeteil eine darüber hinausgehende Verformung erfahren.

Ein besonderer Vorteil der Funktionselementanordnung gemäß Fig. 1 ist darin zu sehen, daß die im Betrieb, beim Anschrauben eines weiteren Bauteils herrschende Belastung des Bauteils 10 über den großflächigen Randbereich 40 des Hilfsfügeteils auf das Bauteil 10 wirkt. Diese Fläche kann ausreichend groß gewählt werden, damit die maximal zulässige Flächenpressung nicht überschritten wird.

Ein weiterer, besonderer Vorteil dieser Anordnung liegt darin, daß man mit einem Element einen weiten Bereich von unterschiedlichen Bauteildicken abdecken kann, denn es ist nur notwendig bei unterschiedlichen Bauteildicken, Hilfsfügeteile vorzusehen, die eine unterschiedliche Höhe aufweisen, während die komplexeren Funktionselement 20 gleich bleiben können. Zur Anwendung mit tellerartigen Hilfsfügeteilen 22 unterschiedlicher Höhe sind natürlich auch entsprechend ausgelegte Matrizen, d.h. Matrizen mit einer entsprechenden Höhe des Formvorsprungs 70, erforderlich. Außerdem muß die axiale Länge des Bohrungsabschnittes 50 entsprechend gewählt werden.

In Fig. 1 nicht gezeigt, jedoch durchaus möglich wäre es außerdem, die Matrize 62 so am unteren Werkzeug 66 anzuordnen, daß die Fläche 76 bündig mit der Oberfläche des unteren Werkzeuges 66 liegt und die Abmessungen so zu wählen, daß der Randbereich 40 des Hilfsfügeteils 22 bei der Anbringung am Funktionselement eine kleine Vertiefung in der Unterseite des Bauteils 10 bildet, so daß die Unterseite des Hilfsfügeteils 22 bündig ist mit der unteren Decklage 16 des Bauteils 10 oder gar geringfügig zurückgesetzt gegenüber dieser Fläche ist. Auf diese Weise kann der Aufnahmeraum 72 mit einem Füllstoff befüllt und ggf. der Randbereich 40 mit Füllstoff überdeckt werden, so daß sich nach der Fertigstellung bzw. Lackierung des Bauteils eine glatte, durchgehende Fläche an der unteren Decklage 16 an der Stelle des Hilfsfügeteils ergibt.

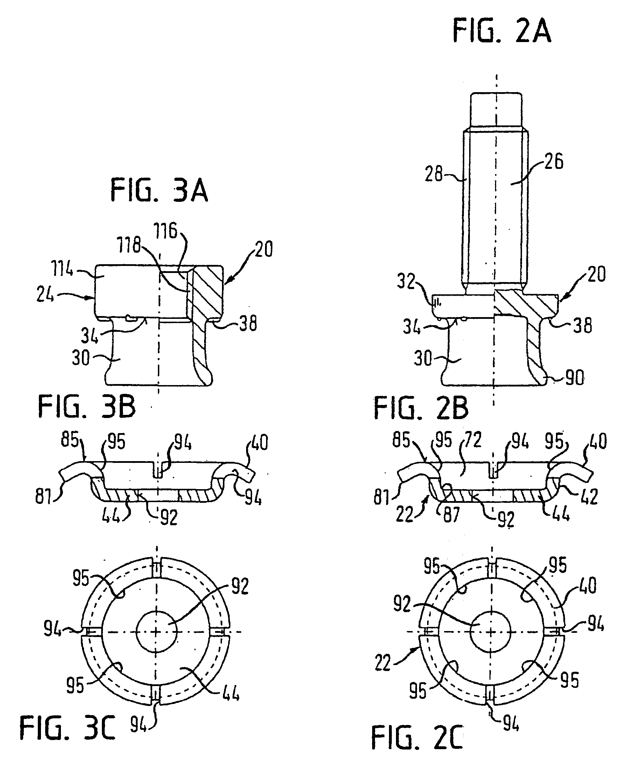

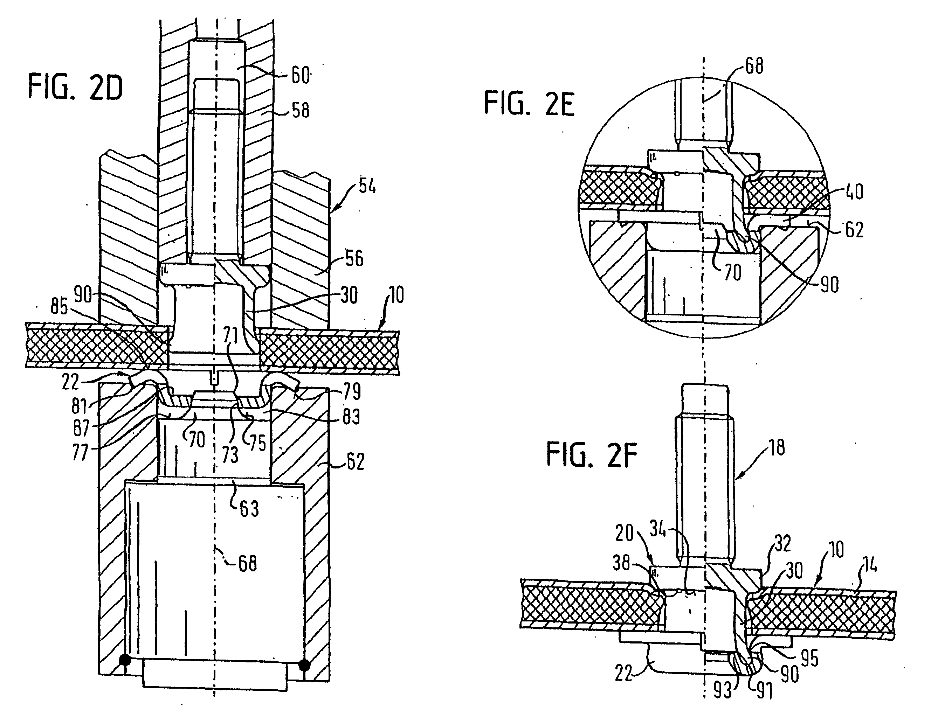

Bezugnehmend auf die Fig. 2 wird nun eine Funktionselementanordnung beschrieben, die der Funktionselementanordnung gemäß Fig. 1 sehr ähnlich ist, jedoch gewisse Abwandlungen erfahren hat.

Das Funktionselement 20 gemäß Fig. 2A ist auch hier ähnlich eines SBF-Bolzenelementes realisiert, nur wird hier der Stanz- und Nietabschnitt 30 lediglich als Nietabschnitt verwendet und zu diesem Zweck im Bereich seines Stirnendes zu einem konusförmig divergierenden Ringbereich 90 verformt. Bei dem Funktionselement 20 fehlt in diesem Beispiel der Zwischenabsatz 36 der Fig. 1, jedoch könnte das Element in Fig. 2A falls gewünscht mit einem solchen Zwischenabsatz ausgebildet werden. Im übrigen sind die Verdrehsicherungsmerkmale 38 in der Auflagefläche 24 hier genauso ausgeführt wie bei einem herkömmlichen SBF-Bolzen. Sie könnten aber auch so ausgeführt werden wie die Verdrehsicherungsmerkmale 38 gemäß Fig. 1.

Das Hilfsfügeteil 22 ist in diesem Beispiel ebenfalls tellerförmig ausgebildet mit einem ringförmigen Randbereich 40, einer Vertiefung 42 und einem Aufnahmeraum 72, wird jedoch hier in einer gegenüber Fig. 1 umgekehrten Lage verwendet. Zu beachten bei diesem Beispiel ist, daß das Hilfsfügeteil 22 im Bodenbereich 44 eine in der Mitte angeordnete Lochung 92 aufweist und daß der ringförmige Randbereich 40 konusförmig divergierend nach unten in Richtung des Bodenbereiches 44 abgewinkelt ausgebildet ist und an mehreren Stellen (in diesem Beispiel vier) durch Schlitze 94 unterteilt ist, die sich über einen Teil der Seitenwand der Vertiefung 42 erstrecken. Das Hilfsfügeteil 22 wird vorzugsweise als Blechteil realisiert und stellt ein typisches Stanzteil dar, d.h. die entsprechend Form einschließlich die Lochung 92 und die Schlitze 94 werden in einem Stanzvorgang aus einer Blechtafel oder aus einem Blechstreifen hergestellt.

Fig. 2C zeigt das Hilfsfügeteil 22 in Draufsicht von oben.

Für die Anbringung der Funktionselementanordnung gemäß Fig. 2A bis Fig. 2C kommen auch hier ein Setzkopf 54 und eine Matrize 62 zur Anwendung, wobei die Matrize 62 üblicherweise in ein unteres Werkzeug einer Presse eingesetzt wird, was aber in der Darstellung gemäß Fig. 2D nicht gezeigt ist. Auch hier besteht die Möglichkeit, die Funktionselementanordnung mit einem Roboter oder mit einem Schlagwerkzeug oder anderweitig einzusetzen.

Der Setzkopf 54 besteht in diesem Beispiel ebenfalls aus einem Niederhalter 56 und einem Stempel 58. Die Matrize 62 weist ein mittleres Teil 63 auf, mit einem Formvorsprung 70 mit einem angeschrägten Stirnende 71, einem zylindrischen Bereich 73, der sich innerhalb der Lochung 92 befindet und diesen zentriert, und mit einem Radius 75, der in einer ebenen Abstützfläche 77 übergeht, die senkrecht zur Längsachse 68 steht und die Unterseite des Bodenbereiches 44 des Hilfsfügeteils 22 während der Anbringung des Elementes abstützt.

Die Matrize 62 der Fig. 2D hat auch eine umlaufende Ringnut 79 mit schräggestellten Innen- und Außenwänden, deren Form an die Form der unteren Randkante 81 des Randbereiches 40 des Hilfsfügeteils 22 zumindest im wesentlichen angepaßt ist, wobei aber - wie aus Fig. 2D ersichtlich - die axiale Tiefe der Ringvertiefung 79 deutlich kleiner als die Blechstärke des Hilfsfügeteils 22 gewählt wird.

Wie aus Fig. 2D ebenfalls ersichtlich, dienen sowohl der Formvorsprung 70 als auch die Ringvertiefung 79 und die zylindrische Bohrung 83 des äußeren Teils 62 der Matrize 62 der Zentrierung des Hilfsfügeteils 22 bei dessen Anbringung.

Fig. 2D zeigt die Anbringung der Funktionselementanordnung, nachdem die Presse gerade soweit geschlossen ist, daß der Niederhalter 56 das Bauteil 10 gegen die ringförmige Oberfläche 85 des Hilfsfügeteils 22 gedrückt hat.

Beim vollständigen Schließen der Presse wird der konusförmig nach außen gestellte Mündungsbereich 90 des Nietabschnittes 30 in den Eckbereich 87 des Hilfsfügeteils eingedrückt und, wie aus Fig. 2E leicht ersichtlich ist, der Randbereich 40 des Hilfsfügeteils 22 hochgebogen, so daß dieser Randbereich 40 nunmehr bündig auf der Stirnseite der äußeren Matrize 62 liegt, d.h. in einer Ebene senkrecht zur Längsachse 68. Der innere Teil 63 der Matrize ist während der Schließbewegung der Presse auch geringfügig nach oben verschoben worden, so daß die Stirnfläche des Formvorsprungs 70 nunmehr geringfügig höher liegt als die obere Stirnseite der äußeren Matrize 62. Es handelt sich daher bei der Matrize 62 um eine sogenannte Teleskop-Matrize, deren äußerer Teil nach oben vorgespannt, bzw. deren innerer Teil nach unten vorgespannt ist, wobei die Matrize erst bei vollständigem Schließen des Werkzeugs bzw. die Presse in die Stellung gemäß Fig. 2E gebracht wird. Solche Teleskop-Matrizen sind mit anderen Formgebungen für andere Zwecke an sich bekannt.

Durch die Umformung des Randbereiches 40 des Hilfsfügeteils und durch die gleichzeitige Umformung des Bodenbereiches 44 des Hilfsfügeteils 22 wird der konusförmig nach außen verformte Ringbereich 90 des Funktionselements 68 form- und kraftschlüssig im Hilfsfügeteil gehalten, so daß der Funktionselement 20 und die Hilfsfügeteile 22 bei normaler Kraftausübung nicht mehr getrennt werden können. Die Schlitze 94 machen es leichter, den Randbereich 40 umzuformen, sowohl bei der Herstellung des Hilfsfügeteils 20 als auch bei der Flachpressung des Randbereiches 40 beim Anbringen der Funktionselementanordnung. Während dieser Flachpressung werden die Bereiche 95 der Ringwand der Vertiefung 42 radial nach innen verformt bzw. bewegt.

Fig. 2F zeigt das Zusammenbauteil bestehend aus der Funktionselementanordnung 18 (20 + 22) und dem Bauteil 10 nach der Entfernung aus der Presse. Hier ist deutlich zu erkennen, daß die Verdrehsicherungsmerkmale 38 im Bereich der Auflagefläche 34 des Flansches 32 die obere Decklage 14 des Bauteils stellenweise eingedrückt haben, wobei auch der Kernbereich 12 des Bauteils 10 teilweise verformt wird und somit die erforderliche Verdrehsicherung sichergestellt haben. Auch hier werden das Funktionselement 20 und/ oder das Hilfsfügeteil 22 vorzugsweise mit einer Klebstoffschicht versehen, um eine erhöhte Verdrehsicherheit zu gewährleisten.

Aus dem Bereich unten rechts in Fig. 2F ist auch deutlich zu erkennen, wie der konusförmig divergierende Endbereich 90 des Nietabschnittes 30 in einer gerundeten, ringförmigen Nut 91 gefangengehalten wird, die zwischen dem nach oben gebogenen, radial nach außen verformten Randbereich 93 der Lochung 92 und dem radial nach innen verformten Seitenrand 95 der Vertiefung 42 gefangengehalten wird.

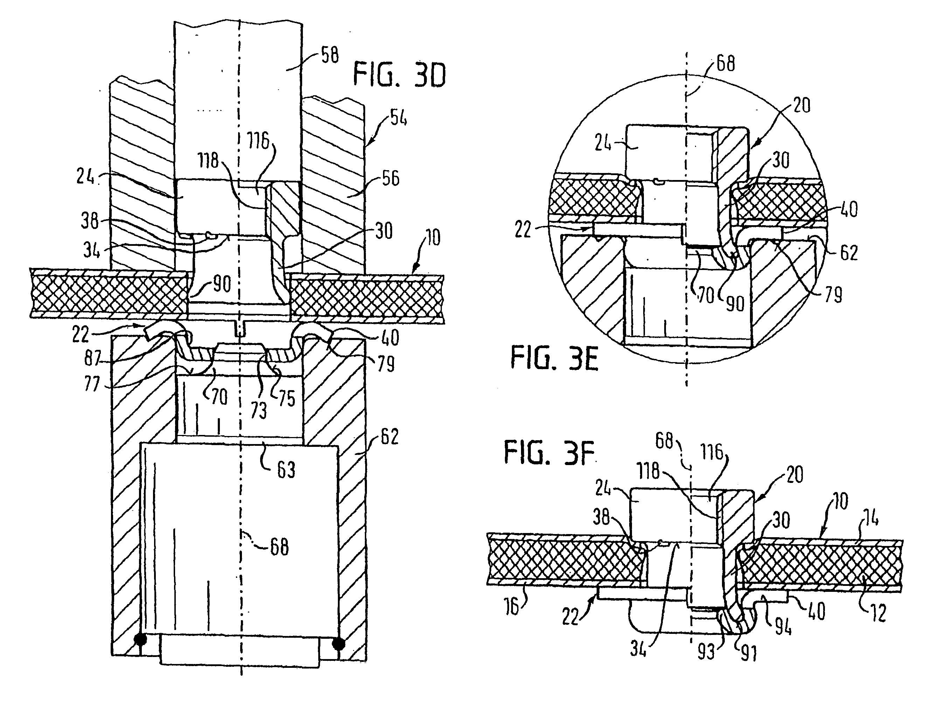

Fig. 2G zeigt nun das Zusammenbauteil gemäß Fig. 3F bei einem Anwendungsfall, bei dem ein weiteres Bauteil 100 am erstgenannten Bauteil 10 befestigt wird, und zwar mittels einer Mutter 102, die auf dem Schaftteil 26 des Funktionselements 20 aufgeschraubt wird. Das Bauteil 10 weist eine abgesetzte Bohrung 104 auf mit einem Abschnitt 106 größeren Durchmessers, der geringfügig größer gewählt wird als der Außendurchmesser des Flansches 32 des Funktionselements 20 und mit einem Abschnitt 108 kleineren Durchmessers, wobei der Durchmesser des Abschnittes 108 nur geringfügig größer ist als der Außendurchmesser des Schaftteils 26.

Die sich zwischen dem Bohrungsabschnitt 106 und dem Bohrungsabschnitt 108 befindliche Ringschulter 110 weist im zusammengebauten Zustand einen Abstand von der dem Schaftteil zugewandten Seite des Flansches auf, so daß das weitere Bauteil 100 satt am erstgenannten Bauteil 10 anliegt. Das heißt, daß das erstgenannte Bauteil 10 und das weitere Bauteil 100 werden aneinander gepreßt und zwar zwischen dem Randbereich 40 des Hilfsfügeteils 22 und einem Flanschteil 112 der Mutter 102. Diese Teile können flächenmäßig ausreichend groß gewählt werden, daß die maximal zulässige Flächenpressung bei dem ersten und zweiten Bauteil 10, 100 berücksichtigt wird.

Die Kompressionskräfte, die auf die Bauteile wirken, werden als axiale Zugkräfte im Funktionselement 20 zwischen der Mutter 102 und dem Hilfsfügeteil 22 übertragen.

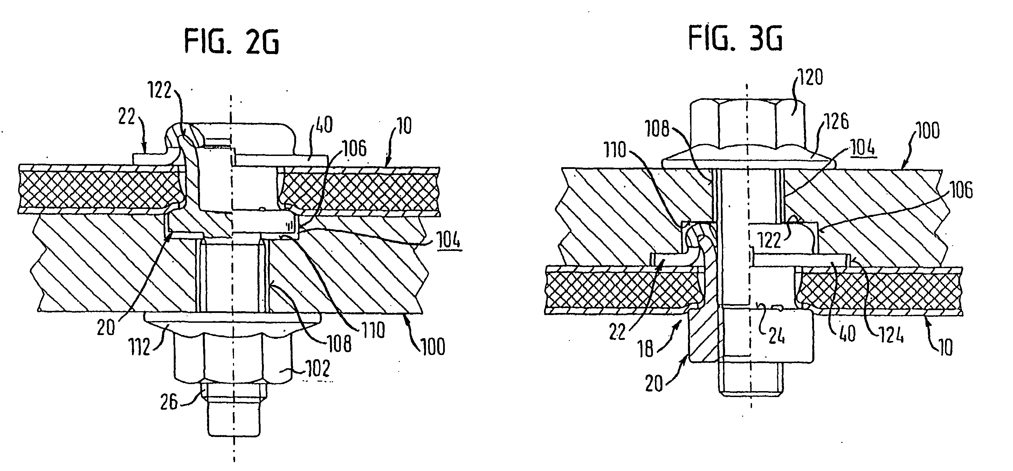

Fig. 3 zeigt nun eine weitere erfindungsgemäße Funktionselementanordnung, die in vieler Hinsicht ähnlich der Funktionselementanordnung gemäß Fig. 2 ist, wobei jedoch das Funktionselement 20 hier als Hohlelement, nämlich als Mutterelement ausgebildet ist.

Der Nietabschnitt 30 des Mutterelements entspricht vollständig dem Nietabschnitt 30 des Bolzenelementes gemäß Fig. 2A und geht genauso in die Auflagefläche 34 über. Diese Fläche ist mit sich radial erstreckenden Nasen 38 und dazwischenliegenden Vertiefungen versehen, die im eingebauten Zustand des Funktionselements eine Verdrehsicherung bilden. Diese sich radial erstreckenden Nasen 38 können identisch sein mit den Verdrehsicherungsnasen 38 gemäß Fig. 2A, oder sie können eine andere Gestaltung aufweisen.

Der Körper oder Kopfabschnitt des Funktionselements 20 entspricht im Durchmesser dem Flanschteil 32 des Funktionselements 20 der Fig. 2A, ist jedoch in axialer Richtung wesentlich länger ausgebildet und mit einer mittig angeordneten Bohrung 116 versehen, die ein Innengewinde 118 trägt.

Anstatt ein Innengewinde 118 zu tragen, kann das Hohlkörperelement zur Anwendung mit einer gewindeformenden oder gewindeschneidenden Schraube ausgelegt sein oder das Innengewinde nachträglich nach Anbringung der Elemente mit einem entsprechenden Werkzeug geschnitten oder geformt werden. Dies gilt auch für alle anderen hierin beschriebenen Hohlelemente.

Das Hilfsfügeteil 22 gemäß den Fig. 3B und 3C ist identisch mit dem Hilfsfügeteil 22 in Fig. 2B und 2C.

Die Anbringung der Funktionselementanordnung gemäß Fig. 3A bis 3C an einem Bauteil 10 ist in den Figuren 3D bis 3F gezeigt. Die dort dargestellten Anordnungen und Art der Anbringung entspricht weitestgehend der Anordnung und Art der Anbringung gemäß den Fig. 2D bis 2F und wird hier nicht neu erläutert. Es genügt, lediglich darauf hinzuweisen, daß der Stempel hier als massiver Stempel ausgebildet sein kann, da eine zentrale Bohrung zur Aufnahme eines Schaftteils des Funktionselements 20 hier nicht notwendig ist, da das Funktionselement 20 wohl kein Schaftteil aufweist.

Fig. 3G zeigt ein weiteres Bauteil 100, das am erstgenannten Bauteil 10 bei Verwendung der Funktionselementanordnung 18 gemäß den Fig. 3A bis 3F angeschraubt wird. Die Anordnung ist umgekehrt zur Anordnung gemäß Fig. 2G in dem Sinne, daß das Bauteil 100 auf der Seite des Bauteils 10 angebracht wird, wo sich das Hilfsfügeteil 22 befindet. Da es sich bei dem Funktionselement 20 um ein Mutterelement handelt, wird für die Befestigung des weiteren Bauteils 100 an dem Bauteil 10 hier eine Schraube 120 verwendet. Auch bei dieser Ausführungsform weist das weitere Bauteil 100 eine abgesetzte Bohrung 104 auf mit einem Bereich 106 größeren Durchmessers, der den Bodenbereich des tellerartigen Elementes 108 aufnimmt und dazwischen eine Ringschulter 110, die in diesem Beispiel direkt an der Ringfläche 122 des Hilfsfügeteils 22 anliegen kann, da man hierdurch die Festigkeit der Verbindung weiter erhöht. Es ist jedoch nicht zwingend erforderlich, daß die Ringschulter 110 sich in Anlage mit dem Hilfsfügeteil befindet. Der Bohrungsabschnitt 106 ist selbst als abgesetzte Bohrung ausgebildet mit einem Bereich 124, der den Randbereich 40 des Hilfsfügeteils 22 aufnimmt. Auch hier liegt das weitere Bauteil 100 satt am erstgenannten Bauteil 10 an. Beide Bauteile werden in Kompression belastet, einerseits durch die Auflagefläche 24 des Hohlkörperelements 20, andererseits durch das Flanschteil 126 des Bolzens 120.

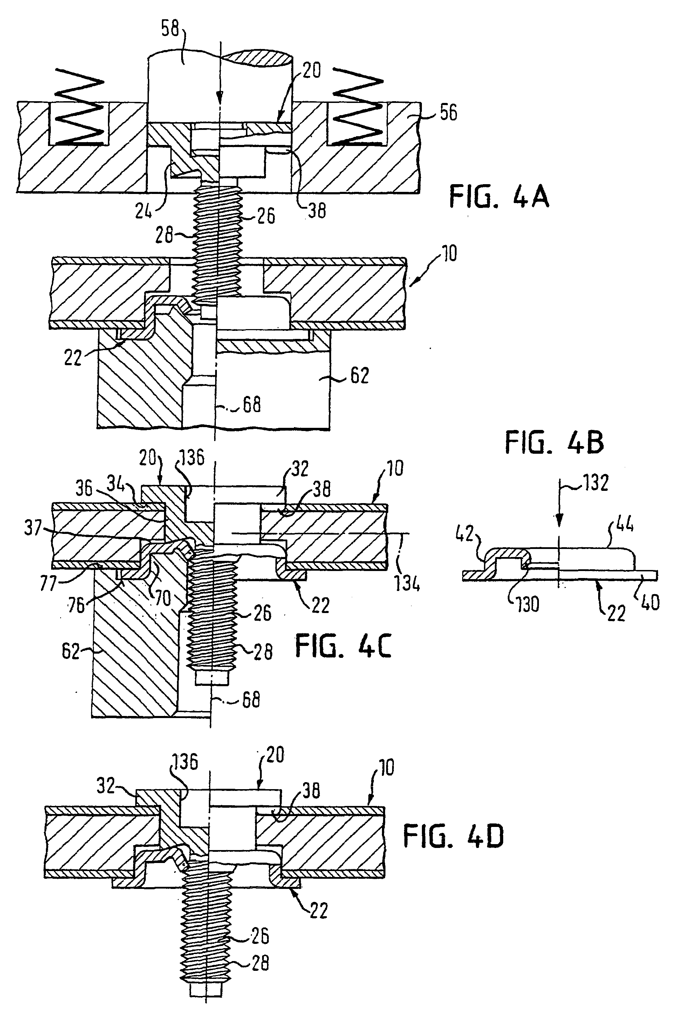

Die Fig. 4A bis 4D zeigen nun eine weitere erfindungsgemäße Funktionselementanordnung, und zwar auch hier mit einem Funktionselement 20 in Form eines Bolzenelementes und mit einem Hilfsfügeteil 22 (Fig. 4B) mit einer im allgemeinen tellerartigen Gestalt. Das Bolzenelement 20 in diesem Beispiel ist eine abgewandelte Version des sogenannten EBF-Bolzens der Firma Profil Verbindungstechnik GmbH & Co. KG, der im europäischen Patent 678 679 im Detail beschrieben ist, wobei an dieser Stelle auch auf die PCT-Anmeldung PCT/EP96/04188 (WO 97/11811) hinzuweisen ist, die besondere Erklärungen im Zusammenhang mit der Anbringung von EBF-Bolzen in dünnen Blechen enthält.

Auch bei dem Funktionselement 20 gemäß Fig. 4A weist das Bolzenelement ein Kopfteil 24 und ein Schaftteil 26 auf, das auch hier mit einem Gewinde 28 versehen ist.

Bei einem herkömmlichen EBF-Bolzenelement kommt die Nietverbindung zwischen einem Blechteil und dem Element dadurch zustande, daß das Blechteil mit einem ringkragenartigen Bereich versehen wird, mit 130 in Fig. 4B gekennzeichnet, der Schaftteil 26 des Elementes durch den Ringkragen 130 hindurchgeführt wird und zwar in Pfeilrichtung 132 in Fig. 4B gesehen, und daß der Ringkragen anschließend in radialer Richtung an den sogenannten Anformabschnitt des Elements verformt wird, so daß dieser in das Gewinde 28 des Bolzenelementes unmittelbar unterhalb der Auflagefläche des Bolzenelementes eingreift und eine feste Verbindung zusammenbringt. Dabei weist das Bolzenelement d.h. der EBF-Bolzen, im Anformabschnitt im Übergang von der Unterseite des Kopfteils in der eigentlichen Auflagefläche um das Schaftteil herum eine ringförmige Vertiefung auf. Diese wird durch Verdrehsicherungsnasen unterteilt, die in etwa die Form der Nasen 38 gemäß Fig. 1 aufweisen und sich in radialer Richtung innerhalb der ringförmigen Vertiefung der Auflagefläche und in axialer Richtung erhaben am Schaftteil des Bolzenelementes entlang erstrecken. Die ringförmige Vertiefung in der Auflagefläche hat eine Seitenwand, die parallel zur Achse des Bolzenelements verläuft und sich sozusagen als Fortsetzung der Mantelfläche des Schaftteils des Elements darstellt und eine schräggestellte Fläche, die eine konusförmige Ringwand bildet. Die für die Anbringung des Elements verwendete Matrize, mit 62 in Fig. 4A und 4C dargestellt, hat bei einem herkömmlichen EBF-Bolzen einen ringförmigen Vorsprung, der das Blechteil in die ringförmige Vertiefung in der Auflagefläche preßt mit einer schräggestellten Innenwand, die den Ringkragen gegen das Gewinde drückt und in diese hineinformt. Bei dieser Verformung des Ringkragenbereiches des Blechteils werden die Verdrehsicherungsnasen in das Blechteil hineingepreßt und erfüllen somit die gewünschten Verdrehsicherungsfunktion. Mit anderen Worten erfolgt die Nietverbindung zum Blechteil in dem hier als Anformabschnitt bezeichneten Nietabschnitt.

Der Bereich des Funktionselements 20 der Fig. 4C unterhalb der Linie 134 entspricht zumindest im wesentlichen vollständig einem herkömmlichen EBF-Bolzen. Die Anbringung an das Hilfsfügeteil 22 entspricht vollständig der Anbringung des herkömmlichen EBF-Bolzens an ein Blechteil, wobei hier das Hilfsfügeteil 22 die bei einem EBF-Bolzen übliche Blechvorbereitung im Bereich der Bodenfläche 44, insbesondere den Ringkragen 130 aufweist. Ansonsten hat das Hilfsfügeteil 22 die gleiche tellerartige Ausbildung wie das entsprechende Hilfsfügeteil 22 der Fig. 1A.

Die verwendete Matrize 62 hat eine ringförmige Vertiefung 75 an ihrer oberen Ende, die eine Abstützfläche 76 bildet, die zur Anlage an die Unterseite des Randbereiches 40 in Fig. 4B kommt und eine axiale Tiefe gegenüber der Ringschulter 77 hat, die der Blechdicke des Hilfsfügeteils 22 entspricht. Außerdem hat die Matrize 62 einen Formvorsprung 70, der den vorher erwähnten Ringvorsprung 63 trägt. Die Matrize 62 der Fig. 4A und 4C ist entsprechend der Matrize 62 der Fig. 1B ebenfalls in einem Werkzeug angeordnet (nicht gezeigt).
Oberhalb der genannten Ebene 134 wird bei dem Funktionselement 20 der Fig. 4A der Kopfbereich nach oben verlängert, so daß ein Zwischenabsatz 36 erzeugt wird. Dieser Zwischenabsatz 36 geht dann in einen Flansch 32 über, der mit Verdrehsicherungsnasen 38 entsprechend Fig. 1A versehen ist, wobei diese Verdrehsicherungsnasen auch eine andere Ausbildung haben können, beispielsweise die Form von sich lediglich in radialer Richtung erstreckenden Nasen an der Auflagefläche 34.

Der Zwischenabsatz 36 der Fig. 4A weist eine mittig angeordnete Vertiefung 136 auf, die aus Gründen der Gewichtsersparnis vorgesehen ist. Diese Vertiefung 136 kann aber auch als Schlüsselaufnahme ausgebildet werden, beispielsweise nach Art einer Inbusschraube, damit beim Anschrauben einer Mutter auf das Schaftteil 26 eine erhöhte Sicherheit gegen Verdrehung erzeugt werden kann. Auch bei diesem Ausführungsbeispiel können alle Flächen des Funktionselements 20, die in Berührung mit dem Bauteil 10 oder mit dem Hilfsfügeteil 22 kommen, sowie alle Flächen vom Hilfsfügeteil 22, die in Verbindung mit dem Bauteil 10 und/oder dem Funktionselement 20 kommen, mit einem Klebstoff versehen werden, der alleine oder in Verbindung mit anderen Formmerkmalen wie 38 (falls vorhanden) für die gewünschte Verdrehsicherung sorgt.

Die Art der Anbringung des Elementes entspricht vollständig dem im europäischen Patent (bzw. in der WO-Schrift) beschriebenen Verfahren, so daß das Verfahren hier nicht weiter erörtert wird.

Die bisher besprochenen Vorteile der positiven Ausrichtung des Hilfsfügeteils 22, des satten Anliegens des Randbereiches 40 dieses Hilfsfügeteils am Bauteil 10 und die kontrollierten Einbaubedingungen, so daß der Abstand zwischen dem Flansch 32 und dem Randbereich 44 bei Anbringung der Funktionselementanordnung durch die axiale Höhe des Zwischenabsatzes 36 und der Vertiefung genau an das jeweilige Bauteil 10 angepaßt ist, so wie im Zusammenhang mit Fig. 1 beschrieben, gelten auch hier.

Nach Fertigstellung des Zusammenbauteils gemäß Fig. 4c und Entfernung aus der Matrize sieht das Zusammenbauteil so aus wie in Fig. 4D gezeigt und ein weiteres Bauteil kann jetzt an der Unterseite des erstgenannten Bauteils 10 in Fig. 4D angeschraubt werden, wobei das anzuschraubende Bauteil eine abgesetzte Bohrung aufweisen muß, damit es satt am erstgenannten Bauteil 10 anliegt.

Die Kompressionskräfte auf dem Bauteil 10 und dem weiteren Bauteil (nicht gezeigt), werden in diesem Beispiel zwischen dem Flansch 32 des Funktionselements 20 und der auf dem Schaftteil 26 des Funktionselements 20 aufzuschraubenden Mutter erzeugt und verursachen eine Zugbeanspruchung im Funktionselement 20.

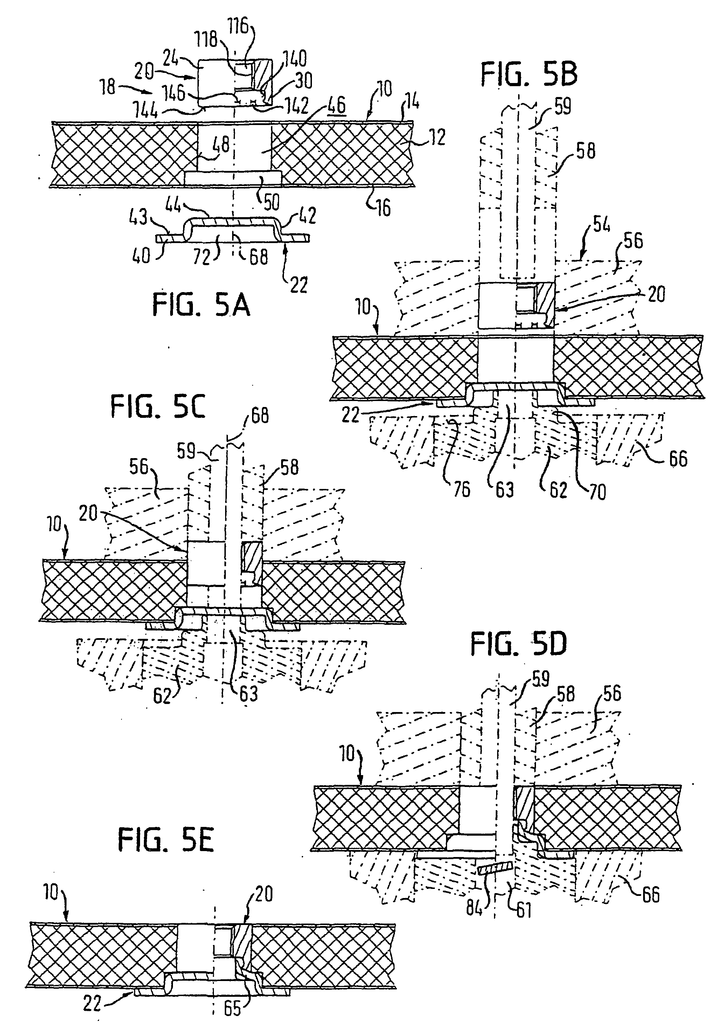

Fig. 5 zeigt nun eine weitere erfindungsgemäße Funktionselementanordnung und außerdem die Anbringung dieser an ein Bauteil 10.

Das Funktionselement 20 ist in diesem Beispiel ein sogenanntes RSU-Element der Firma Profil Verbindungstechnik GmbH & Co. KG und ist im Detail in der europäischen Patentanmeldung mit der Veröffentlichungsnummer 0 759 510 beschrieben, wobei dort auch detaillierte Angaben zur Anbringung dieses Elements an einem Blechteil beschrieben sind und auch hier gelten.

Das Funktionselement 20, der aus einem Körper- oder Kopfabschnitt 24 und einem hier als Einformabschnitt realisierten Nietabschnitt 30 besteht, wird in diesem Ausführungsbeispiel ebenfalls mit einem Hilfsfügeteil 22 in Form eines umgekehrt tellerartigen Blechteils verwendet, das im Grunde genommen die gleiche Formgebung aufweist wie das Hilfsfügeteil 22 der Fig. 1, nur mit der Ausnahme, daß zur Anpassung an die jeweilige Dicke des Bauteils 10 das Hilfsfügeteil 22 hier eine geringere Höhe aufweist. Auch bei diesen Ausführungsbeispiel wird das Bauteil 10 vorgelocht, insbesondere vorgebohrt, und mit einer abgesetzten Bohrung 46 versehen, die einen Abschnitt 48 mit einem kleineren Durchmesser und einen Abschnitt 50 mit großem Durchmesser aufweist. Der Abschnitt 48 ist im Durchmesser an den Außendurchmesser, des Funktionselements 20 angepaßt und weist eine axiale Länge auf (in Achsrichtung 68), die zumindest im wesentlichen der axialen Länge des Funktionselements 20 entspricht. Der Innendurchmesser des Abschnittes 50 der abgesetzten Bohrung 46 entspricht zumindest im wesentlichen dem Außendurchmesser der Vertiefung 44 des tellerartigen Teils und weist eine axiale Länge auf, die der Höhe des Hilfsfügeteils 22 abzüglich dessen Blechdicke entspricht.

Die Anbringung dieser Funktionselementanordnung 18 am Bauteil 10 geht aus den Zeichnungen der Fig. 5B bis 5D hervor. Auch hier kommt ein Setzkopf 54 zur Anwendung mit einem Niederhalter 56 und einem Stempel 58, jedoch mit der Besonderheit, daß hier ein vorlaufender Lochstempel 59 koaxial zum Stempel 58 angeordnet ist.

Bei der Anbringung des Funktionselements 20 am Bauteil 10 wird das Hilfsfügeteil 22 auf einer Matrize 62 abgestützt, die in einem unteren Werkzeug 66 untergebracht ist. Die genaue Form der hier verwendeten Matrize 62 ist in der oben genannten europäischen Patentanmeldung beschrieben und wird hier nicht im Detail erneut erläutert. Es ist aber darauf hinzuweisen, daß die verwendete Matrize 62 einen Ringvorsprung in Form eines sogenannten Formlochabsatzes 63 aufweist, der in diesem Beispiel den Bodenbereich 44 des Hilfsfügeteils 22 abstützt und beim Schließen der Presse und bei der nach unten gerichtete Bewegung des Lochstempels 59 ermöglicht, daß dieser einen Stanzbutzen 84 entsprechend der Fig. 5D aus dem Hilfsfügeteil herausstanzt. Der Ringvorsprung 63 befindet sich in diesem Beispiel am oberen Stirnende eines Formvorsprunges 70 der Matrize 62.

Das Hilfsfügeteil 22 wird hier durch den Bohrungsabschnitt 50 im Bauteil 10 zentriert. Zur Zentrierung im unteren Werkzeug 66 könnte die Matrize als Teleskopmatrize 62 ausgeführt werden mit einem äußeren nach oben vorgespannten Zylinder (nicht gezeigt), dessen innere Wand die gezeigte Matrize 62 umfaßt und in Fig. 5B über die Fläche 76 der Matrize 62 nach oben vorsteht und mit der radial äußeren Wand des Hilfsfügeteils 22 zusammenarbeitet. Beim Schließen der Presse, d.h. beim Übergang aus der Position gemäß Fig. 5B bzw. Fig. 5C in die Fig. 5D würde dann dieser äußere Zylinder zurückweichen, bis seine obere Stirnseite bündig mit der oberen Seite des Werkzeugs 66 liegt. Auch hier wird der Randbereich 40 des Hilfsfügeteils 22 auf der Stützfläche 76 der Matrize 62 abgestützt, wobei die Matrize 62 gegenüber dem Werkzeug 66 um die Blechstärke des Hilfsfügeteils 22 zurückversetzt ist.

Der Setzkopf 46 und die Matrize 62 können wie bisher erläutert in ein Preßwerkzeug eingebaut werden, können aber auch ebenso von einem Roboter getragen oder in ein andersartiges Werkzeug eingebaut werden.

Bei der Anbringung des Funktionselements 20 und des Hilfsfügeteils 22 an einem Bauteil in einer Presse wird diese zunächst geschlossen, so daß der Niederhalter 56 das Bauteil 10 gegen die obere Stirnfläche des unteren Werkzeuges 66 drückt (Fig. 5B). Bei der weiteren Schließbewegung der Presse wird der Vorlochstempel 59 mit dem Stempel 58 nach unten gedrückt und paßt durch den Gewindezylinder des Funktionselements 20 hindurch und kommt im Zustand gemäß Fig. 5C zur Anlage an den Bodenbereich 44 des Hilfsfügeteils 22. Während dieser Bewegung bewegt sich die Stirnfläche des Stempels 58 gegen das in Fig. 5B obere Stirnende des Funktionselements 20 und drückt diese teilweise in den Bohrungsabschnitt 48 des Bauteils 10. Bei der weiteren Schließbewegung der Presse stanzt der Vorlochstempel 59 den Stanzbutzen 48 aus dem Bodenbereich des tellerartigen Hilfsfügeteils 22 heraus. Diese wird über eine mittlere Bohrung 61 der Matrize entsorgt. Gleichzeitig drückt der Ringvorsprung 63, d.h. der Formlochabsatz der Matrize 62, den Randbereich der Lochung des nunmehr gelochten Hilfsfügeteils 40 nach oben und radial nach außen, so daß dieser Randbereich in die Hinterschneidungen 140 der Ringwand des Funktionselements 20 hineingedrückt wird. Diese Hinterschneidungen 140 sind bei einem Hohlkörperelement dieser Art durch sich radial erstreckende Vorsprünge gebildet, die bei der Herstellung der Elemente bei der Herstellung der Vertiefungen 142 in der unteren Stirnseite 144 des Mutterelements entstehen. Das heißt, daß durch Ausbildung der sich radial erstreckenden Vertiefung 142 mittels eines Kaltschlagverfahrens radial nach innen gerichtete Vorsprünge an den entsprechenden Stellen gebildet werden, die wiederum die Hinterschneidungen 140 bilden. Der Formschluß zwischen dem Hilfsfügeteil und dem Mutterelement im Bereich der Hinterschneidungen 140 und der Vertiefungen 142 stellt sicher, daß das Mutterelement gegenüber dem Hilfsfügeteil drehfest ist.

Um den Formlochabsatz 63 herum befinden sich, wie in dem europäischen Patent 0 759 510 näher beschrieben, mehrere Nasen, die den Übergang in die Stirnseite des Vorsprungs 70 überbrücken und für eine besonders sichere Anbringung des Funktionselements 20 an das Hilfsfügeteil 22 im Bereich des Einformabschnitts 30 sorgen. Dies ist bei dem Bezugszeichen 65 in Fig. 5E gezeigt, wo das Blech des Hilfsfügeteils durch eine solche Nase eingedrückt ist.

Nach der Entfernung des zusammengebauten Teils aus der Presse gestaltet sich dieses genau wie in Fig. 5E dargestellt.

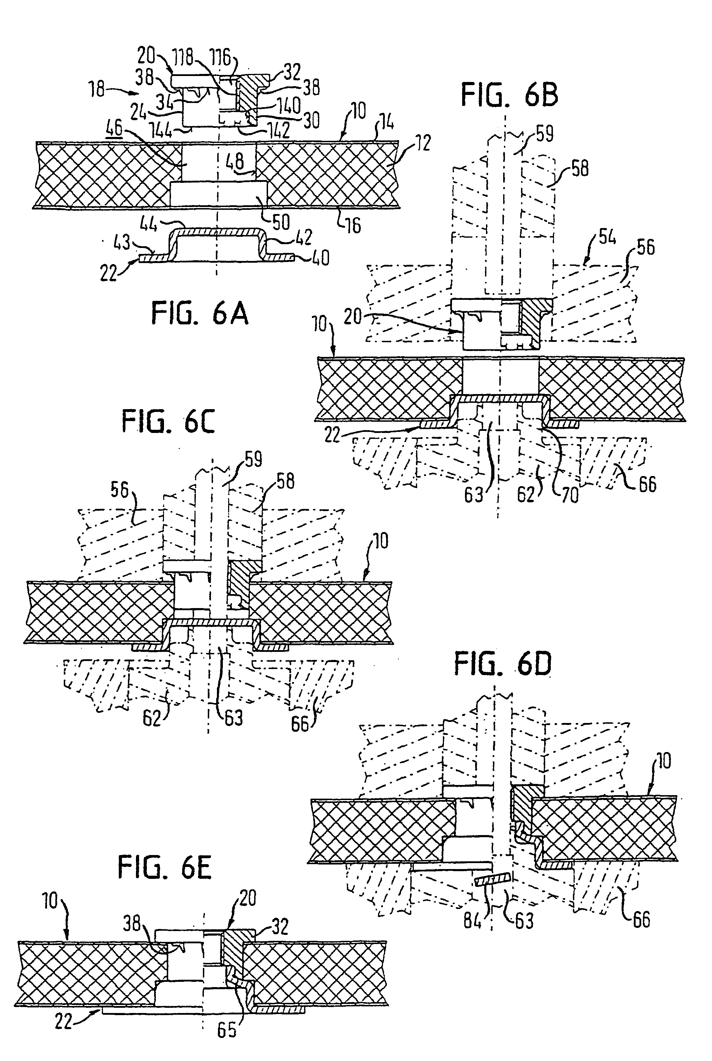

Es ist hier anzumerken, daß das Mutterelement 20 in diesem Beispiel keine Formmerkmale aufweist, die direkt mit dem Bauteil zusammenwirken und für eine Verdrehsicherung sorgen können. Es wäre allerdings möglich, das Mutterelement 20 nicht kreisrund in Draufsicht auszubilden, sondern polygonal oder mit einer genuteten Oberfläche und durch den Eingriff dieser Mantelfläche des Mutterelementes im Bauteil 10 für eine Verdrehsicherung zu sorgen. Außerdem wäre es möglich, das Element mit einem Flansch vorzusehen, wie nachfolgend näher erläutert wird anhand der Fig. 6.

Bei diesem Beispiel wird die Verdrehsicherung allein durch einen Klebstoff gebildet, der auf die Oberflächenbereiche des Mutterelementes 20, die in Berührung mit dem Bauteil 10 und/oder mit dem Hilfsfügeteil 22 gelangen, und/oder auf den Oberflächenbereichen des Hilfsfügeteils 22 versehen wird, die mit dem Bauteil 10 und/ oder dem Mutterelement in Berührung kommen. Das heißt, daß bei diesem Beispiel der Klebstoff die einzige Verdrehsicherungseinrichtung bildet.

In der Einschraubsituation wird das weitere Bauteil an der oberen Seite des Zusammenbauteils gemäß Fig. 5E angeschraubt mittels einer Schraube, die in den Gewindezylinder des Mutterelements 20 hineingeschraubt wird. Das heißt, daß das weitere Bauteil (nicht gezeigt) und das erstgenannte Bauteil 10 durch Kompression zwischen dem Randbereich 40 des Hilfsfügeteils 22 und dem Kopf der entsprechenden Schraube gehalten werden.

Fig. 6A zeigt eine weitere Funktionselementanordnung gemäß der vorliegenden Erfindung, die der Funktionselementanordnung 18 gemäß Fig. 5 sehr ähnlich ist. Der Unterschied liegt nur darin, daß hier das Mutterelement 20 mit einem Flansch 32 und mit Verdrehsicherungsnasen 38 entsprechend Fig. 1 versehen wird. Die Verdrehsicherungsnasen 38 erstrekken sich hier (wie bei dem Beispiel der Fig. 1) erhaben, sowohl in radialer Richtung an der Auflagefläche 34, als auch in axialer Richtung entlang der Mantelfläche des Mutterelements 20. Das Verfahren zur Anbringung der Funktionselementanordnung 18 gemäß Fig. 6 an einem Bauteil 10 gestaltet sich genauso wie das Verfahren gemäß Fig. 5. Die Ausbildung des Mutterelements 20 im Bereich der Nietverbindung und des Hilfsfügeteils ist identisch zu der in Fig. 5 beschriebenen Anordnung und daher erfolgt die Nietverbindung im Bereich des Einformabschnitts in identischer Weise zu der Nietverbindung, die in der europäischen Anmeldung mit der Veröffentlichungsnummer 0 759 510 beschrieben wird.

Auch bei dieser Funktionselementanordnung ergibt sich der besondere Vorteil, daß beim Anbringen der Funktionselementanordnung der axiale Abstand zwischen der Auflagefläche 34 und der Oberseite des Randbereiches 40 des Hilfsfügeteils 22 genau vorgegeben wird und daher auch genau an das Bauteil angepaßt ist. Auch bei dieser Ausführungsform ergibt sich der weitere Vorteil, daß man für einen breiten Bereich von Bauteildicken nur ein Mutterelement 20 braucht, da die Anpassung an die unterschiedlichen Dicken unterschiedlicher Bauteile durch entsprechende Auswahl der Höhe des erforderlichen Hilfsfügeteils erreicht werden kann. Auch hier ist es dann notwendig, mit einer an die Höhe des Hilfsfügeteils angepaßten Matrize zu arbeiten und die Vorlochung bzw. Vorbohrung des Bauteils 10 entsprechend vorzunehmen.

Bei der Ausführungsform gemäß Fig. 6 kann das weitere Bauteil entweder an der Oberseite des erstgenannten Bauteils 10 oder an der Unterseite desselben angeschraubt werden. Es ist lediglich erforderlich, eine entsprechend der gewählten Anordnung abgesetzten Bohrung im weiteren Bauteil vorzusehen nach Art der bisherigen Beschreibung.

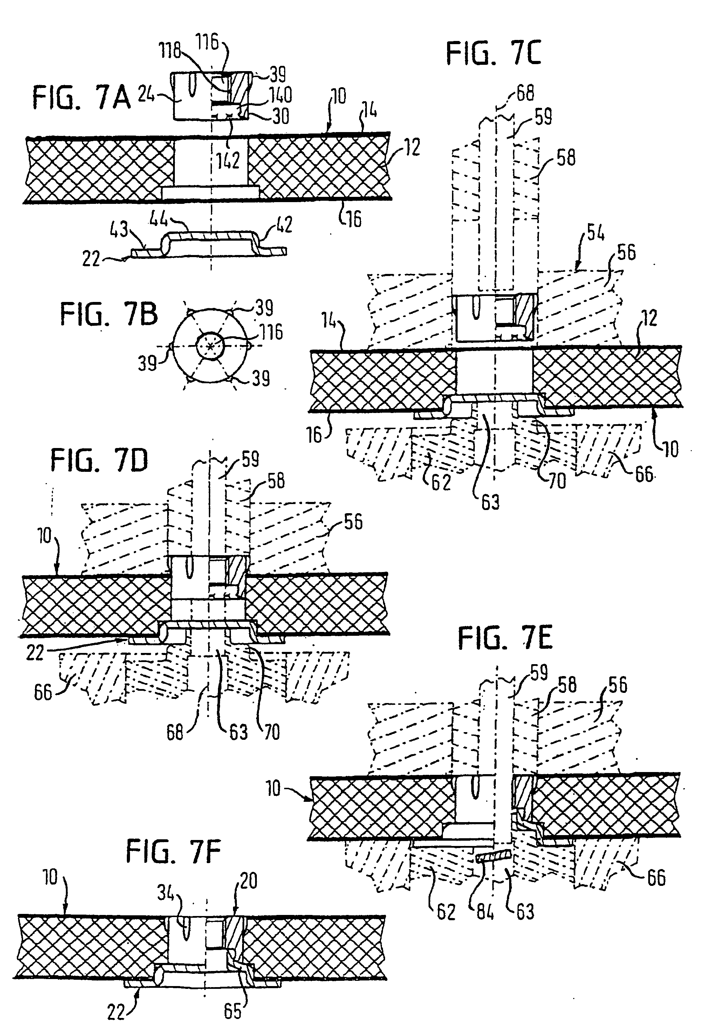

Fig. 7 zeigt eine weitere Ausführungsvariante basierend auf dem RSU-Element der Firma Profil Verbindungstechnik GmbH & Co. KG und ist im Grunde genommen der Ausführungsvariante gemäß Fig. 5 sehr ähnlich. Unterschiedlich ist hier nur, daß sich in axiale Richtung erstreckende Rippen 39 an der Mantelfläche des Mutterelementes 20 vorgesehen sind, die sich beim Einsetzen des Elementes in das Bauteil 10 dort entsprechende Nuten bilden und somit auf diese Weise für die Verdrehsicherung sorgen. Ansonsten gilt die Beschreibung der Fig. 5 und ggf. der Fig. 6 für die Ausführungsform gemäß Fig. 7 genauso wie bisher, was durch die Verwendung der entsprechenden Bezugszeichen zum Ausdruck kommt, so daß diese Details nicht nochmals erläutert werden müssen.

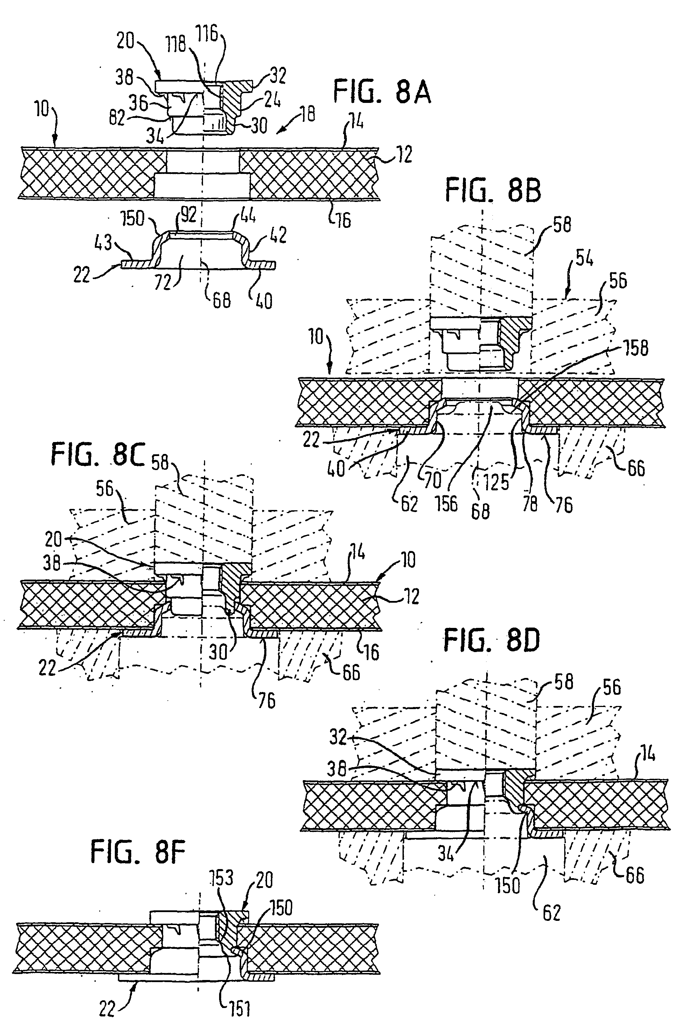

Fig. 8 zeigt nun eine weitere erfindungsgemäße Variante einer Funktionselementanordnung 18, bei der das Funktionselement 20 eine abgewandelte Form einer sogenannten RND-Mutter der Firma Profil Verbindungstechnik GmbH & Co. KG darstellt und Bereich des Nietabschnitts 30 entsprechend dem europäischen Patent 0 539 793 ausgebildet ist.

Während bei einem herkömmlichen RND-Element der Nietabschnitt 30 unmittelbar am Flansch 32 anschließt, wird hier das Hohlkörperelement 20 mit einem Zwischenabsatz 36 versehen. Das heißt, die Nietverbindung findet auch hier zwischen dem Nietabschnitt 30 und der zwischen diesem und dem Zwischenabsatz 36 sich befindlichen Ringschulter 82 statt, während die Verdrehsicherungsnasen 38 sich im Übergangsbereich zwischen dem Flansch 32 und dem Zwischenabsatz 36 befinden. Die Verdrehsicherungsnasen 38 erstrecken sich, wie bei der Ausführung gemäß Fig. 1 beschrieben, in radiale Richtung erhaben an der Auflagefläche 34 auf der Unterseite des Flansches 32 in Fig. 8 und in axialer Richtung erhaben am Zwischenabsatz 36 entlang.

Während bei einem herkömmlichen RND-Element die sich radial erstrekkenden Bereiche der Verdrehsicherungsnasen in eine ringförmige Vertiefung unterhalb des Flansches 32 sich befinden, ist dies hier nicht erforderlich, da die Nietverbindung zum Blechteil nicht unterhalb des Flansches 32, sondern unterhalb des Zwischenabsatzes 36 erfolgt. Mit anderen Worten weist der Flansch 32 in diesem Beispiel keine ringförmige Vertiefung im Bereich des Überganges vom Zwischenabsatz 36 auf, obwohl dies möglich wäre. Das Hilfsfügeteil 22 ist auch in diesem Beispiel tellerartig ausgebildet und weist einen ebenen Randbereich 40, eine Vertiefung 42 und einen Bodenbereich 44 mit Vorlochung 92 auf. Darüber hinaus ist der Randbereich 150 der Vorlochung 92 konusförmig hochgestellt entsprechend der Blechvorbereitung, die üblicherweise für ein RND-Element nach dem europäischen Patent 0 539 793 vorgesehen ist. Diese konusförmige Hochstellung des Bodenbereiches 44 kann während der Herstellung des tellerartigen Teils beispielsweise bei der Vorlochung des tellerartigen Teils erfolgen.

Die Anbringung der Funktionselementanordnung am Bauteil 10 erfolgt auch hier unter Anwendung eines Setzkopfes 54 mit Niederhalter 56 und Stempel 58 sowie einer Matrize 62, die in einer Bohrung eines unteren Werkzeuges 66 angeordnet ist und dort in axialer Richtung um die Dicke des Randbereiches 40 des Hilfsfügeteils 22 zurückversetzt ist. Die Matrize weist einen Formvorsprung 70 auf, der in den Aufnahmeraum 72 des Hilfsfügeteils 22 hineinpaßt und für eine Zentrierung des Hilfsfügeteils 22 bezüglich der Matrize sorgt. Die zylindrische Wand 152 des Formvorsprungs 70 geht über einen Radius 78 in die Abstützfläche 76 über, wobei der Radius 78 so gewählt wird, daß ein kleiner Freiraum 78 gegenüber dem Hilfsfügeteil im Übergangsbereich vorliegt. Dies sorgt einerseits dafür, daß das Hilfsfügeteil stets satt auf der Auflagefläche 76 aufliegt und erleichtert andererseits die Lösung des Hilfsfügeteils von der Matrize bei Öffnung der Presse.

Die Anordnung innerhalb der Presse kann genauso erfolgen wie bisher. Das heißt, der Setzkopf 56 kann am oberen Werkzeug der Presse oder an der Zwischenplatte angebracht werden, wobei die Matrize dann an der Zwischenplatte bzw. am unteren Werkzeug der Presse anzubringen ist. Der Setzkopf könnte umgekehrt aber auch am unteren Werkzeug der Presse oder an der Zwischenplatte angebracht werden, während die Matrize dann ebenfalls umgekehrt an der Zwischenplatte der Presse bzw. am oberen Werkzeug der Presse anzubringen wäre. Auch kann hier ein Roboter oder ein andersartiges Werkzeug zur Anbringung des Elementes benutzt werden.

Der Formvorsprung 70 weist in der Mitte einen zylindrischen Vorsprung 156 mit einem kleineren Außendurchmesser als der Innendurchmesser der Vorlochung 92 auf, wobei dieser zylindrische Vorsprung 156 über geneigte, sanft gerundete Flächen in eine Ringschulter 158 des Formvorsprungs 70 übergeht, die senkrecht zur Längsachse 68 steht.

Während Fig. 8B die Anordnung zeigt, als sich die Presse schließt, zeigt Fig. 8C einen Zwischenzustand der Anbringung des Hohlkörperelementes 20 am Bauteil bzw. am Hilfsfügeteil, bei dem das Bauteil 10 zwischen dem Niederhalter 56 und dem unteren Werkzeug 66 der Presse festgehalten wird und das Hilfsfügeteil 22 zwischen der Abstützfläche 76 der Matrize und der unteren Decklage 16 des Bauteils in Anlage gegen diese untere Decklage gedrückt wird. Der Stempel 48 hat in diesem Zustand der Schließung der Presse das Hohlkörperelement 20 so weit nach unten gedrückt, daß sich der Nietabschnitt 30 innerhalb der Vorlochung 92 des Hilfsfügeteils 22 befindet. Die Verdrehsicherungsnasen 38 sind an eine Stelle gelangt, in der sie gerade anfangen, die obere Decklage 14 des Bauteils 10 zu verformen.

Im voll geschlossenen Zustand der Presse sind, wie aus Fig. 8D ersichtlich, die Verdrehsicherungsnasen 38 vollständig in die obere Decklage 14 hineingedrückt, wobei die ringförmige Auflagefläche 34 unterhalb des Flansches 32 an der oberen Decklage 14 satt anliegt. Die Nietverbindung zwischen dem Nietabschnitt 30 und dem Hilfsfügeteil 22 ist nunmehr entsprechend dem Klemmlochnietverfahren gemäß europäischem Patent 0 539 793 fertiggestellt. Dabei wurde der konusförmig aufgestellte Randbereich 150 des Hilfsfügeteils etwas flach gepreßt, wodurch eine extrem hohe Lochlaibung zwischen dem Rand der Vorlochung 92 und dem Nietabschnitt des Hohlkörperelementes 20 zustande kommt.

Weiterhin wurde das freie Ende des ursprünglich zylindrischen Nietabschnittes 30 radial nach außen zu einem Nietbördel 151 geformt, so daß der Randbereich der Vorlochung in einer ringnutförmige Aufnahme 153 gefangen gehalten wird, die sich während der Verformung zwischen der Ringschulter 82 und der radial nach außen verformten Stirnende des Nietabschnitts, d.h. dem Nietbördel 151 ausbildet.

Das fertiggestellte Zusammenbauteil nach Entfernung auch der Presse wird nunmehr in Fig. 8E gezeigt.

Bei der Anbringung eines weiteren Bauteils am erstgenannten Bauteil 10 wird dieses nunmehr unterhalb des Bauteils 10 in Fig. 8E angebracht (nicht gezeigt) und weist zu diesem Zweck eine ringförmige Vertiefung auf, in der der Randbereich 40 des Hilfsfügeteils 22 aufgenommen wird. Die axiale Tiefe dieser Ringvertiefung soll vorzugsweise der Dicke des Randbereiches 40 des Hilfsfügeteils entsprechen. Auf eine solche Vertiefung kann jedoch verzichtet werden, wenn der Randbereich 40 ausreichend groß bemessen wird, so daß die sich zwischen diesem und dem Bauteil 10 ergebenden Druckkräfte unterhalb des kritischen Wertes liegen, bei dem ein Nachgeben des Bauteils 10 zu befürchten ist.

Bei diesen Ausführungsbeispiel dienen die Nasen 38 der Verdrehsicherung. Ergänzend oder alternativ dazu können alle Flächen des Hohlelementes 20, die in Berührung mit dem Bauteil 10 und/oder dem Hilfsfügeteil 22 gelangen und/oder alle Flächenbereiche des Hilfsfügeteils 22, die in Berührung mit dem Bauteil 10 und/oder dem Hohlkörperelement 20 gelangen, mit einem Klebstoff versehen werden, vorzugsweise ein an sich bekannter Trockenklebstoff, der bei Druckausübung seine klebende Funktion erfüllt. Die Verwendung eines solchen Klebstoffes hat darüber hinaus den Vorteil, daß die Verbindung zwischen der Funktionselementanordnung und dem Bauteil wasserdicht ist.

Auch hier kann das Hohlkörperelement 20 und/oder das Hilfsfügeteil 22 je nach verwendetem Werkstoff mit einer oder mehreren Beschichtungen versehen werden, die sicherstellen, daß eine korrosive Wirkung zwischen dem Hohlkörperelement bzw. dem Hilfsfügeteil und dem Bauteil 10 nicht auftritt.

Bei der Anordnung gemäß Fig. 8 ist es aber auch möglich, ein weiteres Bauteil an der Oberseite des in Fig. 8E gezeigten Zusammenbauteils anzubringen. Das Bauteil muß dann eine entsprechende ringförmige Vertiefung aufweisen, um den Flanschbereich 32 des Hohlkörperelements 20 aufzunehmen, wobei die axiale Tiefe dieser Ringvertiefung entsprechend der axialen Höhe des Flansches 32 oder etwas tiefer ausgebildet sein kann.

Auch hier besteht der Vorteil, daß man mit einem Element eine breite Palette von Bauteildicken abdecken kann. Es ist lediglich erforderlich, die Höhe des Hilfsfügeteils 22 entsprechend der jeweiligen Bauteildicke anzupassen und die Matrize 62 entsprechend auszuführen.

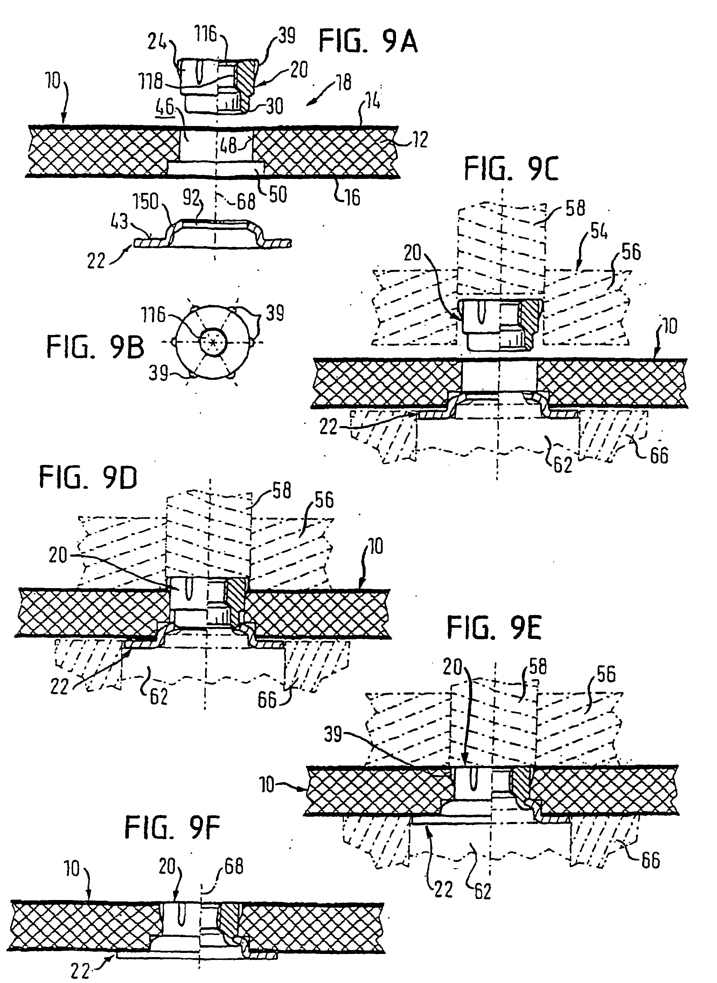

Fig. 9 zeigt nun eine weitere erfindungsgemäße Variante einer Funktionselementanordnung, die ebenfalls auf dem Klemmlochnietverfahren gemäß europäischem Patent 0 539 739 B1 basiert, wobei die Ausbildung des Funktionselements 20 und des Hilfsfügeteils 22 im Nietbereich identisch ist mit der Ausbildung in der Ausführungsvariante gemäß Fig. 8.

Abweichend zur Darstellung gemäß Fig. 8 ist das Hohlkörperelement 20 bei der Ausführung gemäß Fig. 9 nicht mit einem Flansch versehen, sondern statt dessen mit sich in axialer Richtung 68 des Hohlkörperelements 20 erstreckenden Nasen, die beim Einsetzen in das Bauteil 10 entsprechende axial gerichtete Nuten in dieser ausbilden und hierdurch für die erforderliche Verdrehsicherheit sorgen.

Die Verbindung zum Hilfsfügeteil 22 erfolgt hier genauso wie bei der Funktionselementanordnung gemäß Fig. 8 und wird hier nicht nochmals erläutert, da die bisherige Beschreibung auch hier gilt.

Abweichend zur Anordnung gemäß Fig. 8 ist es hier nur möglich, das weitere Bauteil oberhalb des Bauteils 10 anzubringen, da die sich in Längsrichtung des Hohlkörperelements erstreckenden Verdrehsicherungsnasen 160, die eine allgemein abgerundete Form haben, im Regelfall keinen ausreichenden Widerstand leisten würden, um die Anbringung des weiteren Bauteils unterhalb des Bauteils 10 zu ermöglichen.

Da bei Anbringung dieses Elementes die Oberseite des Hohlkörperelements 20 bündig mit der oberen Decklage 14 liegt, braucht das anzuschraubende Bauteil keine besondere Vorbereitung, sondern muß lediglich eine Bohrung aufweisen, die die Einführung einer Schraube ermöglicht, die mit dem Innengewinde des Mutterelementes verschraubt wird.

Auch hier besteht der Vorteil, daß man mit einem Element eine breite Palette von Bauteildicken abdecken kann. Es ist lediglich erforderlich, die Höhe des Hilfsfügeteils 22 entsprechend der jeweiligen Bauteildicke anzupassen und die Matrize 62 entsprechend auszuführen.

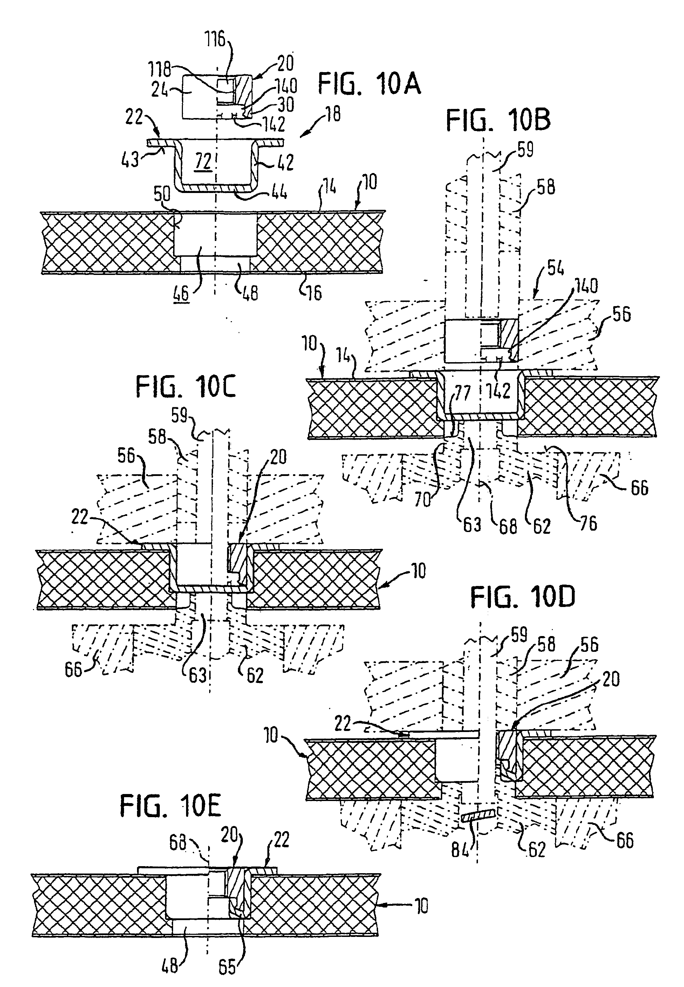

Fig. 10 zeigt nunmehr eine weitere Ausführungsvariante einer erfindungsgemäßen Funktionselementanordnung mit einem Funktionselement 20 in Form eines als Mutter ausgebildeten Hohlkörperelements mit einem Innengewinde und mit einem tellerartigen Hilfsfügeteil 22.

Das Hohlkörperelement 20 ist hier identisch mit dem Hohlkörperelement der Fig. 5, so daß die dort angegebene Beschreibung auch hier gilt.

Das tellerförmige Hilfsfügeteil 20 ist jedoch abweichend zum Hilfsfügeteil 22 der Fig. 5 ausgelegt und wird mit dem Hohlkörperelement 20 von der gleichen Seite in das Bauteil 10 eingesetzt, anstelle von der entgegengesetzten Seite wie bei Fig. 5. Die axiale Tiefe der Vertiefung 44, d.h. der Aufnahmekammer 72, ist in diesem Beispiel identisch mit der axialen Länge des Hohlkörperelements 20 gewählt. Die hier gezeigte Ausführung ist entsprechend Fig. 5 zur Anwendung mit einem vorlaufenden Lochstempel 59 ausgebildet.

Die Anbringung der Funktionselementanordnung 18 gemäß Fig. 10 wird nunmehr anhand der Fig. 10B bis 10D näher erläutert.

Die Anbringung erfolgt auch hier unter Anwendung eines Setzkopfes 54 und einer Matrize 62. Der Setzkopf 54 umfaßt einen Niederhalter 56 mit einer Bohrung, die zur Aufnahme des Hohlkörperelements 20 ausgelegt ist, d.h. einen Innendurchmesser aufweist, der dem Außendurchmesser des Hohlkörperelements 20 zumindest im wesentlichen entspricht und mit einem Stempel 58 mit einem koaxial darin angeordneten Vorlochstempel 59. Das Bauteil 10 weist in diesem Beispiel ebenfalls eine abgesetzte Bohrung 46 auf mit einem Abschnitt 50 mit einem größeren Durchmesser, der dem Außendurchmesser der Vertiefung 44 des Hilfsfügeteils 22 entspricht, und mit einem Abschnitt 48 mit einem kleineren Durchmesser, der zur Aufnahme des Formvorsprunges 70 der Matrize 62 dimensioniert ist. Die axiale Länge des Bohrungsabschnittes 50 entspricht der axialen Höhe des Hilfsfügeteils 22 abzüglich dessen Blechdicke, während die axiale Länge des Bohrungsabschnittes 48 der axialen Höhe des Formvorsprungs 70 zwischen der Ringschulter 77 und der ringförmigen Abstützfläche 76 entspricht. Bei diesem Beispiel werden das Hohlkörperelement 20 und das Hilfsfügeteil 22 in das Bauteil 10 auf der Seite des Bauteils 10 eingesetzt, wo der Bohrungsabschnitt 50 mit größerem Durchmesser sich befindet.

Oberhalb des Formvorsprungs 70 befindet sich bei der Matrize 62 der Fig. 10 ein Ringvorsprung 63, der einen Innendurchmesser aufweist, der dem Außendurchmesser des Vorlochstempels 59 entspricht.

Beim Schließen der Presse durchstanzt der Vorlochstempel 59 den Bodenbereich 44 des Hilfsfügeteils 22, und der Standzbutzen 84 wird durch die mittlere Bohrung der Matrize entsorgt, die im Bereich unterhalb des Formvorsprungs 70 einen größeren Durchmesser aufweist. Unmittelbar nach dem Durchstanzen des Bodenbereiches 44 des Hilfsfügeteils 22 verformt der zylindrische Vorsprung 63 den Randbereich des durchstanzten Loches radial nach außen und nach oben, so daß der formschlüssige Eingriff gemäß Fig. 10D bzw. Fig. 10E entsteht. Hierdurch wird das Mutterelement kraft- und formschlüssig mit dem Hilfsfügeteil verbunden und zwar auch mit einer Verdrehsicherung im Bereich der ineinander greifenden Flächen des Hilfsfügeteils 22 und des Mutterelementes 20.

Bei dieser Ausführungsform wird das Hilfsfügeteil 22 auf den mit dem Bauteil 10 und/oder dem Hohlkörperelement 20 in Berührung kommenden Flächen mit einem Klebstoff versehen. Dieser Klebstoff, auch hier vorzugsweise ein Trockenklebstoff, der unter Druck aktiviert wird, bildet eine Klebeverbindung zwischen dem Hilfsfügeteil und dem Bauteil, die eine Einrichtung zur Gewährleistung der Verdrehsicherung darstellt. Eine Verdrehsicherung zwischen dem Hohlkörperelement 20 und dem Hilfsfügeteil entsteht ohnehin durch das Ineinandergreifen des Hilfsfügeteils und des Hohlkörperelements im Bereich der stirnseitig im Hohlkörperelement vorhandenen radialen Vertiefungen 142 und im Bereich der durch diese gebildeten Hinterschneidungen 140. Falls an den sich berührenden Flächen des Hohlkörperelements 20 und des Hilfsfügeteils 22 Klebstoff vorgesehen ist, dient auch dieser einer zusätzlichen Verdrehsicherung in diesem Bereich.

Der Außendurchmesser des zylindrischen Vorsprungs 63 der Matrize ist größer als der Außendurchmesser des Gewindezylinders, damit beim Anschrauben eines weiteren Bauteils an das Bauteil 10 die entsprechende Schraube von der Unterseite in Fig. 10E kommend in das Gewinde hineingeschraubt werden kann.

Ein besonderer Vorteil dieser Anordnung liegt darin, daß mit einem Element und einem Hilfsfügeteil 22 eine Verbindung mit Bauteilen unterschiedlicher Dicke zustande gebracht werden kann. Es ist lediglich erforderlich, die axiale Länge des Bohrungsabschnittes 48 entsprechend zu wählen und die konkrete Auslegung der Matrize dieser Länge anzupassen. Es ist streng genommen nicht erforderlich, daß die axiale Tiefe des Innenraumes 72 des Hilfsfügeteils 22 genau der axialen Länge des Hohlkörperelements 20 entspricht. Diese Längen können ggf. voneinander abweichend gewählt werden. Auf jeden Fall wird durch die gezeigte Anordnung sichergestellt, daß beim Anbringen der Funktionselementanordnung am Bauteil 10 stets eine genau kontrollierte Nietverbindung und eine genau vorgegebene Einbausituation eingehalten wird. Die vom Niederhalter 56 auf das Hilfsfügeteil 22 ausgeübte Kraft stellt sicher, daß der Randbereich 40 des Hilfsfügeteils 22 satt an der oberen Decklage 14 des Bauteils 10 anliegt. Bei der Einpreßbewegung des Hilfsfügeteils, das hier durch den Bohrungsabschnitt 50 zentriert wird, wird das Bauteil 76 auf der Abstützfläche 76 der Matrize bzw. der mit diesem bündig angeordneten Oberfläche des Werkzeuges 66 abgestützt. Nach Fertigstellung der Nietverbindung im Bereich des Einformabschnitts 30 wird die unterste Stelle des Stempels 58 durch die axiale Höhe des Verbundes bestehend aus dem Formvorsprung 70, die axiale Dicke des Hilfsfügeteils 22 im Bereich der Nietverbindung und der axialen Länge des Hohlkörperelements 20 bestimmt. Mit anderen Worten wird mit dieser Anordnung sichergestellt, daß die vom Stempel ausgeübte Preßkraft stets ausreicht, um das Hilfsfügeteil formschlüssig mit dem Element zu vernieten. Eine darüber hinausgehende Verformung, die unerwünscht wäre, weil sie zu einer Verformung des Gewindezylinders führen wird, wird dadurch verhindert, daß die maximale Kraft, die vom Stempel auf das Element ausgeübt werden kann, so bemessen ist, daß sie zu keiner permanenten Verformung des zylinderförmigen Bereiches führt, die durch den Formvorsprung der Matrize, den umgeformten Bodenbereich des Hilfsfügeteils und den Körper des Hilfsfügeelementes gebildet ist.

Bei der Ausführung gemäß Fig. 10 wird das weitere anzuschraubende Bauteil auf der Unterseite des Zusammenbauteils gemäß Fig. 10E angeschraubt, wobei hier keine besondere Vorbereitung des weiteren Bauteils erforderlich ist. Es muß nur ein Durchgangsloch für die verwendete Schraube aufweisen.

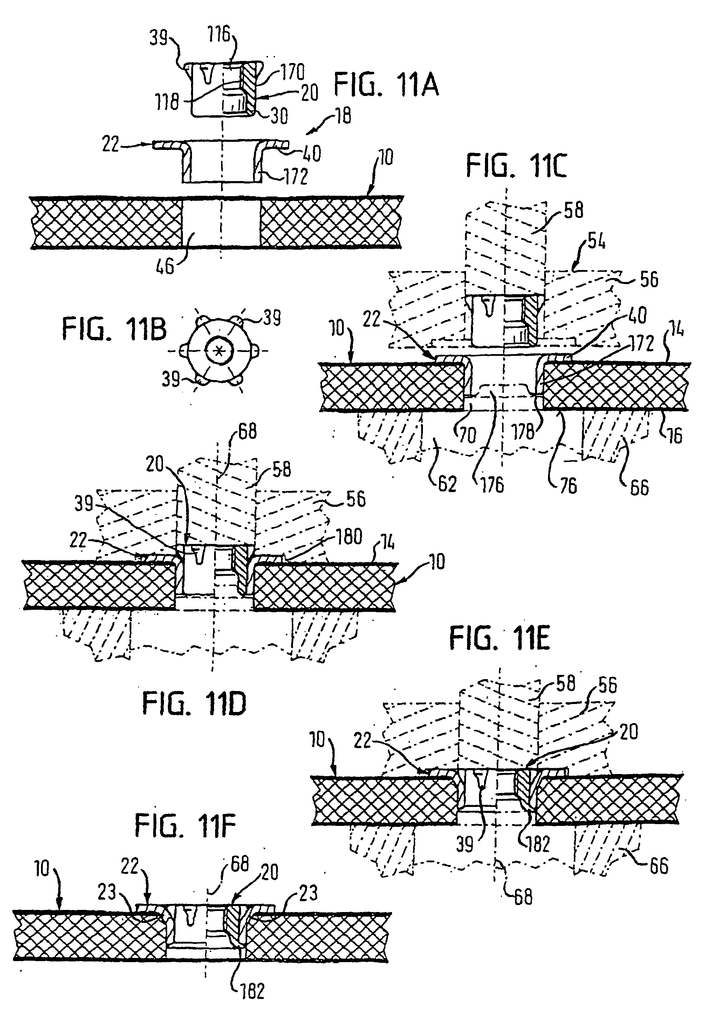

Fig. 11 zeigt nunmehr eine weitere Ausführungsvariante einer erfindungsgemäßen Funktionselementanordnung, bei der ein neuartiges Element 20 zur Anwendung gelangt.

Das Element 20 weist nämlich bei diesem Ausführungsbeispiel einen wesentlichen, zylindrischen Körper 170 auf, mit einem Innengewinde 118 und einem Nietabschnitt 30 an einem Ende. Am anderen Ende des Körpers 170 des Hohlkörperelements 20, d.h. an dem dem Nietabschnitt 30 abgewandten Ende weist dieser in diesem Beispiel sechs radial angeordnete Verdrehsicherungsnasen 39 auf, die im Querschnitt eine abgerundete Form aufweisen, wie aus Fig. 11B ersichtlich, die sich im oberen Bereich des Hohlkörperelements in erhabener, jedoch verjüngender Form axial entlang dieses erstrecken. Der Funktionselement 20 wird hier mit einem Hilfsfügeteil 22 verwendet, das zwar auch als tellerartiges Element bezeichnet werden kann, bei der jedoch in diesem Beispiel kein Bodenbereich vorgesehen ist. Das heißt, das Hilfsfügeteil 22 besteht in diesem Ausführungsbeispiel aus einem rohrförmigen Abschnitt 172 und dem ringförmigen Randbereich 40, wobei der Innendurchmesser des rohrförmigen Bereiches 172 dem Außendurchmesser des Hohlkörperelements 20 entspricht. Auch hier wird die Funktionselementanordnung 18, d.h. sowohl das Hohlkörperelement 20 als auch das Hilfsfügeteil 22, von einer Seite in das Bauteil 10 eingeführt, das zu diesem Zweck lediglich eine zylindrische, durchgehende Bohrung aufweisen muß mit einem Durchmesser, der dem Außendurchmesser des rohrförmigen Abschnittes 172 entspricht.

Die Fig. 11C bis 11E zeigen, wie die Funktionselementanordnung 18 der Fig. 11 miteinander gefügt und an das Bauteil 10 angebracht wird.

Im Stadium der Fig. 11C befindet sich das Hilfsfügeteil 22 bereits im Bauteil eingeführt, so daß der rohrförmige Abschnitt 172 sich vollständig innerhalb der Bohrung 46 befindet. Der Randbereich 40 des Hilfsfügeteils liegt im wesentlichen an der oberen Decklage 14 des Bauteils 10 an. Die untere Decklage 16 des Bauteils 10 liegt auf der Abstützfläche 76 einer Matrize 62, die in eine Bohrung innerhalb eines Werkzeuges 66 angeordnet ist, diesmal mit der Abstützfläche 76 bündig mit der Oberseite des Werkzeuges 66. Die Matrize 62 weist einen Formvorsprung 70 auf, der einen Außendurchmesser aufweist, der im Durchmesser der Bohrung 46 entspricht und in Fig. 11C innerhalb dieser Bohrung angeordnet ist, so daß das Bauteil 10 durch die Matrize 62 genau positioniert ist.

An seinem oberen Ende in Fig. 11C weist der Formvorsprung 70 einen Vorsprung 176 kleineren Durchmessers auf, der über eine konkav gerundete Seitenfläche in eine Ringschulter 178 übergeht. Das Hohlkörperelement 20 befindet sich innerhalb eines Setzkopfes 54, der wie bisher einen Niederhalter 56 und einen Stempel 58 aufweist.

Im Zustand der Fig. 11D drückt der Niederhalter 56, der eine Ringausnehmung 180 aufweist, mit einer axialen Tiefe entsprechend der Dicke des Randbereiches 40 des Hilfsfügeteils auf diesen Randbereich 40 des Hilfsfügeteils 22 und stellt sicher, daß das Hilfsfügeteil in diesem Bereich satt an der oberen Decklage 14 des Bauteils 10 anliegt.

Beim weiteren Schließen der Presse bewegt sich der Stempel weiter nach unten und drückt das Hohlkörperelement 20 vollständig innerhalb des Hilfsfügeteils 22, so daß die Verdrehsicherungsnasen 38 eine entsprechende Verformung des Hilfsfügeteils verursachen und diese wiederum das Bauteil 10 im Bereich der oberen Decklage 14 und im oberen Bereich des Kerns 12 eindrückt, so daß das Hohlkörperelement 20 gegenüber dem Hilfsfügeteil 22 und das Hilfsfügeteil 22 gegenüber dem Bauteil 10 verdrehsicher angeordnet sind. Gleichzeitig mit dem Hineinpressen des Hohlkörperelements 20 drückt der zylindrische Vorsprung 176 der Matrize 62 das Stirnende des Nietabschnitts 30 radial nach außen, so daß diese, wie bei 182 gezeigt, radial nach außen über das untere Stirnende des rohrförmigen Abschnittes 172 des Hilfsfügeteils 22 verformt wird. Hieraus ist ersichtlich, daß das Hohlkörperelement 20 und das Hilfsfügeteil 22 nunmehr unzertrennbar miteinander verbunden sind.

Eine axial weitergehende Bewegung des Hohlkörperelements 20 durch das Hilfsfügeteil 22 hindurch ist nicht möglich, da die Verdrehsicherungsnasen 38 an das Hilfsfügeteil anliegen. Ein Herausziehen des Hohlkörperelements 20 aus dem Hilfsfügeteil 22 in der entgegengesetzten Richtung ist nicht möglich, da der Nietbördel 182 dies verhindert. Die Verdrehsicherung zwischen dem Hohlkörperelement 20 und dem Hilfsfügeteil 22 ist durch den Eingriff der Verdrehsicherungsnasen 39 in den Wandbereich des Hilfsfügeteils 22 sichergestellt. Die Verdrehsicherung der Funktionselementanordnung bestehend aus dem Hohlkörperelement 20 und dem Hilfsfügeteil 22 gegenüber dem Bauteil 10 ist durch den Eingriff der durch die Verdrehsicherungsnasen 38 verformten Wandbereichen 23 des Hilfsfügeteils 22 in das entsprechend verformte Bauteil sichergestellt. Auch hier können die Oberflächenbereiche des Hilfsfügeteils, die mit dem Bauteil 10 und/oder dem Hohlkörperelement in Berührung kommen, mit einem Klebstoff versehen werden, vorzugsweise ein Trockenklebstoff, der bei Druckausübung zur Bildung einer Klebstoffverbindung aktiviert wird.

Auch bei diesem Ausführungsbeispiel kann ein Funktionselement 20 und ein Hilfsfügeteil 22 mit Bauteilen verschiedener Dicke verwendet werden, da es lediglich notwendig ist, die Matrize 62 entsprechend auszubilden.

Auch bei der Ausführungsform gemäß Fig. 11E wird beim Anschrauben eines weiteren Bauteils dieses auf der Unterseite des Zusammenbauteils gemäß Fig. 11F angeschraubt, wofür keine besondere Vorbereitung des Bauteils erforderlich ist.

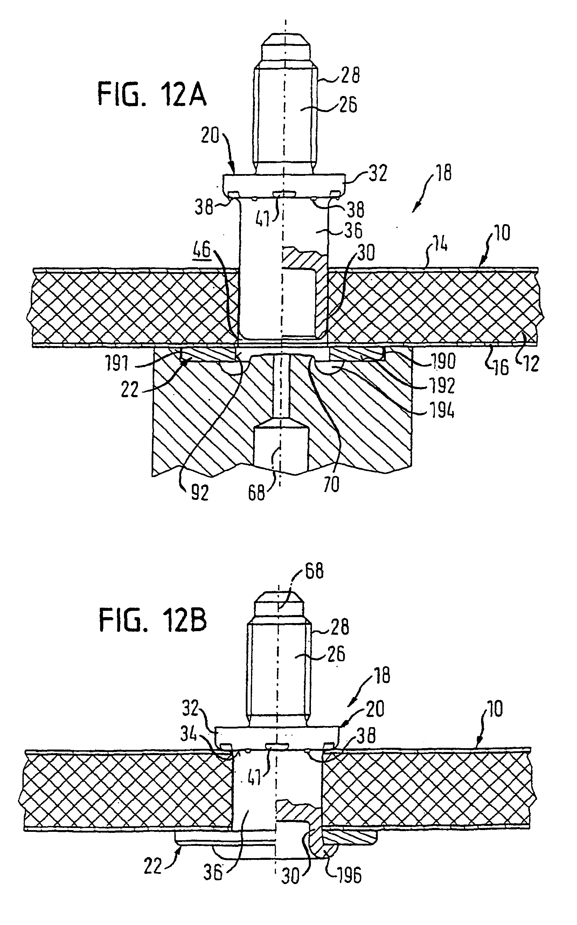

Fig. 12 zeigt nun eine weitere erfindungsgemäße Variante der Funktionselementanordnung. Es handelt sich hier bei dem Funktionselement 20 um eine abgewandelte Ausführung eines SBF-Elementes der Firma Profil Verbindungstechnik GmbH & Co. KG in etwa so, wie in der US-PS 4,459,973 und insbesondere in der US-PS 4,555,838 (Fig. 7) dargestellt ist.

Abweichend von der bisher bekannten Form eines solchen Elementes wird hier zwischen dem Flanschteil 32 und dem Nietabschnitt 30 ein Zwischenabsatz 36 vorgesehen mit einem Außendurchmesser, der dem Außendurchmesser des Nietabschnitts 30 entspricht. Das hier als Bolzenelement realisierte Funktionselement 20 wird in diesem Beispiel mit einem Hilfsfügeteil 22 in Form einer flachen Lochscheibe benutzt, wobei das Loch 92 einen Durchmesser aufweist, der nur geringfügig größer ist als der Außendurchmesser des Nietabschnitts 30. Die zur Anbringung des Bolzenelements 20 verwendete Matrize 62 weist hier eine Ringvertiefung 190 auf, die zur Aufnahme des lochscheibenartigen Hilfsfügeteils 22 ausgebildet ist und eine axiale Tiefe aufweist, die der Dicke der Lochscheibe entspricht.

Die Bodenfläche 192 der ringförmigen Vertiefung 190, die als Abstützfläche für die Lochscheibe dient, ist senkrecht zur Längsachse 68 angeordnet und die zylindrische Ringwand 191 der ringförmigen Vertiefung 190, stellt die Zentrierung der Lochscheibe 22 sicher. Die Matrize weist einen Formvorsprung 70 auf, der über eine gerundete Ringnut 190 in die Abstützfläche 192 übergeht und diese Merkmale sind so ausgebildet, wie die entsprechenden formgebenden Merkmale der Matrize gemäß US-PS 4,555,638 (Fig. 11).

Die Matrize ist koaxial zu dem Bolzenelement 20 ausgerichtet, wobei die Ringvertiefung 190, der Formvorsprung 70 und die Ringvertiefung 194 ebenfalls koaxial mit der mittleren Längsrichtung des Bolzenelements 20 liegen.

Bei dieser Ausführungsform weist das Bauteil 10 eine zylindrische Bohrung 46 auf mit einem Durchmesser, der dem Außendurchmesser des Nietabschnitts 30 bzw. des Zwischenabsatzes 36 entspricht. Die Unterseite des Flansches 32 ist mit den üblichen Verdrehsicherungsnasen 38 und -vertiefungen 41 versehen, die bei einem herkömmlichen SBF-Bolzen verwendet werden.

Die Anbringung des Bolzenelements 20 am Bauteil 10 bzw. die Vernietung mit dem Hilfsfügeteil 22 findet wie bisher unter Anwendung eines Setzkopfes statt, der hier nicht gezeigt ist, jedoch dem Setzkopf 54 entspricht, der im Zusammenhang mit Fig. 2 näher erläutert wurde. Die Matrize 62 befindet sich ebenfalls in einem unteren Werkzeug, das hier aber nicht gezeigt ist.

Beim Schließen der Presse bzw. des Anbringungswerkzeuges wird der Flansch 32 des Bolzenelements 20 in Berührung mit der oberen Decklage 14 des Bauteils 10 gebracht. Die Verdrehsicherungsnasen 38 und - vertiefungen 41 werden in die obere Decklage hineingedrückt, bzw. es werden Bereiche der oberen Decklage in die entsprechenden Vertiefungen aufgenommen. Gleichzeitig wird der Nietabschnitt 30 aufgrund der Formgebung des Formvorsprungs 70 mit der ringförmigen Vertiefung 194 nach außen gerollt, um einen sogenannten L-förmigen Nietbördel 196 auszubilden, der beispielsweise in der US-PS 4,555,838 (Fig. 11) dargestellt ist. Bei diesem Nietvorgang wird auch das Hilfsfügeteil satt an die untere Lage 16 des Bauteils 10 gepreßt, so daß nach Fertigstellung der Nietverbindung das Bauteil 10 zwischen dem Flansch 32 und dem Hilfsfügeteil 22 gefangen gehalten wird. Dabei sorgen die Verdrehsicherungsnasen und - vertiefungen im Bereich der Auflagefläche des Flansches 32 für die erforderliche Verdrehsicherung. Die axiale Länge des Zwischenabsatzes 36 sorgt für die notwendige Anpassung an die Dicke des Bauteils und bestimmt den Grad der Kompression des Bauteils bei der Anbringung der Funktionselementanordnung

Beim Anschrauben eines weiteren Bauteils auf das Zusammenbauteil gemäß Fig. 12B wird das weitere Bauteil von oben kommend über das Gewinde des Bolzenelements gelegt und mit einem Mutterelement daran befestigt, im wesentlichen wie in Fig. 2G dargestellt. Die hierdurch im Bolzenelement 20 entstehenden axialen Zugkräfte werden über den Nietbördel 80 auf das Hilfsfügeteil 22 übertragen. Dieses liegt großflächig an der in Fig. 12B Unterseite des Bauteils 10 an und verteilt dort die entsprechenden Kompressionskräfte so, daß das Bauteil 10 mit Kräften belastet wird, die die maximal zulässigen Kräfte nicht übersteigen.

Obwohl das Bolzenelement 20 hier in einer nicht selbststanzenden Variante gezeigt wird, wäre es auch denkbar, den Nietabschnitt 30 selbststanzend auszuführen und die Matrize entsprechend zu wählen, wie in der US-PS 4,555,838 näher erläutert.

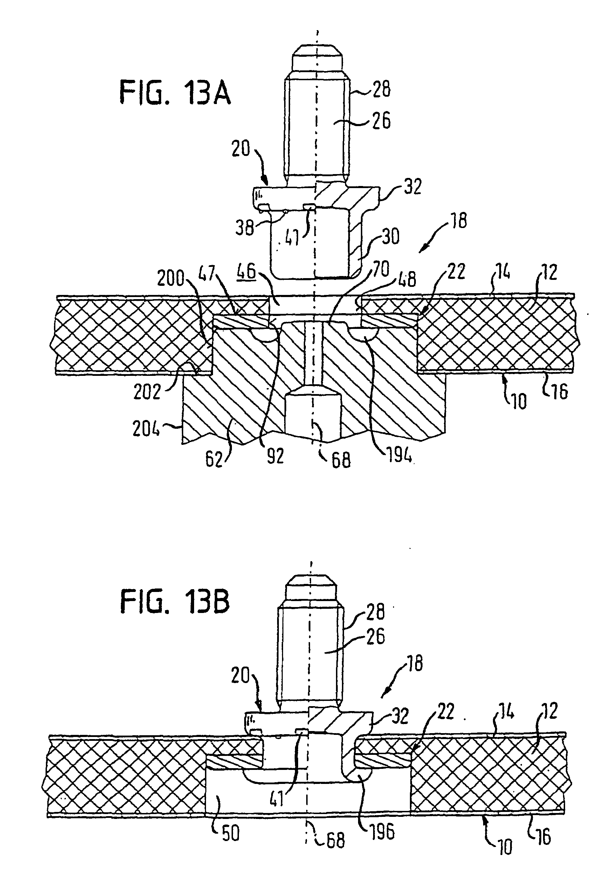

Fig. 13 zeigt nunmehr eine weitere Variante einer erfindungsgemäßen Funktionselementanordnung unter Anwendung eines Funktionselements in Form eines herkömmlichen SBF-Bolzens und einem Hilfsfügeteil in Form einer Lochscheibe. Diese Ausführungsform entspricht weitestgehend der Ausführungsform gemäß Fig. 12, nur wird hier auf die Anwendung eines Zwischenabsatzes verzichtet. Das heißt, daß das Bolzenelement 20 tatsächlich ein herkömmliches SBF-Element darstellt. Das Bolzenelement 20 wird hier mit einem Hilfsfügeteil in Form einer Lochscheibe verwendet, die der Lochscheibe gemäß Fig. 12 entspricht. Anders als bei der Fig. 12 Ausführung wird jedoch die Lochscheibe hier auf eine Ringschulter 47 abgestützt, die sich in einer abgesetzten Bohrung 46 im Bauteil 10 befindet und den Übergang von einem Abschnitt 50 größeren Durchmessers in einen Abschnitt 48 kleineren Durchmessers darstellt. Die Matrize 62 der Fig. 13 ist im Umformbereich entsprechend der Matrize 62 der Fig. 12 ausgebildet, weist jedoch hier keine Ringvertiefung 190 auf, sondern einen zylindrischen Bereich 200, der über eine Ringschulter 202 in den zylindrischen Außenmantel 204 der Matrize 62 übergeht. Diese Ringschulter 202 liegt bei der Anbringung der Funktionselementanordnung im Bauteil 10 auf der in diesem Beispiel unteren Decklage 16 an.

Die Anbringung des Bolzenelements 20 erfolgt hier analog zur Anbringung des Funktionselements 20 der Fig. 12, so daß das Zusammenbauteil gemäß Fig. 13B entsteht.

Beim Anschrauben eines weiteren Bauteils wird dieses in Fig. 13 auf der Unterseite des Zusammenbauteils angeschraubt unter Anwendung einer Mutter, wie in Fig. 12G dargestellt.

Diese Ausführungsform hat den Vorteil, daß ein herkömmliches SBF-Element zur Anwendung gelangen kann und daß man ein Element für Bauteile 10 verschiedener Dicke verwenden kann, da es nur erforderlich ist, die axiale Tiefe der abgesetzten Bohrung 46 im Bereich des Bohrungsabschnittes 50 mit größerem Durchmesser entsprechend zu wählen. Ein Element mit Zwischenabsatz gemäß Fig. 12 kann auch hier zur Anwendung gelangen, d.h. mit einer Lochscheibe verwendet werden, die in einer abgesetzten Bohrung 46 des Bauteils 10 an einer Ringschulter 47 anliegt. Auch hier gelangt ein Bolzenelement 20, um einen Bereich von verschiedenen Bauteildicken zu ermöglichen. Es muß nur die Lage der Ringschulter 47 entsprechend gewählt werden.

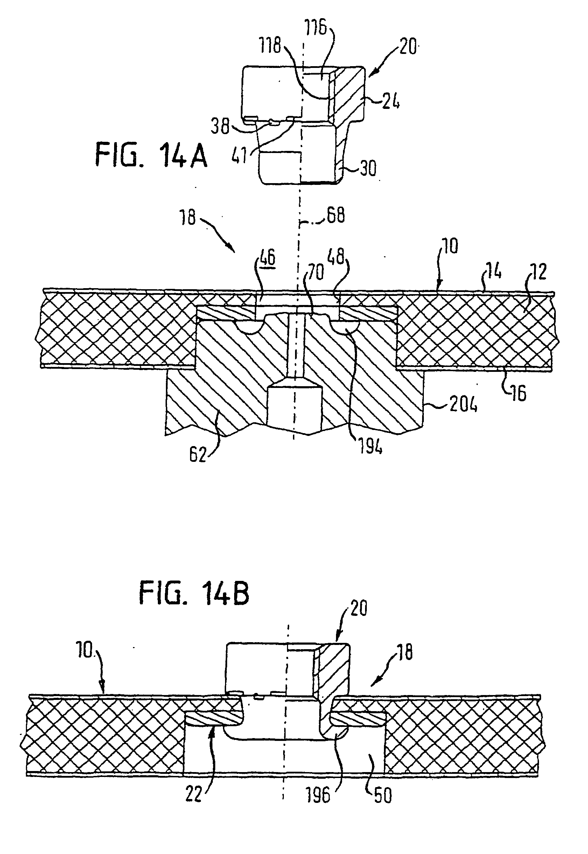

Schließlich zeigen Fig. 14A und 14B eine weitere Variante einer erfindungsgemäßen Anordnung ähnlich der Anordnung gemäß Fig. 13, jedoch unter Anwendung eines Funktionselements 20 in Form eines Hohlkörperelements mit Innengewinde.

Es handelt sich hier um ein herkömmliches RSF-Element der Firma Profil Verbindungstechnik GmbH & Co. KG wie im US-Patent 4,610,072 beschrieben.

Auch dieses Element wird mit einem Hilfsfügeteil in Form einer Lochscheibe verwendet unter Anwendung der gleichen Matrizenart 62, wie im Zusammenhang mit Fig. 13 beschrieben. Auch hier kann ein Element für verschiedene Bauteildicken verwendet werden, da es auch hier lediglich notwendig ist, die axiale Länge des Bohrungsabschnittes 50 mit größerem Durchmesser entsprechend zu wählen. Das heißt, die axiale Länge des Bohrungsabschnittes 48 mit kleinerem Durchmesser bleibt stets konstant.

Die oben angegebene Beschreibung von Ausführungsbeispielen ist ausschließlich unter konkreter Darstellung von Elementen der Firma Profil Verbindungstechnik GmbH & Co. KG angegeben, häufig in abgewandelter Form. Es können aber auch eine Reihe von anderen an sich bekannten Befestigungselementen für die vorliegende Erfindung verwendet werden. Diese müssen jeweils mit einem Hilfsfügeteil verwendet werden und setzen dann eine entsprechende Ausbildung einer zylindrischen oder abgesetzten Bohrung im Bauteil voraus.

Alternativ hierzu können die anderen, an sich bekannten Verbindungselemente ebenfalls mit einem Zwischenabsatz zwischen einem Flanschbereich und einem Nietbereich versehen werden, wobei die Vernietung des Hilfsfügeteils mit dem so abgewandelten Befestigungselement dann im Bereich des Überganges vom Zwischenabsatz in den Nietabschnitt bzw. Einformabschnitt bzw. Anformabschnitt stattfindet, während das Flanschteil am anderen Ende des Zwischenabsatzes zur Anlage am Bauteil ausgebildet ist und vorzugsweise zu diesem Zweck mit Verdrehsicherungsmerkmalen wie beispielsweise erhabenen Verdrehsicherungsnasen und/oder Verdrehsicherurigsvertiefungen im Bereich der entsprechenden Auflagefläche oder am Außenmantel des Zwischenabsatzes versehen werden können.

Auch bei anderen, an sich bekannten Befestigungselementen können Klebstoffe zur Anwendung gelangen, die an Oberflächenbereichen vorzusehen sind, die in Berührung mit dem Bauteil und/oder dem Hilfsfügeteil kommen. Auch bei diesen anderen Befestigungselementen kann es sinnvoll sein, das Element oder das verwendete Hilfsfügeteil mit einer oder mehreren Beschichtungen vorzusehen, die eine Korrosionswirkung mit dem verwendeten Bauteil unterbinden. Bei Verwendung von anderen Befestigungselementen ist es ebenfalls möglich, die Hilfsfügeteile ggf. aus Kunststoff oder faserverstärktem Kunststoff auszubilden.

Wie oben beschrieben bieten die Ausführungsbeispiele der vorliegenden Erfindung, die mit tellerartigen Hilfsfügeteilen verwendet werden, den Vorteil, daß man unter Anwendung von Hilfsfügeteilen unterschiedlicher Höhe eine Anpassung an verschiedene Bauteildicken erreichen kann.

Bei manchen Konstruktionen können die verwendeten Bauteile eine erhebliche Dicke aufweisen, beispielsweise 50 mm oder größer. Dies kann dann dazu führen, daß der vertiefte Bereich des Hilfsfügeteils relativ hoch wird, so daß das tellerartige Teile eine axiale Querschnittsform aufweist, die eher als Zylinderhut zu bezeichnen wäre. Somit ist die Bezeichnung des Hilfsfügeteils als tellerartig auch so zu verstehen, daß sie nicht auf tellerähnliche Proportionen beschränkt ist, sondern als Gattungsbezeichnung für eine breite Palette an Hilfsfügeteilen verwendet wird, die ausschließlich einen vertieften Bereich haben können, der die Proportionen eines Zylinderhuts aufweisen oder gar noch höher ausgebildet ist.

## Patentansprüche

1. Funktionselementanordnung (18) mit einem Funktionselement (20) zur Anbringung an ein aus einem Materialverbund bestehendes Bauteil (10), **dadurch gekennzeichnet, daß** ein Hilfsfügeteil (22) vorgesehen ist, daß das Funktionselement (20) beim Anbringen an das Bauteil (10) mittels eines Nietverfahrens oder eines Stanz- und Nietverfahrens mit dem Hilfsfügeteil (22) umformtechnisch verriegelbar ist.

2. Funktionselementanordnung nach Anspruch 1, **dadurch gekennzeichnet, daß** mindestens eine Einrichtung (Klebstoff, 38, 39, 41) vorgesehen ist, um eine Verdrehsicherung zwischen dem Funktionselement (20) und dem Bauteil (10) und/oder zwischen dem Hilfsfügeteil (22) und dem Bauteil (10) zu erzeugen.

3. Funktionselementanordnung (18) nach Anspruch 1 oder 2, **dadurch gekennzeichnet, daß** das Bauteil (10) durch maschinelle Bearbeitung oder durch Urformen (beispielsweise Gießen bzw. Druckgießen) vorgelocht ist.

4. Funktionselementanordnung (18) nach einem der vorhergehenden Ansprüche, **dadurch gekennzeichnet, daß** das Bauteil aus mindestens zwei aneinander gelegten Bauteilen (10) besteht.

5. Funktionselementanordnung (18) nach einem der vorhergehenden Ansprüche, **dadurch gekennzeichnet, daß** sowohl das Funktionselement (20) als auch das Hilfsfügeteil (22) bei der Durchführung des Nietverfahrens zur Bildung der Verriegelung verformbar sind.

6. Funktionselementanordnung (18) nach einem der vorhergehenden Ansprüche, **dadurch gekennzeichnet, daß** das Funktionselement (20) und das Hilfsfügeteil (22) von entgegengesetzten Seiten des Bauteils (10) kommend miteinander und dem Bauteil fügbar sind.

7. Funktionselementanordnung (18) nach einem der vorhergehenden Ansprüche, **dadurch gekennzeichnet, daß** das Funktionselement (20) und das Hilfsfügeteil (22) je einen eine Auflagefläche (34, 43) bildenden Flansch (32, 40) aufweisen, an dem das Bauteil (10) zur Anlage kommt, d.h. zwischen dem das Bauteil eingefangen bzw. geklemmt ist.

8. Funktionselementanordnung (18) nach einem der Ansprüche 1 bis 4, **dadurch gekennzeichnet, daß** das Funktionselement (20) und das Hilfsfügeteil (22) auf der gleichen Seite des Bauteils (10) miteinander und dem Bauteil fügbar sind.

9. Funktionselementanordnung (18) nach Anspruch 8, **dadurch gekennzeichnet, daß** das Hilfsfügeteil (22) einen eine Auflagefläche (43) bildenden Flansch (40) aufweist, an der das Bauteil (10) zur Anlage kommt.

10. Funktionselementanordnung (18) nach einem der vorhergehenden Ansprüche, **dadurch gekennzeichnet, daß** das Funktionselement (20) mit einem Kopfabschnitt (24) und einem Schaftabschnitt (26) versehen ist und im Bereich des Kopfabschnittes (24) oder im Bereich des Übergangs vom Kopfabschnitt (24) zum Schaftabschnitt (26) einen Nietabschnitt (30) für die Nietverbindung mit dem Hilfsfügeteil (22) aufweist.

11. Funktionselementanordnung (18) nach Anspruch 10, **dadurch gekennzeichnet, daß** der Schaftabschnitt (26) als Gewindeträger realisiert ist und der Anbringung eines weiteren Bauteils (100) am erstgenannten Bauteil (10) dient.

12. Funktionselementanordnung (18) nach Anspruch 10, **dadurch gekennzeichnet, daß** der Schaftabschnitt (26) als Führungsteil für ein weiteres Bauteil (10) ausgebildet ist.

13. Funktionselementanordnung (18) nach Anspruch 12, **dadurch gekennzeichnet, dass** das Führungsteil in Form eines zylindrischen Führungszapfens oder in Form einer kugelförmigen Führungsfläche am freien Ende des Schaftabschnittes ausgebildet ist.

14. Funktionselementanordnung (18) nach Anspruch 10, **dadurch gekennzeichnet, daß** der Schaftabschnitt (26) als Clip-Aufnahme ausgebildet ist.

15. Funktionselementanordnung (18) nach einem der Ansprüche 1 bis 9, **dadurch gekennzeichnet, daß** das Funktionselement (20) als Hohlkörperelement bzw. als Mutterelement oder als Führungsbuchse oder als Aufnahme für ein Einsteckteil ausgebildet ist.

16. Funktionselementanordnung (18) nach einem der Ansprüche 10 bis 14, **dadurch gekennzeichnet, daß** der Kopfabschnitt (24) im Bereich des Übergangs zum Schaftabschnitt (26) einen Flansch (32) aufweist, dessen dem Schaftabschnitt abgewandte Fläche eine Auflagefläche (34) bildet, an der das Bauteil (10) zur Anlage kommt und daß der Kopfabschnitt (24) auf dem dem Schaftabschnitt (26) abgewandten Ende einen Nietabschnitt (30) zur Vernietung mit dem Hilfsfügeteil (22) aufweist (Fig. 1; Fig. 2).

17. Funktionselementanordnung (18) nach Anspruch 16, **dadurch gekennzeichnet, daß** der Kopfabschnitt (24) aus dem Flansch (32) und dem Nietabschnitt (30) sowie aus einem dazwischen liegenden Zwischenabsatz (36) besteht (Fig. 1).

18. Funktionselementanordnung (18) nach Anspruch 17, **dadurch gekennzeichnet, daß** Verdrehsicherungsmerkmale (38) im Bereich der Auflagefläche (34) des Flansches (32) und/oder im Bereich des Übergangs zum Zwischenabsatz (36) und/oder am Zwischenabsatz (36) vorgesehen sind.

19. Funktionselementanordnung (18) nach Anspruch 17 oder 18, **dadurch gekennzeichnet, daß** der Zwischenabsatz (36) über eine Ringschulter (82) in den Nietabschnitt (30) übergeht und daß Verdrehsicherungsmerkmale im Bereich zwischen dem Zwischenabsatz und dem Nietabschnitt vorgesehen sind.

20. Funktionselementanordnung (18) nach Anspruch 19, **dadurch gekennzeichnet**, das die Verdrehsicherungsmerkmale an der Ringschulter (82) und/oder im Bereich des Überganges der Ringschulter in den Nietabschnitt (30) und/oder am Nietabschnitt (30) selbst vorgesehen sind.

21. Funktionselementanordnung (18) nach einem der Ansprüche 10 bis 14, **dadurch gekennzeichnet, daß** der Kopfabschnitt (24) im Bereich seines freien, dem Schaftabschnitt (26) abgewandten Endes einen eine Auflagefläche bildenden Flansch (32) aufweist, an dem das Bauteil (10) zur Anlage kommt und im Bereich des Übergangs vom Kopfabschnitt (24) in den Schaftabschnitt (26) zur Vernietung mit dem Hilfsfügeteil (22) ausgebildet ist (Fig. 4A) wobei der Bereich des Kopfabschnittes zwischen dem Flansch (32) und dem Schaftabschnitt (26) einen Zwischenabsatz (36) bildet.

22. Funktionselementanordnung (18) nach Anspruch 21, **dadurch gekennzeichnet, daß** Verdrehsicherungsmerkmale (38) im Bereich der Auflagefläche des Flansches (32) und/oder im Bereich des Überganges vom Flansch in den Zwischenabsatz (36) und/oder am Zwischenabsatz (36) vorgesehen sind (Fig. 4A).

23. Funktionselementanordnung (18) nach Anspruch 21 oder 22, **dadurch gekennzeichnet, daß** der Zwischenabsatz (36) über eine Ringschulter in den Schaftteil (26) übergeht und daß Verdrehsicherungsmerkmale im Bereich dieser Ringschulter (37) vorgesehen sind.

24. Funktionselementanordnung nach Anspruch 23, **dadurch gekennzeichnet, dass** die Verdrehsicherungsmerkmale an der Ringschulter (37) und/oder im Bereich des Übergangs der Ringschulter in den Nietabschnitt bzw. Anformabschnitt oder am Nietabschnitt bzw. Anformabschnitt vorgesehen sind.

25. Funktionselementanordnung (18) nach Anspruch 15, **dadurch gekennzeichnet, daß** das Hohlkörperelement einen Kopfabschnitt (24) und einen Nietabschnitt bzw. einen Einformabschnitt (30) aufweist und daß der Kopfabschnitt (24) in einen Flansch (32) und einen Zwischenabsatz (36) unterteilt ist, wobei der Flansch (32) eine Auflagefläche (34) bildet, an der das Bauteil zur Anlage kommt und im Bereich des dem Nietabschnitt bzw. Einformabschnitt (30) abgewandten Endes des Zwischenabsatzes (26) angeordnet ist (Fig. 6; Fig. 8).

26. Funktionselementanordnung (18) nach Anspruch 25, **dadurch gekennzeichnet, daß** Verdrehsicherungsmerkmale (38) im Bereich der Auflagefläche (34) und/oder am Übergang von der Auflagefläche in den Zwischenabsatz (36) und/oder am Zwischenabsatz (36) vorgesehen sind (Fig. 6; Fig. 8).

27. Funktionselementanordnung (18) nach Anspruch 25 oder 26, **dadurch gekennzeichnet, daß** der Zwischenabsatz (36) über eine Ringschulter (82) in den Nietabschnitt bzw. Einformabschnitt (30) übergeht und daß Verdrehsicherungsmerkmale an der Ringschulter und/oder am Übergang zu dem Nietabschnitt bzw. Einformabschnitt und/oder am Nietabschnitt bzw. Einformabschnitt vorgesehen sind (Fig. 6; Fig. 8).

28. Funktionselementanordnung (18) nach Anspruch 15, **dadurch gekennzeichnet, daß** das Hohlkörperelement einen Kopfabschnitt (24) und einen Nietabschnitt bzw. Einformabschnitt (30) aufweist, daß der Kopfabschnitt (24) eine Mantelfläche ohne Flansch aufweist, wobei die Mantelfläche über eine Auflagefläche in den Nietabschnitt bzw. Einformabschnitt (30) übergeht, an der sich im eingebauten Zustand das Hilfsfügeteil (22) in Anlage befindet, und daß das Hilfsfügeteil (22) eine Auflagefläche (43) aufweist, an der das Bauteil (10) zur Anlage kommt (Fig. 5; Fig. 7; Fig. 9).

29. Funktionselementanordnung (18) nach Anspruch 28, **dadurch gekennzeichnet, daß** Verdrehsicherungsmerkmale (39) an der Mantelfläche des Kopfabschnitts (24) vorgesehen sind (Fig. 1; Fig. 9).

30. Funktionselementanordnung (18) nach Anspruch 28 oder 29, **dadurch gekennzeichnet, daß** der Kopfabschnitt (24) über eine Ringschulter (82) in den Nietabschnitt (30) übergeht und daß Verdrehsicherungsmerkmale im Bereich der Ringschulter und/oder am Übergang von der Ringschulter in den Nietabschnitt und/oder am Nietabschnitt vorgesehen sind (Fig. 9).

31. Funktionselementanordnung (18) nach einem der Ansprüche 15, 25, 26 oder 29, **dadurch gekennzeichnet, daß** Verdrehsicherungsmerkmale (140, 142) am und/oder im Nietabschnitt bzw. Einformabschnitt vorgesehen sind (Fig. 5; Fig. 6; Fig. 7; Fig. 10).

32. Funktionselementanordnung (18) nach einem der vorhergehenden Ansprüche, **dadurch gekennzeichnet, daß** das Hilfsfügeteil (22) ein Blechteil ist.

33. Funktionselementanordnung (18) nach Anspruch 31, **dadurch gekennzeichnet, daß** das Blechteil (22) mit einer metallischen Beschichtung und/oder einer Kunststoffbeschichtung versehen ist.

34. Funktionselementanordnung (18) nach einem der vorhergehenden Ansprüche 1 bis 31, **dadurch gekennzeichnet, daß** das Hilfsfügeteil (22) ein Kunststoffteil, oder ein faserverstärktes Kunststoffteil ist, gegebenenfalls mit einer metallischen Beschichtung.

35. Funktionselementanordnung (18) nach Anspruch 32 oder 33, **dadurch gekennzeichnet, daß** die Beschichtung aus einem gegenüber dem Werkstoff oder den Werkstoffen des Bauteils (10) und gegenüber dem Werkstoff des Funktionselements (20) bzw. seiner Beschichtung korrosionsbeständigem Material besteht und daß der Werkstoff des Funktionselements (20) oder einer etwaigen Oberflächenbeschichtung des Funktionselements gegenüber dem Werkstoff oder den Werkstoffen des Bauteils (10) korrosionsbeständig ist.

36. Funktionselementanordnung (18) nach einem der vorhergehenden Ansprüche, **dadurch gekennzeichnet, daß** das Hilfsfügeteil (22) als tellerartiges Teil ausgebildet ist, dessen Randbereich (40) eine Auflagefläche (43) bildet, an der das Bauteil (10) zur Anlage kommt und dessen Vertiefung (42) in eine Ringvertiefung (50) oder abgesetzte Bohrung (46) des Bauteils (10) anzuordnen ist und daß das Funktionselement (20) mit dem Boden (44) der Vertiefung vernietbar ist.

37. Funktionselementanordnung (18) nach einem der vorhergehenden Ansprüche, **dadurch gekennzeichnet, daß** das Hilfsfügeteil (22) als flache Scheibe ausgebildet ist, deren Randbereich (40) eine Auflagefläche (43) bildet, an der das Bauteil zur Anlage kommt und daß das Funktionselement (20) mit dem mittleren Bereich der Scheibe vernietbar ist.

38. Funktionselementanordnung (18) nach Anspruch 36 oder 37, **dadurch gekennzeichnet, daß** der Boden (44) der Vertiefung oder der mittlere Bereich der Scheibe zur Aufnahme eines Nietabschnittes (30) des Funktionselements (20) vorgelocht ist.

39. Funktionselementanordnung (18) nach Anspruch 36 oder 37, **dadurch gekennzeichnet, daß** der Boden (44) der Vertiefung oder der mittlere Bereich der Scheibe nicht vorgelocht ist, sondern bei Anbringung des Funktionselements durch einen Stanz- und Nietabschnitt (30) des Funktionselements (20) oder durch einen vorlaufenden Lochstempel (59) lochbar ist.

40. Funktionselementanordnung (18) nach einem der vorhergehenden Ansprüche, **dadurch gekennzeichnet, daß** das Funktionselement (20) und/ oder das Hilfsfügeteil (22) an mindestens einem Oberflächenbereich, der bei Anbringung an das Bauteil (10) mit diesem und/oder mit dem jeweils anderen Teil (Hilfsfügeteil bzw. Funktionselement) in Berührung gelangt, mit einem Klebstoff versehen ist.

41. Funktionselenientanordnung (18) nach Anspruch 40, **dadurch gekennzeichnet, daß** es sich bei dem Klebstoff um einen Trockenklebstoff handelt, der bei Druckausübung für eine Klebverbindung zwischen dem Bauteil (10) und dem Funktionselement (20) und/oder zwischen dem Bauteil (10) und dem Hilfsfügeteil (22) und/oder zwischen dem Funktionselement (20) und dem Hilfsfügeteil (22) sorgt.

42. Funktionselementanordnung (18) nach einem der Ansprüche 40 oder 41, **dadurch gekennzeichnet, daß** der Klebstoff die Einrichtung oder eine Einrichtung zur Erzeugung einer Verdrehsicherung bildet.

43. Funktionselementanordnung (18) nach einem der vorhergehenden Ansprüche 1 bis 42, **dadurch gekennzeichnet, daß** die Einrichtung zur Erzeugung einer Verdrehsicherung durch Formmerkmale, insbesondere durch Nasen (38, 39) oder Vertiefungen (41), gebildet ist, die am Funktionselement (20) und/oder am Hilfsfügeteil (22) vorgesehen und beim Nietvorgang in die Oberfläche des Bauteils hineindrückbar sind bzw. der Aufnahme von aus der Oberfläche des Bauteils herausgedrücktem Material dienen.

44. Funktionselementanordnung (18) nach Anspruch 43, **dadurch gekennzeichnet, daß** das Funktionselement (20) und/oder das Hilfsfügeteil (22) mit einem Flansch (32, 40) versehen ist, der eine Auflagefläche (34, 43) bildet, an der das Bauteil (10) zur Anlage kommt, und daß die Einrichtung zur Erzeugung der Verdrehsicherung durch Nasen (38, 39) gebildet ist, die in der Auflagefläche (34, 43) des Flansches (32, 40) oder im Bereich des Übergangs von der Auflagefläche des Flansches in den Funktionselement (20) bzw. in das Hilfsfügeteil (22) vorgesehen sind.

45. Funktionselementanordnung (18) nach einem der vorhergehenden Ansprüche, **dadurch gekennzeichnet, daß** das Hilfsfügeteil (22) ein tellerartiges Teil ist, dessen Rand (40) eine Auflagefläche (43) bildet, an der das Bauteil (10) zur Anlage kommt, wobei dieser Rand (40) zunächst konusförmig ausgebildet ist und in Richtung der Vertiefung (42) des tellerartigen Teils divergiert, daß die Vertiefung (42) des tellerartigen Teils zur Aufnahme eines Nietabschnittes (30) des Funktionselements (20) ausgebildet ist, der von der Seite des Randes in die Vertiefung (42) aufnehmbar ist, und daß die Nietverbindung unter Flachpressung des Randes (40) des tellerartigen Teils und Umformung des Bodenbereichs (44) zustande bringbar ist (Fig. 2, Fig. 3).

46. Funktionselementanordnung (18) nach Anspruch 45, **dadurch gekennzeichnet, daß** der Rand (40) des tellerartigen Teils an mehreren Stellen (94) unterbrochen ist.

47. Funktionselementanordnung (18) nach Anspruch 15, **dadurch gekennzeichnet, daß** das Hilfsfügeteil (22) die Form eines Rohrabschnittes ( 172) mit Flansch (40) aufweist, daß das Hohlkörperelement (20) in den Rohrabschnitt paßt und in einem Endbereich schräge Nasen (39) aufweist, die sich ausgehend vom zugeordneten Ende des Hohlkörperelementes entlang einer Teillänge des Hohlkörpers in Richtung dessen anderen Endes erstrecken und dabei in ihrer radialen Erstreckung abnehmen, wobei diese Nasen (39) bei Einführung in den Rohrabschnitt (172) diesen in einem Endbereich und auch das Bauteil (10) entsprechend verformen und daß das Hohlkörperlement (20) an seinem anderen Ende zur Verriegelung mit dem Hilfsfügeteil (22) aufweitbar ist (Fig. 11).

48. Verfahren zur Herstellung eines Zusammenbauteils durch Anbringung eines Funktionselements (20) an ein aus einem Materialverbund bestehendes Bauteil (10), **gekennzeichnet durch** die folgenden Schritte:
- Herstellung einer Bohrung (46) **durch** das Bauteil hindurch **durch** maschinelle Bearbeitung oder Urformen,
- Anordnung eines Hilfsfügeteils (22) auf einer Seite des Bauteils (10),
- Einfügen des Funktionselements (20) von einer entgegengesetzten Seite des Bauteils (10) zumindest teilweise in die Bohrung hinein und
- Herstellung einer Nietverbindung zwischen dem Funktionselement (20) und dem Hilfsfügeteil (22) (Fig. 1; Fig. 4; Fig. 5; Fig. 6; Fig 7; Fig. 8; Fig. 9; Fig. 12; Fig. 13; Fig. 14).

49. Verfahren nach Anspruch 48, **dadurch gekennzeichnet, dass** das Hilfsfügeteil von einer Seite des Bauteils (10) zumindest teilweise in die Bohrung (46) hinein gefügt wird.

50. Verfahren nach Anspruch 48 unter Anwendung eines tellerartigen Hilfsfügeteils (22), **dadurch gekennzeichnet, daß** bei Anbringung des tellerartigen Hilfsfügeteils in die Bohrung (46), dessen Vertiefung (42) mit seinem Bodenbereich in die Bohrung angeordnet wird, während dessen Randbereich auf der entsprechenden Seite des Bauteils (10) anliegt und daß die Nietverbindung mit dem Hilfsfügeteil im Bereich des Bodens (44) der Vertiefung (42) durchgeführt wird.

51. Verfahren nach Anspruch 50, bei dem ein Funktionselement (20) mit einem Flansch (32), einem Zwischenabsatz (36) und einem Nietabschnitt bzw. Einformabschnitt (30) und mit Verdrehsicherungsmerkmalen (38) im Bereich der durch den Flansch (32) gebildeten Auflagefläche (34), beispielsweise an der Auflagefläche und/oder am Übergang von der Auflagefläche zum Zwischenabsatz oder am Zwischenabsatz, **dadurch gekennzeichnet, daß** die Einführung des Funktionselements (20) in die Bohrung hinein so erfolgt, daß der Flansch (32) mit der entsprechenden Seite des Bauteils (10) in Berührung kommt und die Verdrehsicherungsmerkmale (38) einen formschlüssigen Eingriff mit dem Bauteil (10) bilden, während der Nietabschnitt (30), der durch die axiale Länge des Zwischenabsatzes (36) von der Auflagefläche (34) beabstandet ist, innerhalb des Bauteils (10) mit dem Bodenbereich (40) des tellerartigen Hilfsfügeteils (22) vernietet wird.

52. Verfahren nach Anspruch 50, bei dem ein Funktionselement (20) mit einem Körperabschnitt (24), mit einem an einem Ende des Körperabschnittes vorgesehenen Nietabschnitt bzw. Einformabschnitt (30) und mit an der Mantelfläche des Körperabschnittes vorgesehenen Verdrehsicherungsmerkmalen (39) verwendet wird, **dadurch gekennzeichnet, daß** die Einführung des Funktionselements in die Bohrung (46) hinein so erfolgt, daß die Verdrehsicherungsmerlanale (39) in einen formschlüssigen Eingriff mit dem Bauteil (10) gelangen und der Nietabschnitt (30) innerhalb des Bauteils (10) mit dem Bodenbereich (44) des tellerartigen Hilfsfügeteils (22) vernietet wird oder der Bodenbereich (44) des tellerartigen Hilfsfügeteils (22) in den Einformabschnitt des Funktionselements eingeformt wird.

53. Verfahren nach Anspruch 51 oder 52, **dadurch gekennzeichnet, daß** weitere Verdrehsicherungsmerkmale (140, 142) im Bereich des Nietabschnitts bzw. Einformabschnitts vorgesehen sind und bei der Durchführung der Nietverbindung zum Hilfsfügeteil für eine entsprechende Verdrehsicherung zwischen dem Funktionselement (20) und dem Hilfsfügeteil (22) sorgen.

54. Verfahren nach einem der Ansprüche 48 bis 53, **dadurch gekennzeichnet, daß** die mit dem Bauteil (10) und/oder dem Funktionselement (20) in Berührung kommenden Flächen des Hilfsfügeteils (22) und/oder die mit dem Bauteil (10) und/oder dem Hilfsfügeteil (22) in Berührung kommenden Flächen des Funktionselements (20) mit dem jeweils gegenüber liegenden Flächenbereich des Zusammenbauteils verklebt werden.

55. Verfahren nach einem der vorhergehenden Ansprüche 48 bis 54, **dadurch gekennzeichnet, daß** der Bodenbereich (44) des Hilfsfügeteils (22) vor der Einführung in die Bohrung gelocht wird.

56. Verfahren nach einem der vorhergehenden Ansprüche 48 bis 55, **dadurch gekennzeichnet, daß** der Bodenbereich (44) des Hilfsfügeteils nach der Einführung in die Bohrung durch einen Stanz- und Nietabschnitt des Funktionselements (20) und/oder durch einen vorlaufenden Lochstempel (59) gelocht wird.

57. Verfahren zur Herstellung eines Zusammenbauteils durch Anbringung eines Funktionselements (20) an ein aus einem Verbundmaterial bestehendes Bauteil (10), **gekennzeichnet durch** die folgenden Schritte:
- Herstellung einer Bohrung (46) **durch** das Bauteil (10) hindurch **durch** maschinelle Bearbeitung oder Urformen,
- Einfügen eines Hilfsfügeteils (22) von einer Seite des Bauteils zumindest teilweise in die Bohrung (46) hinein,
- Einfügen des Funktionselements (20) von einer gleichen Seite wie das Hilfsfügeteil (22) in einen rohrförmigen Aufnahmebereich (72) des einen Rohrabschnittes (172) und einen Flansch (40) aufweisenden Hilfsfügeteils oder in einen Aufnahmebereich eines ebenfalls einen Flansch (40) aufweisenden tellerartigen Hilfsfügeteils (22) und
- Herstellung einer Nietbördelverbindung im Bereich des dem Flansch (40) abgewandten Endes des Rohrabschnittes (172) bzw. eine Nietverbindung mit dem Boden (44) des Aufnahmebereiches des tellerartigen Hilfsfügeteils (22) (Fig. 10; Fig. 11).

58. Verfahren nach Anspruch 48, **gekennzeichnet durch** die folgenden Schritte:
- Verwendung eines tellerartigen Hilfsfügeteils (22) mit einer Vertiefung (42) mit einem Bodenbereich und einem in Richtung des Bodenbereichs divergierenden konusförmigen Randbereich (40),
- Verwendung eines einen konusförmig divergierenden Nietabschnitt (30) aufweisenden Funktionselements (20),
- wobei das Hilfsfügeteil (22) an einer Seite des Bauteils (10) mit seinem konusförmigen Randbereich benachbart zur genannten Seite und mit seinem Bodenbereich (44) vom Bauteil abgewandt angeordnet wird,
- der Nietabschnitt (30) des Funktionselements (20) von der anderen Seite des Bauteils **durch** die Bohrung (46) in die Vertiefung (42) des tellerartigen Hilfsfügeteils (22) hineingeführt wird, bis das divergierende Ende des Nietabschnitts (30) in den Übergangsbereich zwischen der Wand der Vertiefung (42) und dem Boden (44) des Hilfsfügeteils (22) gelangt, und
- mittels einer Matrize der konusförmige Rand des Hilfsfügeteils flach gepreßt und in Anlage mit der entsprechenden Seite des Bauteils (10) gebracht wird,
- wobei die Wand der Vertiefung (42) mit der Außenseite des divergierenden Endes des Nietabschnitts (30) des Funktionselements (20) in Anlage gebracht wird, während der Bodenbereich (44) des Hilfsfügeteils **durch** Umformung mittels eines Konturenbereichs (79) der Matrize in Anlage mit der inneren Seite des divergierenden Endes des Nietabschnitts (30) des Funktionselements (20) gebracht wird und hierdurch das Funktionselement mit dem Hilfsfügeteil vernietet wird (Fig. 2; Fig. 3).

59. Verfahren nach Anspruch 58, bei dem ein Hilfsfügeteil mit einem vorgelochten Bodenbereich (44) verwendet wird.

## Claims

1. Functional element arrangement (18) having a functional element (20) for attachment to a component (10) comprising a material composite, **characterised in that**
an auxiliary joining part (22) is provided, **in that** the functional element (20) can be locked in a technically reformed manner during the attachment to the component (10) by means of a riveting process or a piercing and riveting process to the auxiliary joining part (22).

2. Functional element arrangement in accordance with claim 1, **charaterised in that** at least one means (adhesive, 38, 39, 41) is provided in order to ensure security against rotation between the functional element (20) and the component (10) and/or between the auxiliary joining part (22) and the component (10).

3. Functional element arrangement (18) in accordance with claim 1 or claim 2, **characterised in that** the component (10) is pre-holed by machining or by primary forming (for example casting, pressure die-casting).

4. Functional element arrangement (18) in accordance with one of the preceding claims, **characterised in that** the component consists of at least two components (10) placed against one another.

5. Functional element arrangement (18) in accordance with one of the preceding claims, **characterised in that** both the functional element (20) and also the auxiliary joining part (22) are deformed during the carrying out of the riveting process to form the locked connection.

6. Functional element arrangement (18) in accordance with one of the preceding claims, **characterised in that** functional element (20) and the auxiliary joining part (22) are joined together and with the component coming from opposite sides of the component (10).

7. Functional element arrangement (1) in accordance with one of the preceding claims, **characterised in that** the functional element (20) and the auxiliary joining part (22) each have a flange (32, 40) forming a contact surface (34, 43) against which the component (10) comes into contact, i.e. between which the component is trapped, i.e. clamped.

8. Functional element arrangement (18) in accordance with one of the claims 1 to 4, **characterised in that** the functional element (20) and the auxiliary joining part (22) can be joined together and to the component on the same side of the component (10).

9. Functional element arrangement (18) in accordance with claim 7, **characterised in that** the auxiliary joining part (22) has a flange (40) forming a contact surface (43) against which the component (10) comes into contact.

10. Functional element arrangement (18) in accordance with one of the preceding claims, **characterised in that** the functional element (20) is provided with a head section (24) and a shaft section (26) and has, in the region of the head section (24) or in the region of the transition from the head section (24) to the shaft section (26) a rivet section (30) for the rivet connection to the auxiliary joining part (22).

11. Functional element arrangement (18) in accordance with claim 10, **characterised in that** the shaft section (26) is realised as a thread carrier and serves for the attachment of a further component (100) to the first named component (10).

12. Functional element arrangement (18) in accordance with claim 10, **characterised in that** the shaft section (26) is formed as a guide part for a further component (10).

13. Functional arrangement (18) in accordance with claim 12, **characterised in that**, the guide part is made in the form of a cylindrical guide spigot or in the form of a spherical guide surface at the free end of the shaft section.

14. Functional element arrangement (18) in accordance with claim 10, **characterised in that** the shaft section (26) is formed as a clip mount.

15. Functional element arrangement (18) in accordance with one of the claims 1 to 9, **characterised in that** the functional element (20) is formed as a hollow body element or as a nut element or as a guide sleeve or as a mount for a plug-in part.

16. Functional element arrangement (18) in accordance with one of the claims 10 to 14, **characterised in that** the head section (24) has a flange (32) in the region of the transition from the shaft section (26), with the surface of the flange remote from the shaft section forming a contact surface (34) against which the component (10) comes into contact, and **in that** the head section (24) has at the end remote from the shaft section (26) a rivet section (30) for the riveting to the auxiliary joining part (22) (Fig. 1; Fig. 2).

17. Functional element arrangement (18) in accordance with claim 16, **characterised in that** the head section (24) consists of a flange (32) and the rivet section (30) and also of an intermediate step (36) lying between them (Fig. 1).

18. Functional element arrangement (18) in accordance with claim 17, **characterised in that** features (38) providing security against rotation are provided in the region of the contact surface (34) of the flange (32) and/or in the region of the transition to the intermediate step (36) and/or at the intermediate step (36).

19. Functional element arrangement (18) in accordance with claim 17 or 18, **characterised in that** the intermediate step (36) merges via a ring shoulder (82) into the rivet section (30), and **in that** features providing security against rotation are provided in the region between the intermediate step and the rivet section.

20. Functional element arrangement (18) in accordance with claim 19, **characterised in that** the features providing security against rotation are provided at the ring shoulder (82) and/or in the region of the transition of the ring shoulder into the rivet section (30) and/or on the rivet section (30) itself.

21. Functional element arrangement (18) in accordance with one of the claims 10 to 14, **characterised in that** the head section (24) has, in the region of its free end remote from the shaft section (26), a flange (32) forming a contact surface at which the component (10) comes into contact and is formed in the region of the transition from the head section (24) into the shaft section (26) for the riveted connection to the auxiliary joining part (22) (Fig. 4A), with the region of the head section between the flange (32) and the shaft section (26) forming an intermediate step (36).

22. Functional element arrangement (18) in accordance with claim 21, **characterised in that** features (38) providing security against rotation are provided in the region of the contact surface of the flange (32) and/or in the region of the transition from the flange into the intermediate step (36) and/or at the intermediate step (36) (Fig. 4A).

23. Functional element arrangement (18) in accordance with claim 21 or 22, **characterised in that** the intermediate step (36) merges via a ring shoulder into the shaft section (26) and **in that** features providing security against rotation are provided in the region of this ring shoulder (37).

24. Functional element arrangement in accordance with claim 23, **characterised in that** the feature providing security against rotation are provided at the ring shoulder (82) and/or in the region of the transition of the ring shoulder into the rivet section (30) or external forming section or on the rivet section (30) r external forming section itself.

25. Functional element arrangement (18) in accordance with claim 15, **characterised in that** the hollow body element has a head section (24) and a rivet section or a forming section (30), and **in that** the head section (24) is subdivided into a flange (32) and an intermediate step (36), with the flange (32) forming a contact surface (34) against which the component comes into contact and being arranged in the region of the end of the intermediate step (36) remote from the rivet section or forming section (30) (Fig. 6; Fig. 8).

26. Functional element arrangement (18) in accordance with claim 25, **characterised in that** features (38) providing security against rotation are provided in the region of the contact surface (34) and/or at the transition from the contact surface into the intermediate step (36) and/or on the intermediate step (36) (Fig.6; Fig. 8).

27. Functional element arrangement (18) in accordance with claim 25 or 26, **characterised in that** the intermediate step (36) merges via a ring shoulder (82) into the rivet section or forming section (30), and **in that** features providing security against rotation are provided on the ring shoulder and/or at the transition to the rivet section or internal forming section and/or at the rivet section or internal forming section (Fig. 6; Fig. 8).

28. Functional element arrangement (18) in accordance with claim 15, **characterised in that** the hollow body element has a head section (24) and a rivet section or internal forming section (30), **in that** the head section (24) has a jacket surface without a flange, with the jacket surface merging via a contact surface into the rivet section or internal forming section (30), with the auxiliary joining part (22) being in contact with the contact surface in the installed state, and **in that** the auxiliary joining part (22) has a contact surface (43) against which the component (10) comes into contact (Fig. 5; Fig. 7; Fig.9.).

29. Functional element arrangement (18) in accordance with claim 28, **characterised in that** features (3) providing security against rotation are provided at the jacket surface of the head section (24) (Fig. 1; Fig. 9).

30. Functional element arrangement (18) in accordance with claim 28 or 29, **characterised in that** the head section (24) merges via a ring shoulder (82) into the rivet section (30) and **in that** features providing security against rotation are provided in the region of the ring shoulder and/or at the transition from the ring shoulder into the rivet section (30) and/or at the rivet section (30) (Fig. 9).

31. Functional element arrangement (18) in accordance with one of the claims 15, 25, 26, or 29, **characterised in that** the features providing security against rotation are provided at the rivet section or internal forming section and/or in the rivet section or forming section (Fig. 5; Fig. 6; Fig. 7; Fig. 10).

32. Functional element arrangement (18) in accordance with one of the preceding claims, **characterised in that** the auxiliary joining part (22) is a sheet metal part.

33. Functional element arrangement (18) in accordance with claim 31, **characterised in that** the sheet metal part (22) is provided with a metallic coating and/or a plastic coating.

34. Functional element arrangement (18) in accordance with one of the preceding claims 1 to 31, **characterised in that** the auxiliary joining part (22) is a plastic component or a fibre reinforced plastic part with a metallic coating if necessary.

35. Functional element arrangement (18) in accordance with claim 32 or 33, **characterised in that** the coating consists of a material which is corrosion resistant with respect to the material or materials of the component (10) and with respect to the material of the functional element (20) or its coating and **in that** the material of the functional element (20) or any surface coating of the functional element is corrosion resistant with respect to the material or materials of the component (10).

36. Functional element arrangement (18) in accordance with one of the preceding claims, **characterised in that** the auxiliary joining part (22) is formed as plate-like part, the marginal region (40) of which forms a contact surface (43) against which the component (10) comes into contact and the dish (42) of which is to be arranged in a ring recess (50) or stepped bore (46) of the component (10) and **in that** the functional element (20) can be riveted to the base (44) of the dish.

37. Functional element arrangement (18) in accordance with one of the preceding claims, **characterised in that** the auxiliary joining part (22) is formed as a flat disc, the marginal region (40) of which forms a contact surface (43) against which the component comes into contact and **in that** the functional element (20) is rivetable with the central region of the disc.

38. Functional element arrangement (18) in accordance with claim 36 or 37, **characterised in that** the base (44) of the dish or of the central region of the disc is pre-holed to receive a rivet section (30) of the functional element (20).

39. Functional element arrangement (18) in accordance with claim 36 or 37, **characterised in that** the base (44) of the recess or the central region of the disc is not pre-holed, but rather is piercable during the attachment of the functional element by a pierce and rivet section (30) of the functional element (20) or by a preceding hole punch (59).

40. Functional element arrangement (18) in accordance with one of the preceding claims, **characterised in that** the functional element (20) and/or the auxiliary joining part (22) is provided with an adhesive at at least one surface region which, on attachment to the component (10), enters into contact with the latter and/or with the other respective part (auxiliary joining part or functional element).

41. Functional element arrangement (18) in accordance with claim 40, **characterised in that** the adhesive is a dry adhesive which, on the exertion of pressure, serves for an adhesive bond between the component (10) and the functional element (20) and/or between the component (10) and the auxiliary joining part (22) and/or between the functional element (20) and the auxiliary joining part (22).

42. Functional element arrangement (18) in accordance with one of the claims 40 or 41, **characterised in that** the adhesive forms the means or a means for producing a security against rotation.

43. Functional element arrangement (18) in accordance with one of the preceding claims 1 to 42, **characterised in that** the means for producing a security against rotation is formed by features of shape, in particular by noses (38, 39) or recesses (41) which are provided at the functional element (20) and/or at the auxiliary joining part (22) and which can be pressed during the riveting process into the surface of the component or which serve to receive material pressed out of the surface of the component respectively.

44. Functional element arrangement (18) in accordance with claim 43, **characterised in that** the functional element (20) and/or the auxiliary joining part (22) is provided with a flange (32, 40) which forms a contact surface (34, 43) against which the component (10) comes into contact and **in that** the means for producing security against rotation is formed by noses (38, 39) which are provided in the contact surface (34, 43) of the flange (32, 40) in the region of the transition from the contact surface of the flange into the functional element (20) or into the auxiliary joining part (22).

45. Functional element arrangement (18) in accordance with one of the preceding claims, **characterised in that** the auxiliary joining part (22) is a plate-like part, the edge region (40) of which forms a contact surface (43) against which the component (10) comes into contact, with this edge region (40) being initially conically shaped and diverging in the direction of the dish (42) of the plate-like part, **in that** the dish (42) of the plate-like part is formed to receive a rivet section (30) of the functional element (20) which can be received into the dish (42) from the side of the edge region, and **in that** the rivet connection can be brought about while pressing the edge region (40) of the plate-like part flat and with reforming of the base region (44) (Fig. 2, Fig. 3).

46. Functional element arrangement (18) in accordance with claim 45, **characterised in that** the edge region (40) of the plate-like part is interrupted at a plurality of points (94).

47. Functional element arrangement (18) in accordance with claim 15, **characterised in that** the auxiliary joining part (22) has the form of a tubular section (72) with a flange (40), **in that** the hollow body element (20) fits into the tube section and has in its end region oblique noses (39) which, starting from the associated end of the hollow body element, extend along a part length of the hollow body in the direction of its other end and thereby reduce in their radial extent, with these noses (39) deforming the tube section (172) in its end region and also the component (10) during introduction, and **in that** the hollow body element (20) can be broadened at its other end for the latching to the auxiliary joining part (22) (Fig. 11).

48. Method for the manufacture of a component assembly by attaching a functional element (20) to a component (10)comprising a material composite, **characterised by** the following steps:
- manufacturing a bore (46) through the component by machining or by primary forming,
- arrangement of an auxiliary joining part (22) on one side of the component (10),
- introducing the functional element (20) from the opposite side of the component (10) at least partly into the bore, and
- manufacturing a rivet connection between the functional element (20) and the auxiliary joining part (22) (Fig. 1; Fig. 4; Fig. 5; Fig. 6; Fig. 7; Fig. 8; Fig. 9; Fig. 12; Fig. 13; Fig. 14).

49. Method in accordance with claim 48, **characterised in that** the auxiliary joining part is introduced from one side of the component (10) at least partly into the bore (46).

50. Method in accordance with claim 48, using a plate-like auxiliary joining part (22), **characterised in that** during the attachment of the plate-like auxiliary joining part into the bore (46) its dish (42) is arranged with its base region in the bore, whereas its edge region contacts the corresponding side of the component (10) and **in that** the rivet connection to the auxiliary joining part is carried out in the region of the base (44) of the dish (42).

51. Method in accordance with claim 50 in which a functional element (20) having a flange (32), an intermediate step (36) and a rivet section or forming section (30), and with features (38) providing security against rotation in the region of the contact surface (34) formed by the flange (32), for example at the contact surface and/or at the transition from the contact surface to the intermediate step or at the intermediate step, **characterised in that** the introduction of the functional element (20) into the bore takes place in such a way that the flange (32) comes into contact with the corresponding side of the component (10) and the features (38) providing security against rotation form a form-locked engagement with the component (10), whereas the rivet section (30) which is spaced by the axial length of the intermediate step (36) from the contact surface (34) is riveted within the component (10) to the base region (40) of the plate-like auxiliary joining part (22).

52. Method in accordance with claim 50 in which a functional element (20) having a body section (24) with a rivet section or internal forming section (30) provided at one end of the body section and with features (39) providing security against rotation provided at the jacket surface of the body section is used, **characterised in that** the introduction of the functional element into the bore (46) takes place in such a way that features (39) providing security against rotation enter into a form-fitted engagement with the component (10) and the rivet section (30) is riveted within the component (10) to the base region (44) of the plate-like auxiliary joining part (22) or the base region (44) of the plate-like auxiliary joining part (22) is formed into the internal forming section of the functional element.

53. Method in accordance with claim 51 or 52, **characterised in that** further features (140, 142) providing security against rotation are provided in the region of the rivet section or internal forming section and serve during the carrying out of the rivet connection to the auxiliary joining part for a corresponding security against rotation between the functional element (20) and the auxiliary joining part (22).

54. Method in accordance with one of the claims 48 to 53, **characterised in that** the surfaces of the auxiliary joining part (22) which come into contact with the component (10) and/or with the functional element (20) and/or the surfaces of the functional element (20) which come into contact with the component (10) and/or the auxiliary joining part (22) are adhesively bonded to the respective oppositely disposed surface region of the component assembly.

55. Method in accordance with one of the preceding claims 48 to 54,
**characterised in that** the base region (44) of the auxiliary joining part (22) is pierced prior to the introduction into the bore.

56. Method in accordance with one of the preceding claims 48 to 55, **characterised in that** the base region (44) of the auxiliary joining part is pierced after the introduction into the bore by a pierce arid rivet section of the functional element (20) and/or by a preceding hole punch (59).

57. Method for the manufacture of a component assembly by attachment of the functional element (20) to the component (10) comprising a material composite, **characterised by** the following steps:
- manufacturing a bore (46) through the component (10) by machining or by primary forming,
- introducing an auxiliary joining part (22) from one side of the component at least partly into the bore (46),
- introducing the functional element (20) from a same side as the auxiliary joining part (22) into a tubular receiving region (72) of the auxiliary joining part having a tubular section (172) and a flange (40) or into a receiving region of a plate-like auxiliary joining part (22) likewise having a flange (40) and
- manufacturing a rivet bead connection in the region of the end of the tubular section (172) remote from the flange (40) or a rivet connection to the base (44) of the receiving region of the plate-like auxiliary joining part (22) (Fig. 10; Fig. 11).

58. Method in accordance with claim 48
**characterised by** the following steps:
- use of a plate-like auxiliary joining part (22) with a dish 42 with a base region and a conical edge region (40) diverging in a direction of its base region,
- use of a functional element (20) having a conically divergent rivet section (30),
- wherein the auxiliary joining part (22) is arranged at a side of the component (10) with its conical edge region adjacent to the side and with its base region (44) remote from the component,
- the rivet section (30) of the functional element (20) is introduced from the other side of the component through the bore (46) into the recess (42) of the plate-like auxiliary joining part (22) until the diverging end of the rivet section (30) enters into the transition region between the wall of the recess (42) and the base (44) of the auxiliary joining part (22), and
- the conical edge of the auxiliary joining part is pressed flat by means of a die and brought into contact with the corresponding side of the component (10),
- the wall of the recess (42) is brought into contact with the outer side of the diverging end of the rivet section (30) of the functional element (20) whereas the base region (44) of the auxiliary joining part is brought into contact with the inner side of the diverging end of the rivet section (30) of the functional element (20) by forming by means of a contour region (79) of the die and the functional element is hereby riveted to the auxiliary joining part (Fig. 2; Fig. 3).

59. Method in accordance with claim 58 in whioch an auxiliary joining part with a pre-holed base region (44) is used.

## Revendications

1. Ensemble d'éléments fonctionnels (18) comprenant un élément fonctionnel (20) pour montage sur un composant (10) en matériau composite, **caractérisé en ce qu'**une pièce de jonction auxiliaire (22) est prévue, et **en ce que** l'élément fonctionnel (20), lors du montage sur le composant (10), peut être verrouillé au moyen d'un procédé de rivetage ou d'un procédé de découpage et de rivetage avec la pièce de jonction auxiliaire (22) par technique de formage.

2. Ensemble d'éléments fonctionnels selon la revendication 1, **caractérisé en qu'**au moins un dispositif (colle, 38, 39, 41) est prévu pour assurer une sûreté anti-torsion entre l'élément fonctionnel (20) et le composant (10) et/ou entre la pièce de jonction auxiliaire (22) et le composant (10).

3. Ensemble d'éléments fonctionnels (18) selon la revendication 1 ou 2, **caractérisé en ce que** le composant (10) est préperforé par traitement mécanique ou par formage (par exemple coulée ou coulée sous pression).

4. Ensemble d'éléments fonctionnels (18) selon l'une quelconque des revendications précédentes, **caractérisé en ce que** le composant est constitué d'au moins deux composants (10) juxtaposés.

5. Ensemble d'éléments fonctionnels (18) selon l'une quelconque des revendications précédentes, **caractérisé en ce qu'**aussi bien l'élément fonctionnel (20) que la pièce de jonction auxiliaire (22) sont déformables lors de la réalisation du procédé de rivetage pour former le verrouillage.

6. Ensemble d'éléments fonctionnels (18) selon l'une quelconque des revendications précédentes, **caractérisé en ce que** l'élément fonctionnel (20) et la pièce de jonction auxiliaire (22) peuvent être assemblés l'un avec l'autre et avec le composant à partir de faces opposées du composant (10).

7. Ensemble d'éléments fonctionnels (18) selon l'une quelconque des revendications précédentes, **caractérisé en ce que** l'élément fonctionnel (20) et la pièce de jonction auxiliaire (22) présentent respectivement une bride (32, 40) formant une surface d'appui (34, 43) sur laquelle vient s'appuyer le composant (10), c'est-à-dire entre laquelle le composant est enfermé ou enserré.

8. Ensemble d'éléments fonctionnels (18) selon l'une quelconque des revendications 1 à 4, **caractérisé en ce que** l'élément fonctionnel (20) et la pièce de jonction auxiliaire (22) peuvent être assemblés l'un avec l'autre et avec le composant à partir de la même face du composant (10).

9. Ensemble d'éléments fonctionnels (18) selon la revendication 8, **caractérisé en ce que** la pièce de jonction auxiliaire (22) présente une bride (40) formant une surface d'appui (43) sur laquelle vient s'appuyer le composant (10).

10. Ensemble d'éléments fonctionnels (18) selon l'une quelconque des revendications précédentes, **caractérisé en ce que** l'élément fonctionnel (20) est muni d'un segment de tête (24) et d'un segment de queue (26) et présente, dans la zone du segment de tête (24) ou dans la zone de passage entre le segment de tête (24) et le segment de queue (26), un segment de rivetage (30) pour l'assemblage par rivetage avec la pièce de jonction auxiliaire (22).

11. Ensemble d'éléments fonctionnels (18) selon la revendication 10, **caractérisé en ce que** le segment de queue (26) est réalisé sous la forme d'un support à filet et sert au montage d'un autre composant (100) au composant (10) cité en premier.

12. Ensemble d'éléments fonctionnels (18) selon la revendication 10, **caractérisé en ce que** le segment de queue (26) sert de pièce de guidage pour un autre composant (10).

13. Ensemble d'éléments fonctionnels (18) selon la revendication 12, **caractérisé en ce que** la pièce de guidage présente la forme d'un tourillon de guidage cylindrique ou la forme d'une surface de guidage sphérique et se situe à l'extrémité libre du segment de queue.

14. Ensemble d'éléments fonctionnels (18) selon la revendication 10, **caractérisé en ce que** le segment de queue (26) présente la forme d'un logement à clip.

15. Ensemble d'éléments fonctionnels (18) selon l'une quelconque des revendications 1 à 9, **caractérisé en ce que** l'élément fonctionnel (20) présente la forme d'un élément à corps creux ou d'un élément femelle ou d'une douille de guidage ou d'un logement pour une pièce mâle.

16. Ensemble d'éléments fonctionnels (18) selon l'une quelconque des revendications 10 à 14, **caractérisé en ce que** le segment de tête (24), dans la zone de passage vers le segment de queue (26), présente une bride (32), dont la face opposée au segment de queue forme une surface d'appui (34) sur laquelle vient s'appuyer le composant (10), et **en ce que** le segment de tête (24), au niveau de l'extrémité opposée au segment de queue (26), présente un segment de rivetage (30) pour le rivetage avec la pièce de jonction auxiliaire (22) (figure 1 ; figure 2).

17. Ensemble d'éléments fonctionnels (18) selon la revendication 16, **caractérisé en ce que** le segment de tête (24) est constitué par la bride (32) et le segment de rivetage (30) ainsi que par un palier intermédiaire (36) situé entre ceux-ci (figure 1).

18. Ensemble d'éléments fonctionnels (18) selon la revendication 17, **caractérisé en ce que** des attributs de sûreté anti-torsion (38) sont prévus dans la zone de la surface d'appui (34) de la bride (32) et/ou dans la zone de passage vers le palier intermédiaire (36) et/ou au niveau du palier intermédiaire (36).

19. Ensemble d'éléments fonctionnels (18) selon la revendication 17 ou 18, **caractérisé en ce que** le palier intermédiaire (36) passe par un épaulement annulaire (82) dans le segment de rivetage (30), et **en ce que** des attributs de sûreté anti-torsion sont prévus dans la zone comprise entre le palier intermédiaire et le segment de rivetage.

20. Ensemble d'éléments fonctionnels (18) selon la revendication 19, **caractérisé en ce que** les attributs de sûreté anti-torsion sont prévus au niveau de l'épaulement annulaire (82) et/ou dans la zone de passage de l'épaulement annulaire dans le segment de rivetage (30) et/ou au niveau du segment de rivetage (30) lui-même.

21. Ensemble d'éléments fonctionnels (18) selon l'une quelconque des revendications 10 à 14, **caractérisé en ce que** le segment de tête (24), dans la zone de son extrémité libre opposée au segment de queue (26), présente une bride (32) formant une surface d'appui sur laquelle vient s'appuyer le composant (10), et est formé, dans la zone de passage du segment de tête (24) dans le segment de queue (26), pour être riveté avec la pièce de jonction auxiliaire (22) (figure 4a), la zone du segment de tête comprise entre la bride (32) et le segment de queue (26) formant un palier intermédiaire (36).

22. Ensemble d'éléments fonctionnels (18) selon la revendication 21, **caractérisé en ce que** des attributs de sûreté anti-torsion (38) sont prévus dans la zone d'appui de la bride (32) et/ou dans la zone de passage de la bride dans le palier intermédiaire (36) et/ou au niveau du palier intermédiaire (36) (figure 4a).

23. Ensemble d'éléments fonctionnels (18) selon la revendication 21 ou 22, **caractérisé en ce que** le palier intermédiaire (36) passe par un épaulement annulaire dans le segment de queue (26), et **en ce que** des attributs de sûreté anti-torsion sont prévus dans la zone de cet épaulement annulaire (37).

24. Ensemble d'éléments fonctionnels selon la revendication 23, **caractérisé en ce que** les attributs de sûreté anti-torsion sont prévus au niveau de l'épaulement annulaire (37) et/ou dans la zone de passage de l'épaulement annulaire dans le segment de rivetage ou segment de formage ou au niveau du segment de rivetage ou segment de formage.

25. Ensemble d'éléments fonctionnels (18) selon la revendication 15, **caractérisé en ce que** l'élément à corps creux présente un segment de tête (24) et un segment de rivetage ou segment de formage (30), et **en ce que** le segment de tête (24) est divisé en une bride (32) et un palier intermédiaire (36), la bride (32) formant une surface d'appui (34) sur laquelle vient s'appuyer le composant et étant disposée dans la zone de l'extrémité du palier intermédiaire (26) opposée à la section de rivetage ou section de formage (30) (figure 6 ; figure 8).

26. Ensemble d'éléments fonctionnels (18) selon la revendication 25, **caractérisé en ce que** des attributs de sûreté anti-torsion (38) sont prévus dans la zone de la surface d'appui (34) et/ou au passage de la surface d'appui dans le palier intermédiaire (36) et/ou au niveau du palier intermédiaire (36) (figure 6 ; figure 8).

27. Ensemble d'éléments fonctionnels (18) selon la revendication 25 ou 26, **caractérisé en ce que** le palier intermédiaire (36) passe par un épaulement annulaire (82) dans le segment de rivetage ou segment de formage (30), et **en ce que** des attributs de sûreté anti-torsion sont prévus au niveau de l'épaulement annulaire et/ou au passage vers le segment de rivetage ou segment de formage et/ou au niveau du segment de rivetage ou segment de formage (figure 6 ; figure 8).

28. Ensemble d'éléments fonctionnels (18) selon la revendication 15, **caractérisé en ce que** l'élément à corps creux présente un segment de tête (24) et un segment de rivetage ou segment de formage (30), **en ce que** le segment de tête (24) présente une surface enveloppe sans bride, la surface enveloppe passant par une surface d'appui dans le segment de rivetage ou segment de formage (30) sur laquelle vient s'appuyer, à l'état monté, la pièce de jonction auxiliaire (22), et **en ce que** la pièce de jonction auxiliaire (22) présente une surface d'appui (43) sur laquelle vient s'appuyer le composant (10) (figure 5 ; figure 7 ; figure 9).

29. Ensemble d'éléments fonctionnels (18) selon la revendication 28, **caractérisé en ce que** des attributs de sûreté anti-torsion (39) sont prévus au niveau de la surface enveloppe du segment de tête (24) (figure 1 ; figure 9).

30. Ensemble d'éléments fonctionnels (18) selon la revendication 28 ou 29, **caractérisé en ce que** le segment de tête (24) passe par un épaulement annulaire (82) dans le segment de rivetage (30), et **en ce que** des attributs de sûreté anti-torsion sont prévus dans la zone de l'épaulement annulaire et/ou au passage de l'épaulement annulaire dans le segment de rivetage et/ou au niveau du segment de rivetage (figure 9).

31. Ensemble d'éléments fonctionnels (18) selon l'une quelconque des revendications 15, 25, 26 ou 29, **caractérisé en ce que** des attributs de sûreté anti-torsion (140, 142) sont prévus au niveau du et/ou dans le segment de rivetage ou segment de formage (figure 5 ; figure 6 ; figure 7 ; figure 10).

32. Ensemble d'éléments fonctionnels (18) selon l'une quelconque des revendications précédentes, **caractérisé en ce que** la pièce de jonction auxiliaire (22) est une pièce en tôle.

33. Ensemble d'éléments fonctionnels (18) selon la revendication 31, **caractérisé en ce que** la pièce en tôle (22) est munie d'un revêtement métallique et/ou d'un revêtement en matière plastique.

34. Ensemble d'éléments fonctionnels (18) selon l'une quelconque des revendications 1 à 31, **caractérisé en ce que** la pièce de jonction auxiliaire (22) est une pièce en matière plastique ou une pièce en matière plastique renforcée par des fibres, présentant le cas échéant un revêtement métallique.

35. Ensemble d'éléments fonctionnels (18) selon la revendication 32 ou 33, **caractérisé en ce que** le revêtement est en matériau résistant à la corrosion par rapport au matériau ou aux matériaux du composant (10) et par rapport au matériau de l'élément fonctionnel (20) ou au revêtement de celui-ci, et **en ce que** le matériau de l'élément fonctionnel (20) ou d'un revêtement de surface éventuel de l'élément fonctionnel est résistant à la corrosion par rapport au matériau ou aux matériaux du composant (10).

36. Ensemble d'éléments fonctionnels (18) selon l'une quelconque des revendications précédentes, **caractérisé en ce que** la pièce de jonction auxiliaire (22) est une pièce en forme d'assiette dont la zone périphérique (40) constitue une surface d'appui (43) sur laquelle vient s'appuyer le composant (10), et dont le creux (42) est à disposer dans un creux annulaire (50) ou un perçage étagé (46) du composant (10), et **en ce que** l'élément fonctionnel (20) peut être rivé avec le fond (44) du creux.

37. Ensemble d'éléments fonctionnels (18) selon l'une quelconque des revendications précédentes, **caractérisé en ce que** la pièce de jonction auxiliaire (22) présente la forme d'un disque plat dont la zone périphérique (40) constitue une surface d'appui (43) sur laquelle vient s'appuyer le composant, et **en ce que** l'élément fonctionnel (20) peut être riveté avec la zone centrale du disque.

38. Ensemble d'éléments fonctionnels (18) selon la revendication 36 ou 37, **caractérisé en ce que** le fond (44) du creux ou la zone centrale du disque est préperforé pour recevoir un segment de rivetage (30) de l'élément fonctionnel (20).

39. Ensemble d'éléments fonctionnels (18) selon la revendication 36 ou 37, **caractérisé en ce que** le fond (44) du creux ou la zone centrale du disque n'est pas préperforé, mais peut être perforé lors du montage de l'élément fonctionnel au moyen d'un segment de découpage et de rivetage (30) de l'élément fonctionnel (20) ou d'un poinçon (59) mobile.

40. Ensemble d'éléments fonctionnels (18) selon l'une quelconque des revendications précédentes, **caractérisé en ce que** l'élément fonctionnel (20) et/ou la pièce de jonction auxiliaire (22) est muni d'une colle sur au moins une zone de surface qui, lors du montage sur le composant (10), entre en contact avec celui-ci et/ou avec respectivement l'autre pièce (pièce de jonction auxiliaire ou élément fonctionnel).

41. Ensemble d'éléments fonctionnels (18) selon la revendication 40, **caractérisé en ce que** la colle est une colle à pouvoir collant initial qui, lorsqu'une pression est exercée, assure un assemblage collé entre le composant (10) et l'élément fonctionnel (20) et/ou entre le composant (10) et la pièce de jonction auxiliaire (22) et/ou entre l'élément fonctionnel (20) et la pièce de jonction auxiliaire (22).

42. Ensemble d'éléments fonctionnels (18) selon l'une quelconque des revendications 40 ou 41, **caractérisé en ce que** la colle constitue le dispositif ou un dispositif pour obtenir une sûreté anti-torsion.

43. Ensemble d'éléments fonctionnels (18) selon l'une quelconque des revendications précédentes 1 à 42, **caractérisé en ce que** le dispositif pour obtenir une sûreté anti-torsion est formé par des attributs de forme, notamment des nez (38, 39) ou des creux (41), qui sont prévus au niveau de l'élément fonctionnel (20) et/ou de la pièce de jonction auxiliaire (22) et peuvent être enfoncés lors de l'opération de rivetage dans la surface du composant ou servent à recevoir du matériau pressé à partir de la surface du composant.

44. Ensemble d'éléments fonctionnels (18) selon la revendication 43, **caractérisé en ce que** l'élément fonctionnel (20) et/ou la pièce de jonction auxiliaire (22) est muni d'une bride (32, 40) qui forme une surface d'appui (34, 43) sur laquelle vient s'appuyer le composant (10), et **en ce que** le dispositif pour obtenir la sûreté anti-torsion est formé par des nez (38, 39) qui sont prévus dans la surface d'appui (34, 43) de la bride (32, 40) ou dans la zone de passage de la surface d'appui de la bride dans l'élément fonctionnel (20) ou dans la pièce de jonction auxiliaire (22).

45. Ensemble d'éléments fonctionnels (18) selon l'une quelconque des revendications précédentes, **caractérisé en ce que** la pièce de jonction auxiliaire (22) est une pièce en forme d'assiette dont le bord (40) forme une surface d'appui (43) sur laquelle vient s'appuyer le composant (10), ce bord (40) présentant d'abord une forme conique pour ensuite diverger en direction du creux (42) de la pièce en forme d'assiette, **en ce que** le creux (42) de la pièce en forme d'assiette est formé pour recevoir un segment de rivetage (30) de l'élément fonctionnel (20) qui peut être introduit dans le creux (42) du côté du bord, et **en ce que** l'assemblage par rivetage peut être réalisé par compression à plat du bord (40) de la pièce en forme d'assiette et déformation de la zone de fond (44) (figure 2, figure 3).

46. Ensemble d'éléments fonctionnels (18) selon la revendication 45, **caractérisé en ce que** le bord (40) de la pièce en forme d'assiette présente des ruptures à plusieurs endroits (94).

47. Ensemble d'éléments fonctionnels (18) selon la revendication 15, **caractérisé en ce que** la pièce de jonction auxiliaire (22) présente la forme d'un segment de tube (172) avec bride (40), **en ce que** l'élément à corps creux (20) est adapté au segment de tube et présente dans une zone d'extrémité des nez inclinés (39), qui s'étendent depuis l'extrémité associée de l'élément à corps creux le long d'une longueur partielle du corps creux en direction de l'autre extrémité de celui-ci et dont l'étendue radiale s'amincit, ces nez (39), lors de l'introduction dans le segment de tube (172), déformant celui-ci au niveau d'une zone d'extrémité ainsi que le composant (10), et **en ce que** l'élément à corps creux (20) peut être évasé au niveau de son autre extrémité pour le verrouillage avec la pièce de jonction auxiliaire (22) (figure 11).

48. Procédé de fabrication d'un composant d'assemblage par montage d'un élément fonctionnel (20) sur un composant (10) en matériau composite, **caractérisé par** les étapes suivantes :
- réalisation d'un perçage (46) à travers le composant par traitement mécanique ou déformation,
- disposition d'une pièce de jonction auxiliaire (22) sur une face du composant (10),
- insertion de l'élément fonctionnel (20) depuis une face opposée du composant (10) du moins partiellement dans le perçage, et
- réalisation d'un assemblage par rivetage entre l'élément fonctionnel (20) et la pièce de jonction auxiliaire (22) (figure 1 ; figure 4 ; figure 5, figure 6 ; figure 7 ; figure 8 ; figure 9 ; figure 12 ; figure 13 ; figure 14).

49. Procédé selon la revendication 48, **caractérisé en ce que** la pièce de jonction auxiliaire est insérée depuis une face du composant (10) du moins partiellement dans le perçage (46).

50. Procédé selon la revendication 48 en utilisant une pièce de jonction auxiliaire (22) en forme d'assiette, **caractérisé en ce que** lors du montage de la pièce de jonction auxiliaire en forme d'assiette dans le perçage (46), le creux (42) de celle-ci est disposé par sa zone de fond dans le perçage tandis que la zone périphérique de celle-ci est appliquée sur la face correspondante du composant (10), et **en ce que** l'assemblage par rivetage avec la pièce de jonction auxiliaire est réalisé dans la zone du fond (44) du creux (42).

51. Procédé selon la revendication 50, dans lequel on utilise un élément fonctionnel (20) avec une bride (32), un palier intermédiaire (36) et un segment de rivetage ou segment de formage (30) et avec des attributs pour assurer la sûreté anti-torsion (38) dans la zone de la surface d'appui (34) formée par la bride (32), par exemple au niveau de la surface d'appui et/ou au passage de la surface d'appui vers le palier intermédiaire ou au niveau du palier intermédiaire, **caractérisé en ce que** l'introduction de l'élément fonctionnel (20) dans le perçage est réalisée de telle sorte que la bride (32) vient en contact avec la face correspondante du composant (10) et que les attributs de sûreté anti-torsion (38) s'engrènent par complémentarité de forme avec le composant (10), tandis que le segment de rivetage (30), qui est distancé de la surface d'appui (34) par la longueur axiale du palier intermédiaire (36), est riveté à l'intérieur du composant (10) avec la zone de fond (40) de la pièce de jonction auxiliaire (22).

52. Procédé selon la revendication 50, dans lequel on utilise un élément fonctionnel (20) avec un segment de corps (24), avec un segment de rivetage ou segment de formage (30) prévu au niveau d'une extrémité du segment de corps, et avec des attributs de sûreté anti-torsion (39) prévus au niveau de la surface enveloppe du segment de corps, **caractérisé en ce que** l'introduction de l'élément fonctionnel dans le perçage (46) est réalisée de telle sorte que les attributs de sûreté anti-torsion (39) s'engrènent par complémentarité de forme avec le composant (10), et que le segment de rivetage (30) est riveté à l'intérieur du composant (10) avec la zone de fond (44) de la pièce de jonction auxiliaire (22) en forme d'assiette ou que la zone de fond (44) de la pièce de jonction auxiliaire (22) en forme d'assiette est surmoulée dans le segment de formage de l'élément fonctionnel.

53. Procédé selon la revendication 51 ou 52, **caractérisé en ce que** d'autres attributs de sûreté anti-torsion (140, 142) sont prévus dans la zone du segment de rivetage ou segment de formage et assurent, lors de la réalisation de l'assemblage par rivetage avec la pièce de jonction auxiliaire, une sûreté anti-torsion correspondante entre l'élément fonctionnel (20) et la pièce de jonction auxiliaire (22).

54. Procédé selon l'une quelconque des revendications 48 à 53, **caractérisé en ce que** les surfaces de la pièce de jonction auxiliaire (22) entrant en contact avec le composant (10) et/ou l'élément fonctionnel (22) et/ou les surfaces de l'élément fonctionnel (20) entrant en contact avec le composant (10) et/ou la pièce de jonction auxiliaire (22) sont collées contre la zone de surface de la pièce d'assemblage située respectivement en regard.

55. Procédé selon l'une quelconque des revendications précédentes 48 à 54, **caractérisé en ce que** la zone de fond (44) de la pièce de jonction auxiliaire (22) est perforée avant l'introduction dans le perçage.

56. Procédé selon l'une quelconque des revendications précédentes 48 à 55, **caractérisé en ce que** la zone de fond (44) de la pièce de jonction auxiliaire, après l'introduction dans le perçage, est perforée par un segment de découpage et de rivetage de l'élément fonctionnel (20) et/ou par un poinçon (59) mobile.

57. Procédé de fabrication d'une pièce d'assemblage par montage d'un élément fonctionnel (20) sur un composant (10) en matériau composite, **caractérisé par** les étapes suivantes :
- réalisation d'un perçage (46) à travers le composant par traitement mécanique ou déformation,
- insertion d'une pièce de jonction auxiliaire (22) depuis une face du composant du moins partiellement dans le perçage (46),
- insertion de l'élément fonctionnel (20) depuis la même face que la pièce de jonction auxiliaire (22) dans une zone de réception tubulaire (72) de la pièce de jonction auxiliaire présentant un segment de tube (172) et une bride (40), ou dans une zone de réception d'une pièce de jonction auxiliaire (22) en forme d'assiette présentant également une bride (40), et
- réalisation d'un assemblage par sertissage de rivets dans la zone de l'extrémité du segment de tube (172) opposée à la bride (40), ou d'un assemblage par rivetage avec le fond (44) de la zone de réception de la pièce de jonction auxiliaire (22) en forme d'assiette (figure 10 ; figure 11).

58. Procédé selon la revendication 48, **caractérisé par** les étapes suivantes :
- utilisation d'une pièce de jonction auxiliaire (22) en forme d'assiette comprenant un creux (42) avec une zone de fond et une zone périphérique (40) conique divergeant en direction de la zone de fond,
- utilisation d'un élément fonctionnel (20) présentant un segment de rivetage (30) divergeant de manière conique,
- la pièce de jonction auxiliaire (22) étant disposée sur une face du composant (10), par sa zone périphérique conique voisine de ladite face, et par sa zone de fond (44) opposée au composant,
- le segment de rivetage (30) de l'élément fonctionnel (20) étant introduit depuis l'autre face du composant à travers le perçage (46) dans le creux (42) de la pièce de jonction auxiliaire (22) en forme d'assiette, jusqu'à ce que l'extrémité divergente du segment de rivetage (30) arrive dans la zone de passage entre la paroi du creux (42) et le fond (44) de la pièce de jonction auxiliaire (22), et
- le bord conique de la pièce de jonction auxiliaire étant comprimé à plat au moyen d'une matrice et placé contre la face correspondante du composant (10),
- la paroi du creux (42) étant placée contre la face extérieure de l'extrémité divergente du segment de rivetage (30) de l'élément fonctionnel (20), tandis que la zone de fond (44) de la pièce de jonction auxiliaire est placée, par déformation au moyen d'une zone de contour (79) de la matrice, contre la face intérieure de l'extrémité divergente du segment de rivetage (30) de l'élément fonctionnel (20), pour ainsi riveter l'élément fonctionnel avec la pièce de jonction auxiliaire (figure 2 ; figure 3).

59. Procédé selon la revendication 58, dans lequel on utilise une pièce de jonction auxiliaire présentant une zone de fond (44) préperforée.
